# EUROPEAN PATENT APPLICATION

(11) **EP 4 537 970 A1**
(43) Date of publication of application: **16.04.2025**
(21) Application number: 23819818.8
(22) Date of filing: 06.06.2023
(51) Int. Cl.: B23K 26/21, B23K 26/00, B23K 26/03, B23K 26/082, H02K 15/04

(54) **WELDING METHOD AND LASER PROCESSING DEVICE**

(30) Priority: 09.06.2022 JP 2022093533; 31.08.2022 JP 2022138801; 03.10.2022 JP 2022159675; 24.10.2022 JP 2022169578; 23.05.2023 JP 2023084999
(71) Applicant: Kataoka Corporation, Kyoto-shi, Kyoto 601-8203 (JP)
(72) Inventor: YAMAMURA, Takeshi, Kyoto-shi Kyoto 601-8203 (JP); NAGASAKI, Katsutoshi, Kyoto-shi Kyoto 601-8203 (JP); HAYASHI, Keisuke, Moriyama-shi Shiga 524-0012 (JP); TANAKA, Yuichi, Kyoto-shi Kyoto 601-8203 (JP); HOTTA, Yasuhiro, Kyoto-shi Kyoto 601-8203 (JP); KATO, Etsushi, Kyoto-shi Kyoto 601-8203 (JP)
(74) Representative: Seemann & Partner Patentanwälte mbB
(86) International application number: PCT/JP2023/020915
(87) International publication number: WO 2023/238838

(57) **Abstract**

A welding method of welding, an end surface of end portions of a first member and a second member being arranged next to one another, by a laser beam with the end surface being disposed to face a laser processing apparatus, includes a first step of irradiating the first member with the laser beam to form a first fusion zone; a second step of irradiating the second member with the laser beam to form a second fusion zone; and a third step of, when the first fusion zone and the second fusion zone are bonded, irradiating the bonded first fusion zone and second fusion zone with the laser beam to form a single fusion zone, and the laser beam includes a first laser beam and a second laser beam having different wavelengths.

## Description

### TECHNICAL FIELD

The present invention relates to a welding method and laser processing apparatus for performing metal welding using a laser beam.

### BACKGROUND ART

As a technique for performing metal welding, laser welding using a laser beam is used. As compared with other welding techniques, the laser welding can weld a workpiece with energy condensed by a condensing lens, and is high in welding quality and suitable for fine welding.

In recent years, the laser welding has been used in manufacturing a stator for a motor incorporated in a hybrid vehicle or an electric automobile. The stator includes a stator core and a plurality of segment coils attached to slots of the stator core, and end portions of corresponding segment coils are bonded to each other by laser welding. Generally, a rectangular conductor is used for each of the segment coils, and a welding surface is as fine as several square millimeters, so that the laser welding is suitable.

In processing of welding tip ends of the rectangular conductors, a gap or a step may be generated when the tip ends are butted due to an influence of a variation in processing accuracy, mechanism accuracy of a fixing jig, a thickness of a conductor coating portion, and the like. In such a case, when irradiation using the laser is continuously performed across two rectangular conductors, laser escape from the gap may occur, and a coating portion at a lower part of the rectangular conductor may be irradiated with the laser to cause carbonization and an insulation failure.

Patent Literature 1 discloses a technique for welding tip ends of rectangular wires, and discloses, in order to prevent occurrence of laser escape even when there is a gap between two rectangular wires, a technique for performing welding while filling the gap with molten metal. In particular, in order to prevent generation of a large amount of spatters caused by an increase in energy density at a welding surface at a start of laser irradiation, welding is performed along a scanning trajectory in which an energy density is reduced at the start of irradiation.

Patent Literature 2 discloses a welding method of preventing escape of a laser beam from a gap between electric conductors when bonding end portions of the electric conductors to each other. Specifically, two adjacent electric conductors are separately welded, and a fusion zone is formed in each of the electrical conductors. Thereafter, the fusion zones are bonded to each other by applying a pressing force by a pressing mechanism such that the end portions approach each other. Accordingly, the end portions of the electric conductors can be bonded to each other without the need for highly accurate butting of the end portions.

### CITATION LIST

### PATENT LITERATURE

Patent Literature 1: JP2019-181506A
Patent Literature 2: JP2020-142257A

### SUMMARY OF INVENTION

### TECHNICAL PROBLEM

However, when the laser beam is continuously scanned across two rectangular wires as in Patent Literature 1, a large amount of spatters may be generated at the time of crossing the step. Further, when the laser beam is uniformly scanned across left and right rectangular wires without considering the step, the fusion zones may be different in height between the left and right, causing imbalance, and a decrease in welding strength.

Further, when the fusion zones are bonded by bringing the end portions to approach each other by the pressing force using the technique of Patent Literature 2, the bonded fusion zone may be inclined or the fusion zone may fall off from an end surface, and it is difficult to form clean molten balls. When the molten ball formed at a tip end portion is inclined or spilt, there is a problem that required welding quality is not satisfied and the welding strength decreases.

Therefore, the present invention has been made in view of the above problems, and an object of the present invention is to provide a welding method and a laser processing apparatus capable of ensuring good welding quality and welding strength without causing laser escape from a gap between rectangular conductors in a welding method of welding tip ends of the rectangular conductors.

### SOLUTION TO PROBLEM

In order to solve the above problem, the present invention provides a welding method of welding an end surface, that is obtained by butting end portions of a first member and a second member, by a laser beam with the end surface being disposed to face a laser processing apparatus, the welding method includes: a first step of irradiating the first member with the laser beam to form a first fusion zone; a second step of irradiating the second member with the laser beam to form a second fusion zone; and a third step of, when the first fusion zone and the second fusion zone are bonded, irradiating the bonded first fusion zone and second fusion zone with the laser beam to form a single fusion zone, and the laser beam includes a first laser beam and a second laser beam having different wavelengths.

### ADVANTAGEOUS EFFECTS OF INVENTION

According to the present invention, even in a case where a gap is generated when tip ends of the rectangular wires are butted with each other, by performing the third step after the two fusion zones are bonded to each other in the first step and the second step, escape of the laser from the gap and damage to a lower part of the rectangular conductors are prevented. Further, by irradiating the bonded fusion zones in the third step with the laser, the fusion zones can be made uniform, and a laterally symmetrical clean molten ball can be formed.

### BRIEF DESCRIPTION OF DRAWINGS

FIG. 1 is a diagram showing an appearance of a laser processing apparatus 1.
FIG. 2 is a diagram showing a functional configuration of the laser processing apparatus 1.
FIG. 3 is a diagram showing a configuration of a hybrid galvano scanner 10.
FIG. 4A and 4B are diagrams illustrating a function of a focus shifter unit 6.
FIG. 5 is a diagram illustrating a function of a galvano scanner unit 8.
FIG. 6 is a diagram showing a configuration of a hybrid galvano scanner 10a according to a modification.
FIG. 7 is a diagram showing a configuration of a hybrid galvano scanner 10b according to a modification.
FIG. 8 is a perspective view showing a schematic configuration of a stator that is a workpiece.
FIGS. 9A to 9C are diagrams each illustrating a positional displacement between rectangular wires (segment coils) 52 in an xyθ direction.
FIG. 10 is a diagram illustrating a step between the rectangular wires 52 in a z direction.
FIG. 11 is a block diagram showing a functional configuration of an image processing unit 9.
FIG. 12 is a diagram illustrating coordinate values measured by the image processing unit 9.
FIG. 13 is a diagram illustrating coordinate values measured by the image processing unit 9.
FIG. 14 is a block diagram showing a functional configuration of a control PC 12.
FIG. 15 is a flowchart showing operations in laser processing performed by the laser processing apparatus 1.
FIG. 16 is a diagram showing an example of a registration screen 150.
FIG. 17 is a flowchart showing operations in measurement processing performed by the image processing unit 9.
FIG. 18 is a flowchart showing operations in the measurement processing performed by the image processing unit 9.
FIG. 19 is a diagram illustrating labeling (numbering).
FIG. 20 is a diagram illustrating first blob analysis processing (height binarization).
FIG. 21A is image data showing center positions measured by the first blob analysis processing, FIG. 21B is a diagram illustrating setting of a mask region, and FIG. 21C is image data showing center positions measured by second blob analysis processing.
FIG. 22 is a diagram illustrating height measurement processing.
FIG. 23 is a diagram showing a data configuration of a coordinate table 113.
FIG. 24A is a diagram showing a trajectory of laser irradiation in a first step, FIG. 24B is a diagram showing a trajectory of laser irradiation in a second step, and FIG. 24C is a diagram showing a trajectory of laser irradiation in a third step.
FIGS. 25A to 25F are diagrams illustrating a change in shape of a workpiece W (welding surface).
FIGS. 26A to 26D are diagrams showing a modification of the third step.
FIG. 27A and FIG. 27B are diagrams illustrating an effect of the modification of the third step.
FIG. 28 is a flowchart showing operations in the laser processing.
FIG. 29 is a diagram showing a data configuration of a processing rate table 1100.
FIG. 30A is a schematic diagram illustrating processing in the first step when there is a step, FIG. 30B is a schematic diagram illustrating processing in the second step when there is a step, and FIG. 30C is a schematic diagram illustrating processing in the third step when there is a step.
FIG. 31A is a schematic diagram illustrating the processing in the first step when there is a positional displacement in the xyθ direction, FIG. 31B is a schematic diagram illustrating the processing in the second step when there is a positional displacement in the xyθ direction, and FIG. 31C is a schematic diagram illustrating the processing in the third step when there is a positional displacement in the xyθ direction.
FIGS. 32A and 32B are diagrams illustrating correction of processing figure data.
FIGS. 33A to 33E are diagrams each illustrating a modification of the third step.
FIGS. 34A to 34C are schematic diagrams illustrating a change in the welding surface from a processing start to a processing end, and FIG. 34D is a schematic diagram showing the welding surface after processing in a related-art example.
FIG. 35 is a diagram showing an example of a main screen 160.
FIG. 36 is a diagram showing an example of a processing figure data registration screen 170.
FIG. 37 is a diagram showing an example of a processing position confirmation screen 180.
FIG. 38 is a block diagram of a functional configuration of a control PC 22 according to Embodiment 2.
FIG. 39A is a perspective view showing a schematic configuration of a stator, that is a welding target, according to Embodiment 2, and FIG. 39B is an enlarged view of the rectangular wires 52 and 52 of Embodiment 2.
FIG. 40 is a diagram illustrating reflection of a laser beam during processing.
FIG. 41 is a diagram illustrating an irradiation-prohibited region.
FIGS. 42A to 42C are diagrams illustrating drawing patterns.
FIG. 43 is a diagram showing an arrangement example of the rectangular wires.
FIG. 44 is a diagram showing a data configuration of a pattern table.
FIG. 45 is a flowchart showing operations in the processing.
FIG. 46 is a block diagram of a functional configuration of a control PC 23 according to a modification of Embodiment 2.
FIG. 47 is a flowchart showing operations in processing according to the modification of Embodiment 2.
FIG. 48 is a flowchart showing operations in the processing according to the modification of Embodiment 2.
FIG. 49 is a diagram illustrating a modification of the drawing pattern according to Embodiment 2.
FIG. 50 is a flowchart showing operations in a modification of the laser processing (xyθ positional displacement).
FIG. 51 is a flowchart showing operations in the modification of the laser processing (xyθ positional displacement).
FIG. 52 is a flowchart showing operations in the modification of the laser processing (z-direction step).
FIG. 53 is a flowchart showing operations in the modification of the laser processing (z-direction step).
FIG. 54 is a diagram showing a system configuration of a measurement system 1000.
FIG. 55 is a diagram illustrating a state of measurement objects 1002 placed on a tray 1003.
FIG. 56 is a flowchart illustrating operations in a measurement program.
FIG. 57 is image data showing a result of the first blob analysis processing.
FIGS. 58A and 58B are diagrams illustrating setting of the mask region.
FIG. 59 is image data showing a result of the second blob analysis processing.

### DESCRIPTION OF EMBODIMENTS

### <Embodiment 1>

### (1) Overall Configuration of Laser Processing Apparatus 1

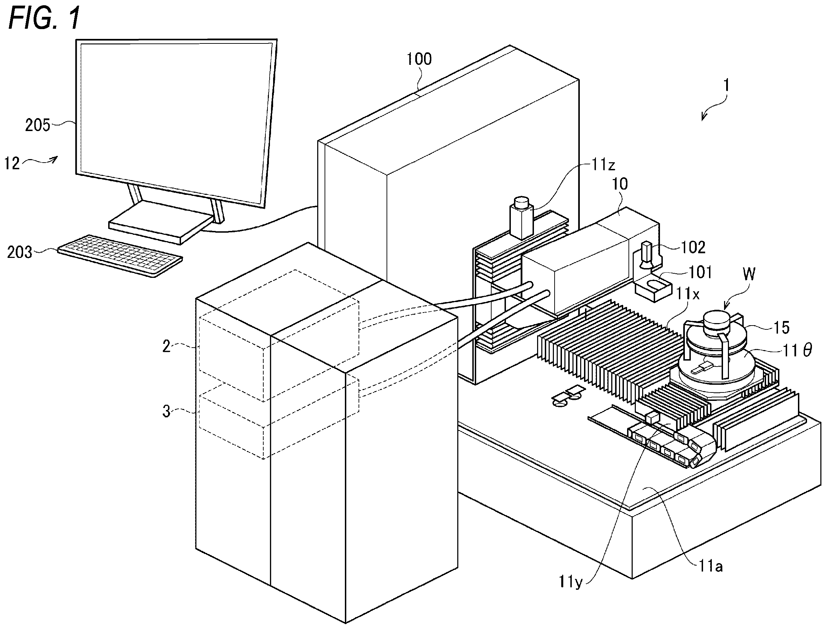

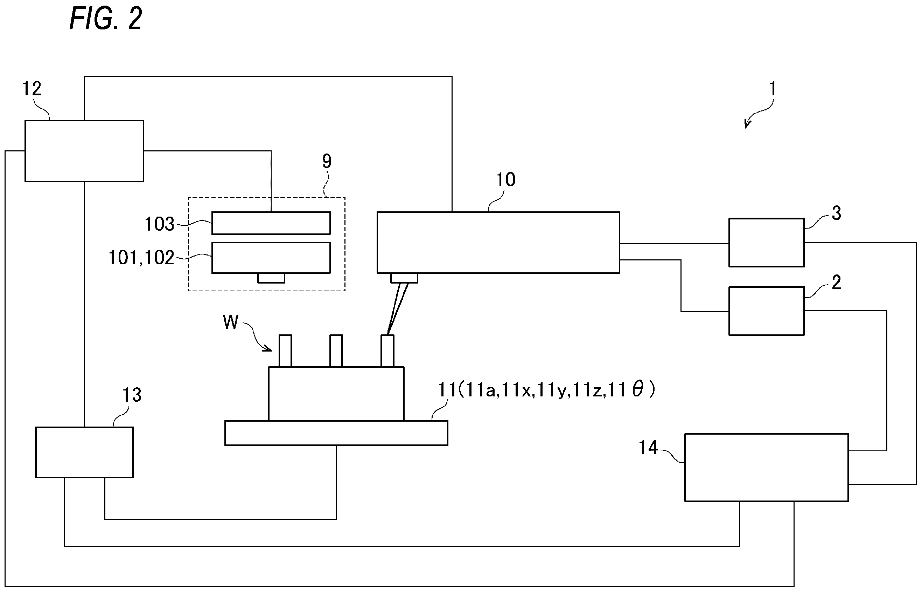

FIG. 1 is an external view showing a configuration of a laser processing apparatus 1, and FIG. 2 is a schematic diagram showing a functional configuration of the laser processing apparatus 1.

As shown in FIGS. 1 and 2, the laser processing apparatus 1 includes a first oscillator 2 (blue semiconductor laser) that oscillates a first laser beam L1, a second oscillator 3 (IR fiber laser) that oscillates a second laser beam L2, a hybrid galvano scanner 10 that aligns optical axes of the first laser beam L1 and the second laser beam L2 with each other and displaces irradiation positions of the first laser beam L1 and the second laser beam L2 with respect to a workpiece W, an image processing unit 9 that captures an image of the workpiece W and analyzes an arrangement status of rectangular wires, a workpiece setting stage 11 on which the workpiece W is placed and which can move the placed workpiece W in a three-dimensional direction (x, y, z) and a rotation direction (θ) around a z-axis, a fixing jig 15 that fixes the workpiece W to the workpiece setting stage 11, a control personal computer (PC) 12 that controls an entire of the laser processing apparatus 1, a programmable logic (PLC) 13 that controls each device in cooperation with the control PC 12, and a laser controller 14 that controls operations of the first oscillator 2 and the second oscillator 3.

The image processing unit 9 includes an illumination device 101, an imaging device 102, and a controller 103, and the controller 103 is built in a control panel 100 of FIG. 1. The control panel 100 includes a built-in computer for controlling the laser processing apparatus 1, and specifically, in addition to the controller 103 of the image processing unit 9, the PLC 13 and the laser controller 14 are built-in. The workpiece setting stage 11 includes a base 11a, an x-axis stage 11x that is a mechanism for moving the workpiece W in an x-axis direction, a y-axis stage 11y that is a mechanism for moving the workpiece W in a y-axis direction, a θ-axis stage 11θ that is a mechanism for rotating the workpiece W around the z-axis, and a z-axis stage 11z that is a mechanism for relatively moving the workpiece W and the hybrid galvano scanner 10 in a z-axis direction.

### (2) Regarding Laser Beam

The first laser beam L1 and the second laser beam L2 oscillated from the first oscillator 2 and the second oscillator 3 are respectively transmitted through optical fibers and incident on the hybrid galvano scanner 10. Then, the first laser beam L1 and the second laser beam L2 are superimposed by the hybrid galvano scanner 10 such that the optical axes thereof are aligned with each other. The superimposed first laser beam L1 and second laser beam L2 are reduced to a predetermined diameter, and then emitted to the facing workpiece W. As described above, the laser processing apparatus 1 performs welding by irradiating the workpiece W with the two laser beams including the first laser beam L1 and second laser beam L2.

A blue semiconductor laser coupled to a multi-mode fiber is used as the first laser beam L1. A wavelength of the first laser beam L1 may be 300 nm to 600 nm, and a green laser may be used instead of the blue laser. Further, output power of the first laser beam L1 is preferably 500 W to 3 kW, and is set to 600 W as an example in the present embodiment.

As the second laser beam L2, a near-infrared single-mode fiber laser having a wavelength of 780 nm to 1100 nm is used. That is, the first laser beam L1 and the second laser beam L2 have different wavelengths, and the wavelength of the first laser beam L1 is shorter than the wavelength of the second laser beam L2. Output power of the second laser beam L2 is preferably 500 W to 2 kW, and is set to 1.5 kW as an example in the present embodiment.

In the present embodiment, the first laser beam L1 of multi-mode is used, and the second laser beam L2 of single-mode is used. The second laser beam L2 is a spot beam having a focused beam diameter smaller than that of the first laser beam L1. Therefore, by using a single-mode fiber laser as the second oscillator 3 for irradiating the second laser beam L2, the second laser beam L2 having a small beam diameter and a high peak energy intensity can be generated effectively.

### (3) Regarding Hybrid Galvano Scanner 10

Next, the hybrid galvano scanner 10 will be described in detail.

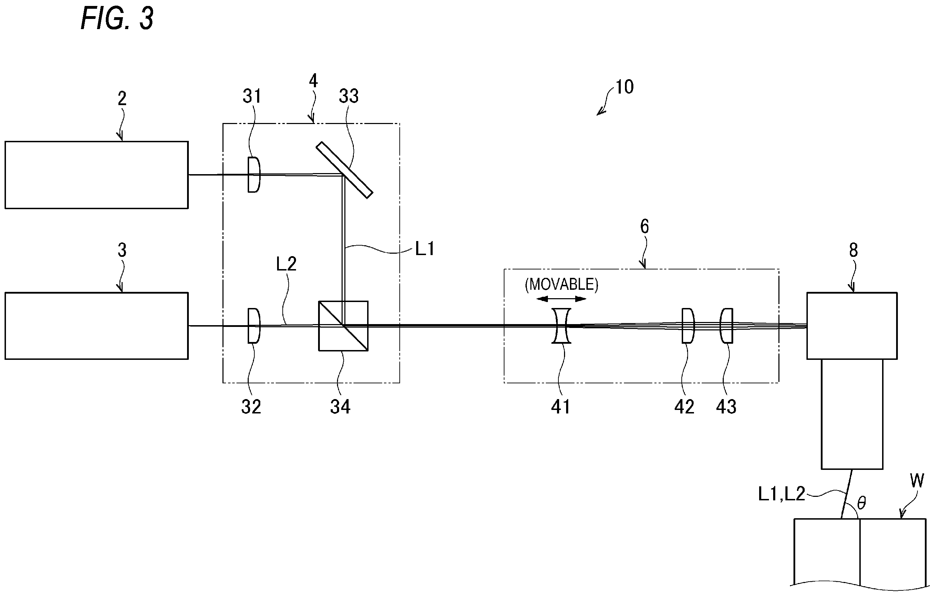

The hybrid galvano scanner shown in FIGS. 3 to 5 includes a combiner unit 4 that superimposes the first laser beam L1 and the second laser beam L2 respectively supplied from the first oscillator 2 and the second oscillator 3 on the same optical axis, a focus shifter unit 6 that is located downstream of the combiner unit 4 and adjusts a focal length of the first laser beam L1 and the second laser beam L2 that are superimposed on the same optical axis, and a galvano scanner unit 8 that is located downstream of the focus shifter unit 6 and changes directions of the optical axes of the first laser beam L1 and the second laser beam L2 traveling toward the workpiece W.

As shown in FIG. 3, the combiner unit 4 includes, for example, lenses (collimation lenses or the like) 31 and 32 for collimating the first laser beam L1 and the second laser beam L2 supplied from the first oscillator 2 and the second oscillator 3, respectively, and mirrors (including a beam splitter, a half mirror, a combiner, or the like) 33 and 34 necessary for aligning the optical axes of the first laser beam L1 and the second laser beam L2 respectively passing through the lenses 31 and 32. Of course, the combiner unit 4 may include optical elements, optical fibers, and the like other than those described above. Further, three or more types of laser beams having different wavelengths may be superimposed in the combiner unit 4.

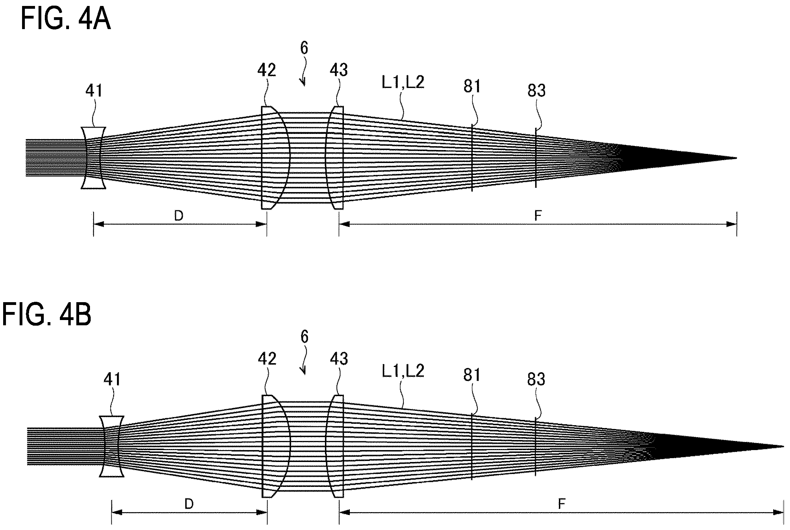

As shown in FIGS. 4A and 4B, the focus shifter unit 6 includes a lens (a concave lens, particularly, a biconcave lens, or the like) 41 (hereinafter, the concave lens 41 is also referred to as the biconcave lens 41) that expands a diameter of the first laser beam L1 and the second laser beam L2 superimposed in the combiner unit 4, and lenses (a plurality of convex lenses, particularly, plano-convex lenses such as a collimation lens and a condensing lens) 42 and 43 (hereinafter, the convex lenses 42 and 43 are also referred to as the collimation lens 42 and the condensing lens 43) that reduce the diameter of the first laser beam L1 and the second laser beam L2 passing through the lens 41. Of course, the focus shifter unit 6 may include optical elements, optical fibers, and the like other than those described above.

The focus shifter unit 6 variably adjusts a focal length F of the first laser beam L1 and the second laser beam L2 from the combiner unit 4. Therefore, in an example shown in FIGS. 4A and 4B, at least one of the concave lens 41 and/or the convex lens 42 is supported by a linear motor truck or another suitable drive mechanism and can move forward and backward along an optical axis direction in order to make a relative distance D between the concave lens 41 and the convex lens 42 along the optical axes of the first laser beam L1 and the second laser beam L2 variably adjustable. The condensing lens 43 at a terminal end does not have to move forward or backward along the optical axis direction.

As shown in FIG. 4A, as the relative distance D between the concave lens 41 and the convex lens 42 decreases, the focal length F of the first laser beam L1 and the second laser beam L2 passing through the lenses 41, 42, and 43 of the focus shifter unit 6 increases. That is, a focal point of the first laser beam L1 and the second laser beam L2 moves away from the lens 43 at the terminal end of the focus shifter unit 6.

Conversely, as shown in FIG. 4B, as the relative distance D between the concave lens 41 and the convex lens 42 increases, the focal length F of the first laser beam L1 and the second laser beam L2 passing through the lenses 41, 42, and 43 of the focus shifter unit 6 decreases. That is, the focal point of the first laser beam L1 and the second laser beam L2 approaches the lens 43 at the terminal end of the focus shifter unit 6.

In the lenses 41, 42, and 43, a chromatic aberration inevitably occurs based on universal physical laws (because a refractive index of light depends on a wavelength of the light). Therefore, when the workpiece W is irradiated with a plurality of superimposed laser beams having different wavelengths, an irradiation position of a laser beam having a certain wavelength and an irradiation position of a laser beam having another wavelength that is superimposed on the laser beam having the certain wavelength are displaced on the workpiece W. Due to the displacement, there is a concern that a desired laser processing or processing result cannot be obtained. Therefore, in practice, the focal points of the superimposed first laser beam L1 and second laser beam L2 are aligned by adjusting positions of the lens 31 and/or the lens 32 through which the first laser beam L1 and the second laser beam L2 respectively output from the first oscillator 1 and the second oscillator 2 pass.

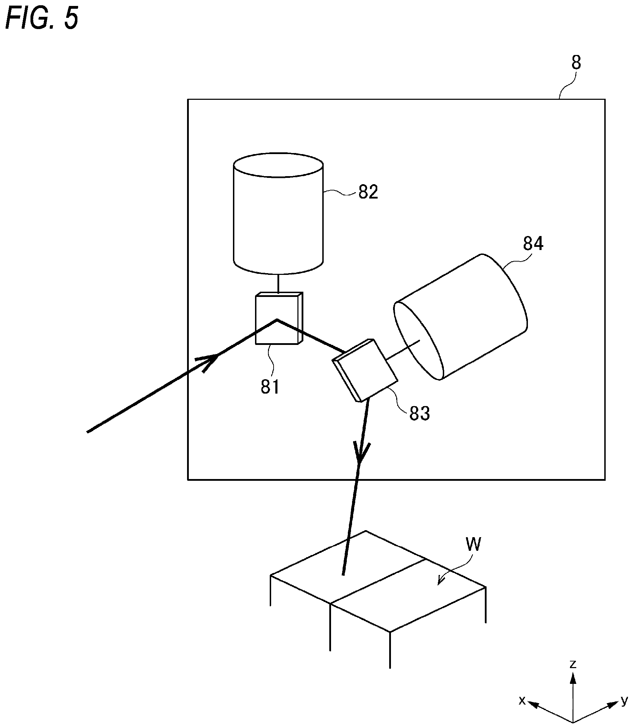

As shown in FIGS. 3 and 5, the galvano scanner unit 8 is a known unit that rotates mirrors 81 and 83, that reflect the first laser beam L1 and the second laser beam L2 from the focus shifter unit 6, via drive mechanisms of mirrors 82 and 84, such as servo motors, stepping motors, and the like. In short, the galvano scanner unit 8 can change a direction of the optical axis of the first laser beam L1 and the second laser beam L2 reflected by the mirrors 81 and 83. The galvano scanner unit 8 according to the present embodiment includes both the mirrors 83 and 84 that are X-axis galvano scanners that change the optical axis of the first laser beam L1 and the second laser beam L2 traveling toward the workpiece W along the X-axis direction of the workpiece W, and the mirrors 81 and 82 that are Y-axis galvano scanners that change the optical axis of the first laser beam L1 and the second laser beam L2 along the Y-axis direction of the workpiece W. The galvano scanner unit 8 can two-dimensionally control an irradiation position of the first laser beam L1 and the second laser beam L2 on the workpiece W by scanning the workpiece W with the first laser beam L1 and the second laser beam L2 two-dimensionally in the XY directions.

The hybrid galvano scanner 10 of the present embodiment is characterized in that the adjustment in the focal length F performed by the focus shifter unit 6 is synchronized with the change in the direction of the optical axis performed by the galvano scanner unit 8.

The closer an angle θ between the workpiece W and the optical axis of the first laser beam L1 and the second laser beam L2 passing through the mirrors 81 and 83 of the galvano scanner unit 8 is to vertical, the shorter an optical path length from the mirror 83 to the workpiece W is. Thus, the focus shifter unit 6 and the galvano scanner unit 8 are synchronously controlled such that the closer the angle θ between the workpiece W and the optical axes of the first laser beam L1 and the second laser beam L2 is to vertical (90°), the shorter the focal length F realized by the focus shifter unit 6 is.

On the contrary, the more the angle θ between the workpiece W and the optical axis of the first laser beam L1 and the second laser beam L2 passing through the mirrors 81 and 83 of the galvano scanner unit 8 is inclined from vertical, the longer the optical path length from the mirror 83 to the workpiece W is. Thus, the focus shifter unit 6 and the galvano scanner unit 8 are synchronously controlled such that the more the angle θ between the workpiece W and the optical axis of the first laser beam L1 and the second laser beam L2 is inclined (away from 90°), the longer the focal length F realized by the focus shifter unit 6 is.

The first laser beam L1 and the second laser beam L2 can be emitted to any portion on the workpiece W through the synchronous control on the lenses 41 and 42 of the focus shifter unit 6 and the mirrors 81 and 83 of the galvano scanner unit 8, and moreover, the first laser beam L1 and the second laser beam L2 can be accurately focused on a desired processing target surface of the workpiece W.

It is desirable that a lens (fθ lens or the like) that allows the first laser beam L1 and the second laser beam L2 to pass therethrough does not exist between the mirrors 81 and 83 of the galvano scanner unit 8 and the workpiece W. Thus, the chromatic aberration that occurs when the first laser beam L1 and the second laser beam L2, whose optical axis direction is manipulated by the galvano scanner unit 8, pass through the lenses can be reliably avoided. That is, a displacement does not occur between a position on the workpiece W at which the first laser beam L1 having a certain wavelength hits and a position on the workpiece W at which the second laser beam L2 superimposed on the first laser beam L1 hits. Accordingly, a desired laser processing or processing result can be obtained.

However, a lens that transmits the first laser beam L1 and the second laser beam L2 may be interposed between the mirrors 81 and 83 of the galvano scanner unit 8 and the workpiece W as long as the chromatic aberration occurs only to an extent that the displacement in the irradiation positions of the first laser beam L1 and the second laser beam L2 can be ignored.

The hybrid galvano scanner used in the present embodiment is not limited to the configuration described above. The biconcave lens 41, the collimation lens 42, and the condensing lens 43 that are elements of the focus shifter unit 6 are generally located downstream of the mirrors 33 and 34 that are elements of the combiner unit 4, but an arrangement of the mirrors 33 and 34 and the lenses 41, 42 and 43 that are optical elements is not limited to that shown in FIG. 3.

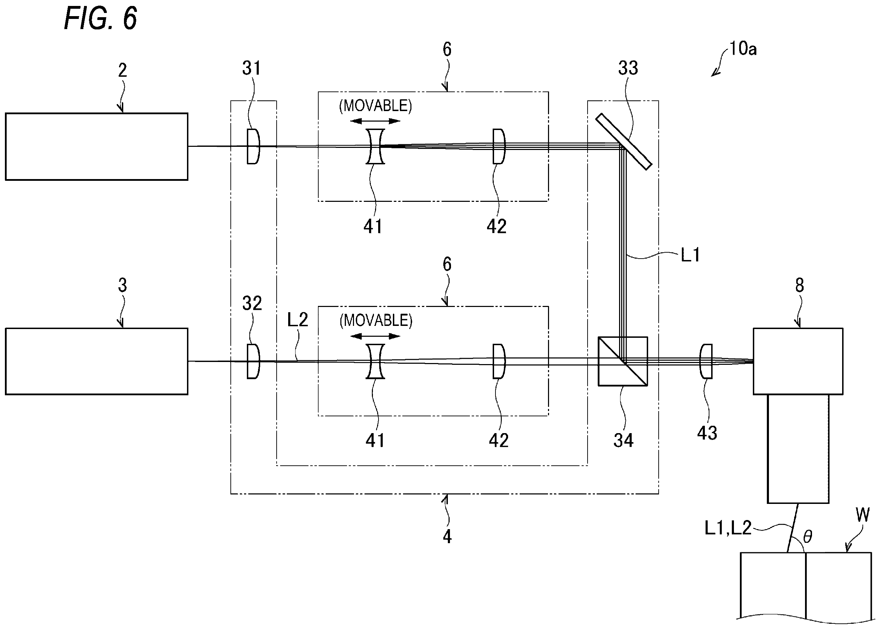

FIG. 6 shows a hybrid galvano scanner 10a according to a modification. In the hybrid galvano scanner 10a, the biconcave lens 41 and the collimation lens 42 are arranged on each of the optical axis of the first laser beam L1 output from the first oscillator 2 and the optical axis of the second laser beam L2 output from the second oscillator 3. In short, there are two biconcave lens 41 and two collimation lenses 42.

Then, the first laser beam L1 and the second laser beam L2 each of which passes through the biconcave lens 41 and the collimation lens 42 are superimposed on each other via the mirrors 33 and 34 that are elements of the combiner unit 4, then are finally condensed by passing through the condensing lens 43, and are input to the galvano scanner unit 8.

Similar to the hybrid galvano scanner 10 of FIG. 3, the hybrid galvano scanner 10a shown in FIG. 6 can also variably adjust the relative distance D between the concave lens 41 and the convex lens 42 along the optical axis of the first laser beam L1 and the second laser beam L2. Therefore, at least one of the concave lens 41 and/or the convex lens 42 on each of the optical axes of the first laser beam L1 and the second laser beam L2 is supported by a linear motor truck or another suitable drive mechanism and can move forward and backward along the optical axis direction.

For example, the concave lens 41 existing on the optical axis of the first laser beam L1 and the concave lens 41 existing on the optical axis of the second laser beam L2 are simultaneously controlled in one axis, and both of the concave lenses 41 can move forward and backward along the optical axis direction. Positions of the convex lenses 42 existing on the optical axis of the first laser beam L1 and the optical axis of the second laser beam L2 along the optical axis direction are adjusted in advance according to the wavelengths of the first laser beam L1 and the second laser beam L2.

It is needless to say that the adjustment in the relative distance D, in other words, the adjustment in the focal length F performed by the focus shifter unit 6 is synchronized with the change in the direction of the optical axis performed by the galvano scanner unit 8.

In the example shown in FIG. 3, after the first laser beam L1 and the second laser beam L2 having different wavelengths are superimposed by the mirrors 33 and 34 of the combiner unit 4, the focal length is adjusted by the lenses 41, 42, and 43 of the focus shifter unit 6. Meanwhile, in the modification shown in FIG. 6, after each of the focal lengths of the first laser beam L1 and the second laser beam L2 is adjusted by the lenses 41 and 42 of the focus shifter unit 6, the first laser beam L1 and the second laser beam L2 are superimposed by the mirrors 33 and 34 of the combiner unit 4. Accordingly, the occurrence of chromatic aberration in the lenses 41 and 42 can be suitably avoided, and the first laser beam L1 and the second laser beam L2 can be more accurately emitted to a desired irradiation position on the workpiece W by using the galvano scanner unit 8.

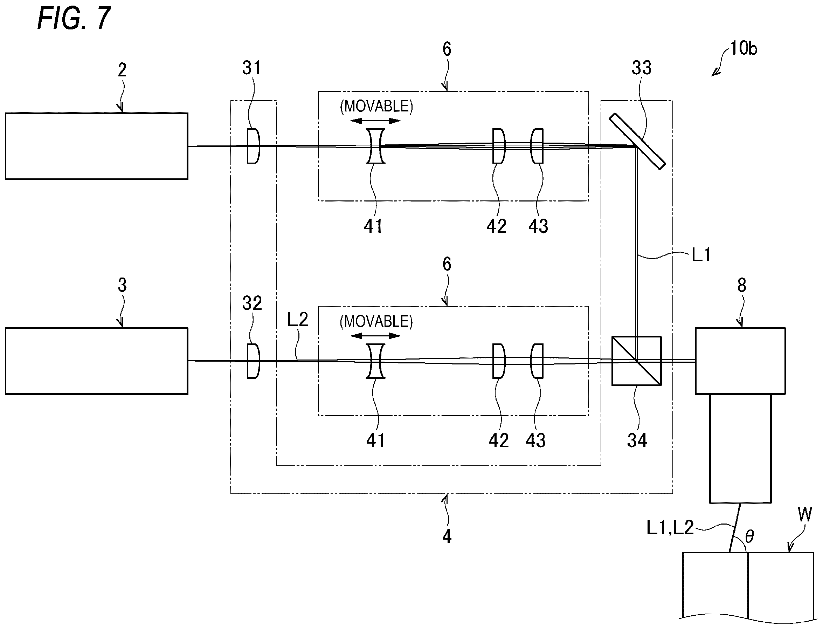

As a further modification, a hybrid galvano scanner 10b is shown in FIG. 7. In this modification, the biconcave lens 41, the collimation lens 42, and the condensing lens 43 are arranged on each of the optical axis of the first laser beam L1 output from the first oscillator 2 and the optical axis of the second laser beam L2 output from the second oscillator 3. In short, there are two biconcave lenses 41, two collimation lenses 42, and two condensing lenses 43.

Then, the first laser beam L1 and the second laser beam L2 each of which passes through the biconcave lens 41, the collimation lens 42, and the condensing lens 43 are superimposed via the mirrors 33 and 34 that are elements of the combiner unit 4, and then are input to the galvano scanner unit 8.

Similar to the hybrid galvano scanner 10 of FIG. 3, the hybrid galvano scanner 10b shown in FIG. 7 can also variably adjust the relative distance D between the concave lens 41 and the convex lens 42 along each of the optical axes of the first laser beam L1 and the second laser beam L2. Therefore, at least one of the concave lens 41 and/or the convex lens 42 on each of the optical axes of the first laser beam L1 and the second laser beam L2 is supported by a linear motor truck or another suitable drive mechanism and can move forward and backward along the optical axis direction.

For example, the concave lens 41 existing on the optical axis of the first laser beam L1 and the concave lens 41 existing on the optical axis of the second laser beam L2 are simultaneously controlled in one axis, and both of the concave lenses 41 can move forward and backward along the optical axis direction. The positions of the convex lenses 42 existing on the optical axis of the first laser beam L1 and the optical axis of the second laser beam L2 along the optical axis direction are adjusted in advance according to the wavelengths of the first laser beam L1 and the second laser beam L2.

It is needless to say that the adjustment in the relative distance D, in other words, the adjustment in the focal length F performed by the focus shifter unit 6 is synchronized with the change in the direction of the optical axis performed by the galvano scanner unit 8.

In the modification shown in FIG. 7, after each of the focal lengths of the first laser beam L1 and the second laser beam L2 is adjusted by the lenses 41, 42 and 43 of the focus shifter unit 6, the first laser beam L1 and the second laser beam L2 are superimposed by the mirrors 33 and 34 of the combiner unit 4. Accordingly, the occurrence of chromatic aberration in the lenses 41, 42 and 43 can be suitably avoided, and the first laser beam L1 and the second laser beam L2 can be more accurately emitted to a desired irradiation position on the workpiece W by using the galvano scanner unit 8.

### (4) Description of Workpiece W

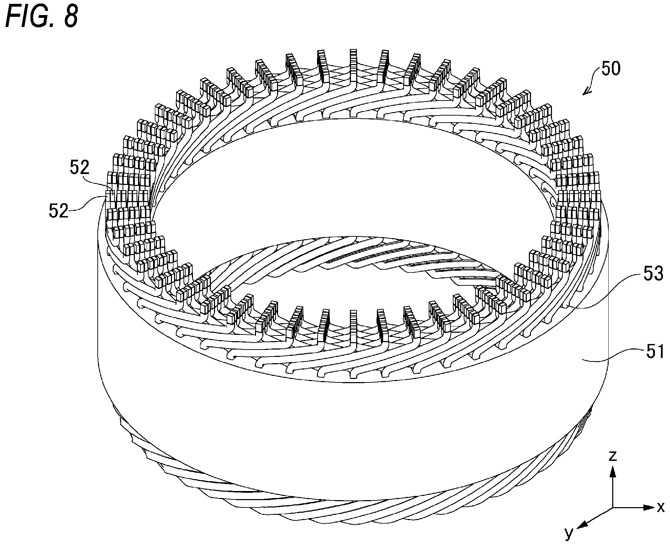

Next, the workpiece W that is a welding target will be described with reference to FIGS. 8 to 10. FIG. 8 is a perspective view showing a schematic configuration of a stator 50 that is a stator of a motor of an electric automobile or the like. As shown in the figure, the stator 50 includes a substantially cylindrical stator core 51 and a plurality of rectangular wires (segment coils) 52. Each of the rectangular wires 52 is a conductor (electric wire) having a rectangular cross section. The rectangular wire 52 is usually made of pure copper, but may be made of a metal material having high conductivity, such as an alloy containing copper as a main component or an alloy containing copper and aluminum. An end portion of each of the rectangular wires 52 protrudes from an upper end portion of the stator core 51, and the laser processing apparatus 1 laser-welds the end portions of two rectangular wires 52 adjacent to each other in a radial direction of the stator core 51.

In the processing of welding tip ends of the rectangular wires 52, an insulating coating portion on a tip end side is peeled off, and the tip ends of the two corresponding rectangular wires are butted with each other. Then, an end surface obtained by the butting is irradiated with a laser beam. At this time, a gap or a positional displacement may be generated when the tip ends of the two rectangular wires are butted with each other, due to a variation in processing accuracy of the respective rectangular wires, mechanism accuracy of a fixing jig 15, an insertion state into a slot 54, or the like.

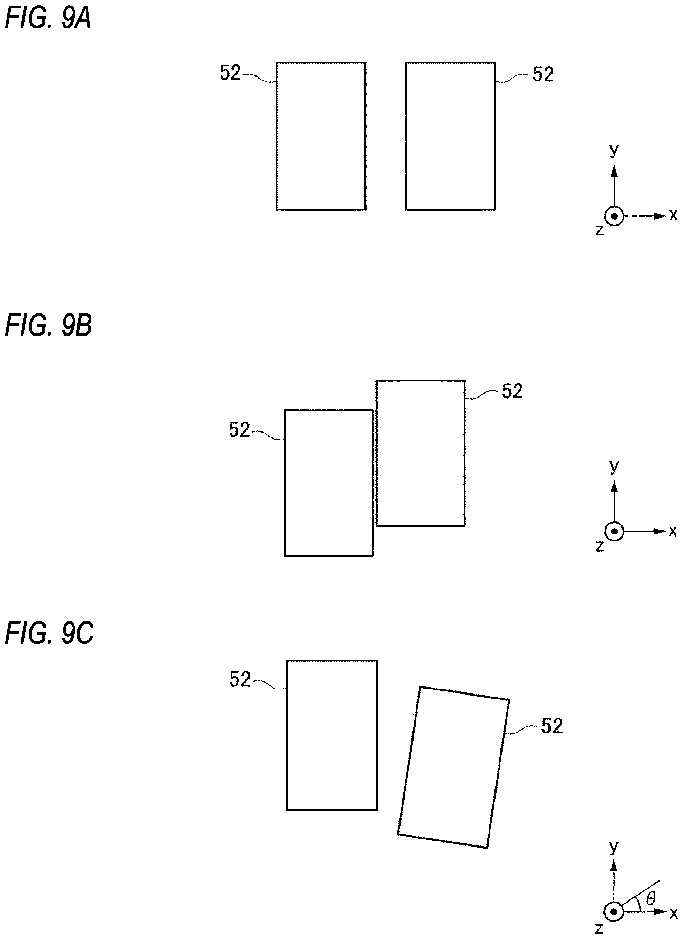

In an example of FIG. 9A, there is a gap between the two rectangular wires 52. In an example of FIG. 9B, the two rectangular wires 52 are displaced in the y-axis direction. In an example of FIG. 9C, there is a gap in the x-axis direction between the two rectangular wires 52, and the two rectangular wires 52 are displaced in the y-axis direction and are further rotated in the θ-direction.

When there is a gap or a large positional displacement between the two corresponding rectangular wires 52, laser escape from the gap or the displaced portion may occur, and a coating portion at a lower part of the rectangular wire may be irradiated with the laser beam to cause carbonization and an insulation failure. Further, even in a case where the laser escape does not occur when there is a positional displacement in the y-axis direction, if the laser beam is emitted across two rectangular wires 52 without any consideration regarding the positional displacement, a fusion zone may be biased or inclined, and a welding strength may be reduced.

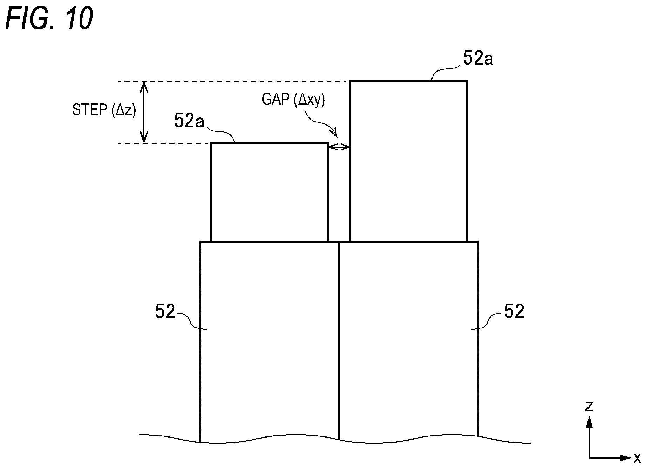

Further, as shown in FIG. 10, when the tip ends of the two rectangular wires 52 are butted with each other, a step Δz may be generated due to a displacement in a height direction (z direction). Further, a slight gap Δxy is generated due to a thickness of the insulating coating portion. Hereinafter, a step amount in the z direction between the two rectangular wires 52 may be referred to as Δz, and a gap amount in an xy plane may be referred to as Δxy.

As described above, when a step in the z-axis direction is generated between two corresponding rectangular wires, a large amount of spatters may be generated when a laser beam crosses the step. Further, when the laser beam is uniformly scanned across left and right rectangular wires without considering the step, the fusion zones may be different in height between the left and right, causing imbalance, and a decrease in welding strength.

Therefore, the laser processing apparatus 1 of the present embodiment performs welding processing in which the occurrence of laser escape and the decrease in welding strength are prevented even when a gap, a positional displacement, or a step in the z-axis direction is generated between the two corresponding rectangular wires 52.

### (5) Regarding Image Processing Unit 9

In the welding of the coil of the stator, in order to appropriately irradiate the rectangular wire of several millimeters with the laser, it is necessary to accurately measure a position of the rectangular wire. Therefore, in the laser processing apparatus 1, the image processing unit 9 performs image analysis to measure a center position and a height for each of the tip ends of the plurality of rectangular wires 52. In a case where the center position is measured by image analysis, a boundary line is unclear when the rectangular wires are close to or butted with each other, and it is difficult to accurately determine the positions of the rectangular wires. Therefore, the image processing unit 9 of the present embodiment can accurately measure the center position of each of the rectangular wires 52 even if the rectangular wires are close to or butted with each other. Hereinafter, a measurement method will be described in detail.

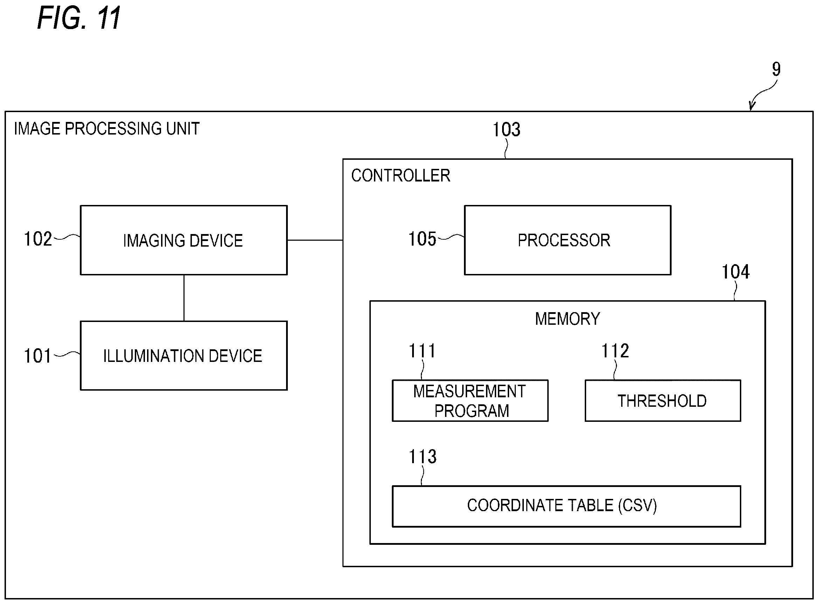

As shown in FIG. 11, the image processing unit 9 includes the illumination device 101 that irradiates the workpiece W with illumination light, the imaging device 102 that captures an image of the workpiece W illuminated by the illumination device 101, and the controller 103 that measures the center position and the height of each of the rectangular wires 52 in the workpiece W using image data captured by the imaging device 102.

The illumination device 101 and the imaging device 102 are respectively an illumination device and a three-dimensional camera suitable for a pattern projection method, the illumination device 101 projects a plurality of stripe patterns (striped patterns) to the workpiece W from a plurality of different directions, and the imaging device 102 receives reflected light by an image sensor such as a CMOS. The controller 103 generates a three-dimensional image by analyzing a change in the patterns of the projected light and the reflected light.

As shown in FIG. 11, the controller 103 includes a memory 104 and a processor 105. A measurement program 111 and a threshold 112 are stored in advance in the memory 104. The threshold 112 may be contained in the measurement program 111. The memory 104 stores a coordinate table 113 generated by the processor 105. By executing the measurement program 111, the processor 105 measures the center positions and heights of all the rectangular wires 52 in the workpiece W, and generates the coordinate table 113 (CSV data).

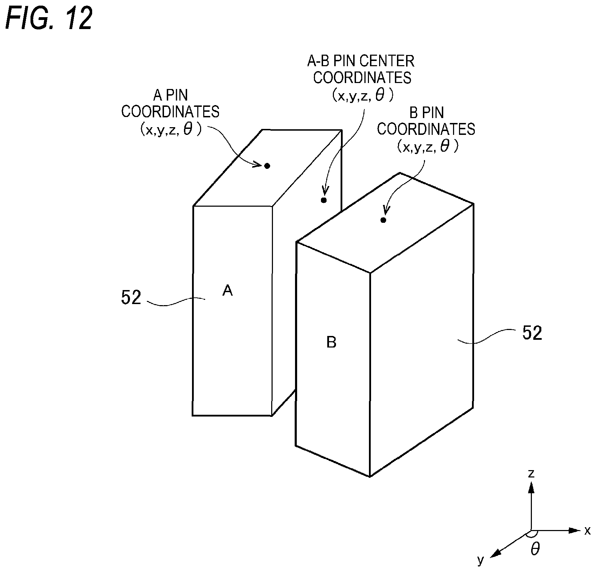

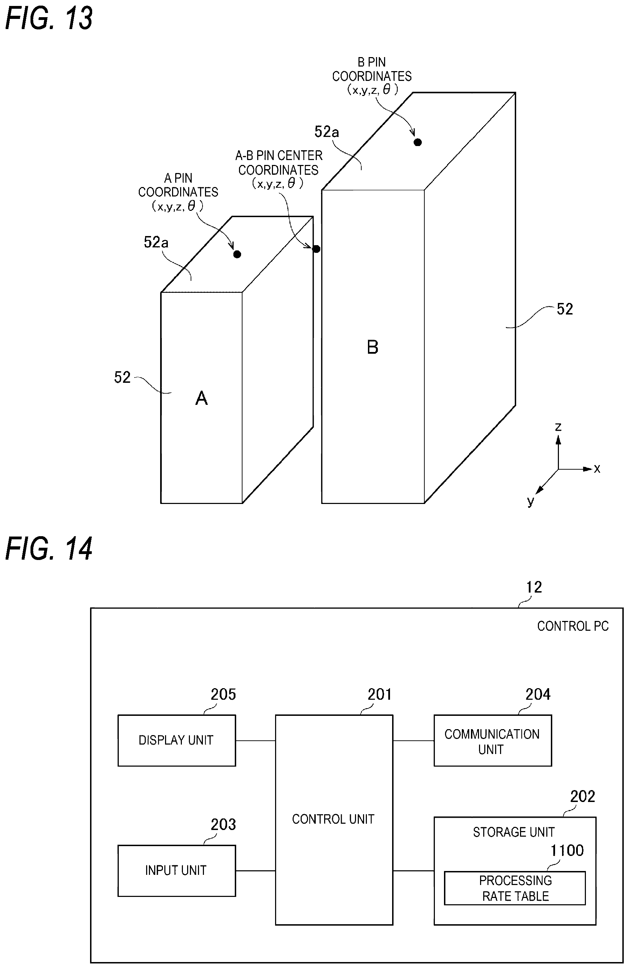

Here, the center position and the height measured by the controller 103 will be described with reference to FIGS. 12 and 13. In an example of FIG. 12, the two rectangular wires 52 are displaced in the x-axis direction, the y-axis direction, and the θ-direction. In an example of FIG. 13, a case in which the two rectangular wires 52 are displaced in the x-axis direction and there is a step in the z-axis direction will be described as an example.

For convenience of description, one of the rectangular wires 52 is referred to as "A pin" and the other of the rectangular wires 52 is referred to as "B pin".

The controller 103 measures coordinates (x, y, z, θ) of a center of a welding surface 52a for the A pin. The coordinates are referred to as "A pin coordinates". Similarly, the coordinates (x, y, z, θ) of the center of the welding surface 52a are also measured for the B pin. The coordinates are referred to as "B pin coordinates". Further, the controller 103 calculates coordinates (x, y, z, θ) of a midpoint between the A pin and the B pin. The coordinates are referred to as "A-B pin coordinates". Here, as an example, an origin (reference point) of an xyz orthogonal coordinate system is set as a center point of an upper surface of the workpiece setting stage 11 on which the workpiece W is placed. Further, θ is an angle around the z axis on the xy plane. Although θ may be measured by image processing, but if a structure of the stator 50 that is a welding target is known, a value derived from the structure of the stator 50 may be used instead of the measurement using image processing.

The controller 103 measures, for all the rectangular wires 52 in the stator 50, a coordinate value of each of the rectangular wires in each pair that is the welding target and a coordinate value of the center point. Then, the measurement result is written in the coordinate table 113, and the coordinate table 113 is stored in the memory 104.

### (6) Regarding Control PC 12

As shown in FIG. 14, the control PC 12 includes a control unit 201, a storage unit 202, an input unit 203, a communication unit 204, and a display unit 205.

Specifically, the control PC 12 is a computer system including hardware resources such as a central processing unit (CPU), a read only memory (ROM), a random access memory (RAM), a hard disk drive (HDD), a solid state drive (SSD), a display unit, a communication interface, and input devices such as a keyboard and a mouse. In the welding processing using the galvano scanner, the control PC may be referred to as a "galvano PC".

The control unit 201 includes a CPU and a RAM as a working memory.

The storage unit 202 is a so-called auxiliary storage device, and is implemented by a non-volatile memory such as an HDD, an SSD, a read only memory (ROM), or a flash memory.

The storage unit 202 stores a computer program for controlling the laser processing apparatus 1, various laser parameters received via the input unit 203, or various types of data such as processing figure data 110 used in the welding processing.

The control unit 201 controls the first oscillator 2, the second oscillator 3, the hybrid galvano scanner 10, the PLC 13, the laser controller 14, and the like to perform the welding processing on the workpiece W, by loading the computer program stored in the storage unit 202 into the RAM serving as the working memory and executing the computer program. The laser parameters stored in the storage unit 202 include a laser output, a processing rate (laser irradiation time), a mark speed, a slow-up time, a slow-down time, and the like that are to be used in the first oscillator 2 and the second oscillator 3.

The input unit 203 includes an input device such as a keyboard, a mouse, and various switches for receiving a user operation, and a device for inputting data by connecting a removable recording medium such as a USB memory or an SD memory card. Data received via the input unit 203 is stored in the storage unit 202.

The communication unit 204 performs information communication with external devices (the image processing unit 9, the hybrid galvano scanner 10, the PLC 13, the laser controller 14, and the like) connected therewith wirelessly or by wire.

The display unit 205 includes a display unit, a video codec, a graphics processing unit (GPU), a memory for screen data, and the like, generates a UI screen and the like and displays the UI screen on the display unit. A user may input various parameters to be instructed to the laser controller 14 via the input unit 203, in a state where the UI screen is displayed on the display unit 205.

### (7) Overall Operation of Laser Processing

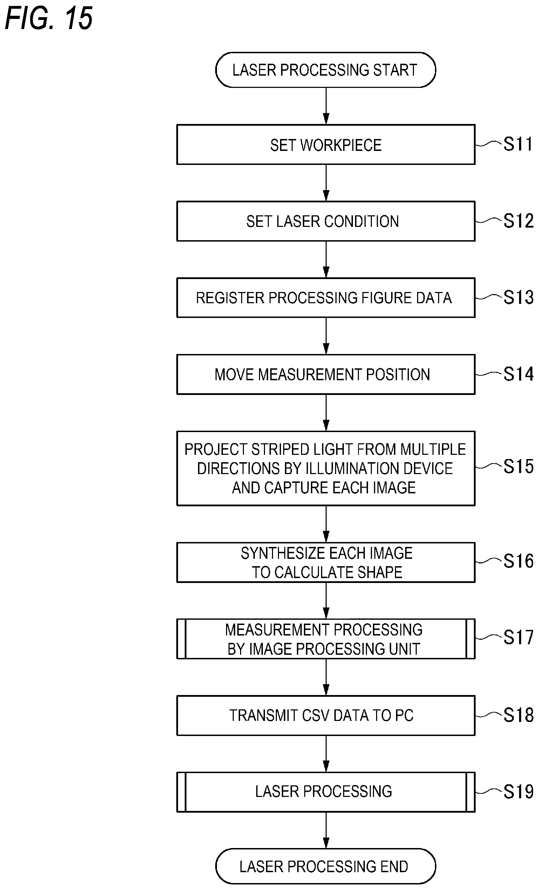

Next, operations of the laser processing apparatus 1 will be described with reference to FIG. 15.

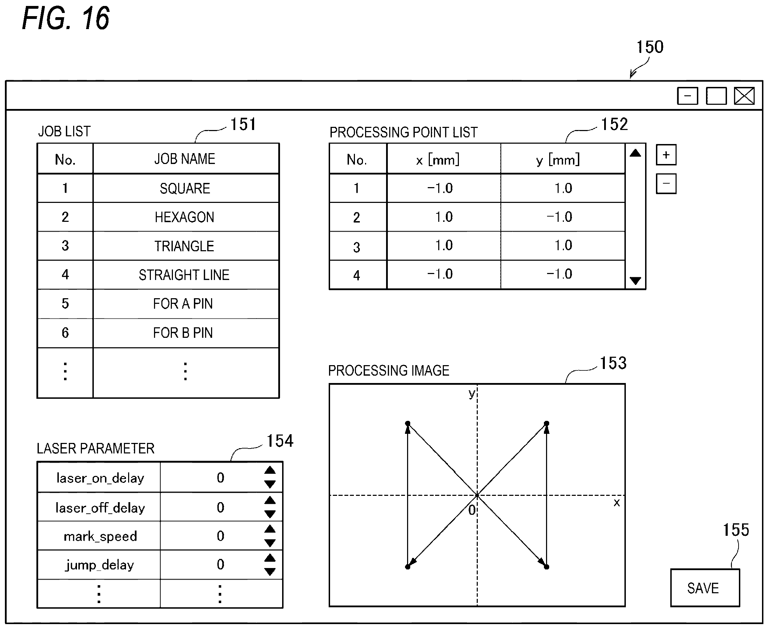

First, the workpiece W is set on the workpiece setting stage 11 (step S11). The control PC 12 sets laser parameters (the laser output, the slow-up time, the slow-down time, and the like) for the first oscillator 2 and the second oscillator 3 via the laser controller 14 (step S12). The user operates the input unit 203 of the control PC 12 to input the processing figure data 110, and the control PC 12 registers the processing figure data 110 in the storage unit 202 (step S13). FIG. 16 shows a registration screen 150 which is an example of the UI screen when the user inputs the laser parameters and the processing figure data. The registration screen 150 is a UI screen for registering the laser parameters to be used in the first oscillator 2 and the second oscillator 3 and the processing figure data to be used in the hybrid galvano scanner 10 at the time of laser irradiation in a third step to be described later.

The registration screen 150 includes, for example, a job list 151, a processing point list 152, a processing image 153, a laser parameter input unit 154, and a registration button 155. For example, when "straight line" is selected in the job list 151 and xy coordinate values of processing points are added to the processing point list 152, a figure obtained by connecting the processing points with straight lines is displayed at the processing image 153. When the user selects the registration button 155 in this state, the processing figure data 110 displayed at the processing image 153 is registered in the storage unit 202. The processing figure data 110 is information necessary for the hybrid galvano scanner 10 to scan the laser beam according to the processing image.

Here, in the present embodiment, the welding processing is performed by performing the laser irradiation of three steps including a first step, a second step, and the third step on the two rectangular wires 52 having a gap or a positional displacement therebetween.

The processing in steps S11, S12, and S13 is not necessarily performed in this order.

The workpiece setting stage 11 on which the workpiece W is placed is moved to dispose the workpiece W immediately below the image processing unit 9 (step S14). Next, the image processing unit 9 captures an image of the workpiece W (step S13). Specifically, the illumination device 101 projects a plurality of stripe patterns (striped patterns) to the workpiece W from a plurality of different directions by the pattern projection method, the imaging device 102 captures images, and the controller 103 combines the captured images to calculate a 3D shape (step S14).

Subsequently, the controller 103 of the image processing unit 9 performs processing of measuring the center position and the height of each rectangular wire 52 (step S17), and generates CSV data (coordinate table 113) describing the measurement result. The image processing unit 9 transmits the CSV data (coordinate table 113) in which the measurement result is written to the control PC 12 (step S18). The CSV data may be transmitted from the image processing unit 9 to the control PC 12 via a wireless or wired network or via a portable recording medium such as a USB memory or an SD memory card.

Subsequently, control PC 12 performs laser processing (step S19). In the present embodiment, a case in which a scanning movable range of the hybrid galvano scanner 10 covers an entire size of the workpiece W is assumed. However, when performing welding processing of a motor larger than the scanning movable range of the galvano scanner, the laser processing apparatus 1 may perform welding processing while rotating the workpiece W by the θ-axis stage 11θ of the workpiece setting stage 11. Depending on a size of the motor, the welding processing may be performed while rotating the motor one-fourth of a turn every time, or the welding processing may be performed while rotating the motor one-eighth of a turn every time.

### (8) Operation of Measurement Processing

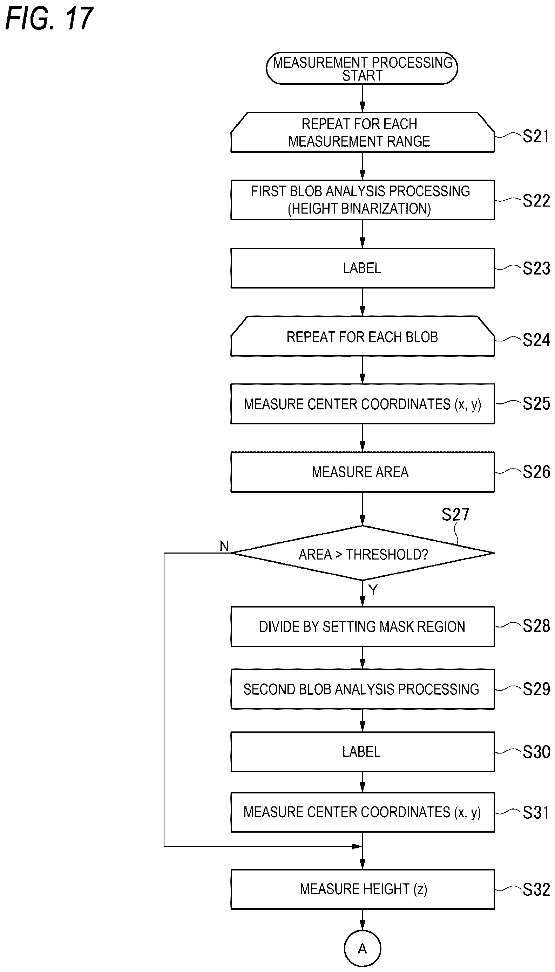

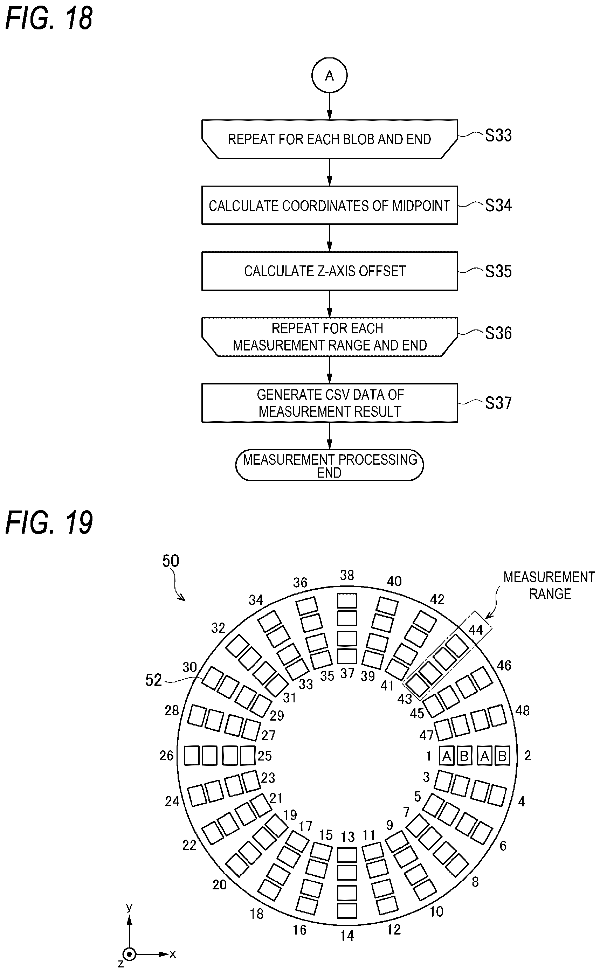

Here, operations in the measurement processing performed by the image processing unit 9 as preparation for the welding processing will be described. FIGS. 17 and 18 are flowcharts showing the operations in the measurement processing performed by the image processing unit 9, and show details of step S17 in FIG. 15. In practice, the processor 105 operates by executing the measurement program 111 stored in the memory 104 of the controller 103.

The image processing unit 9 repeats steps S21 to S36 for each of measurement ranges of the workpiece W. In the present embodiment, as an example of the measurement range, as shown in FIG. 19, a plurality of rectangular wires 52 (four rectangular wires 52 in this example) arranged in the radial direction of the stator 50 are defined as one measurement range.

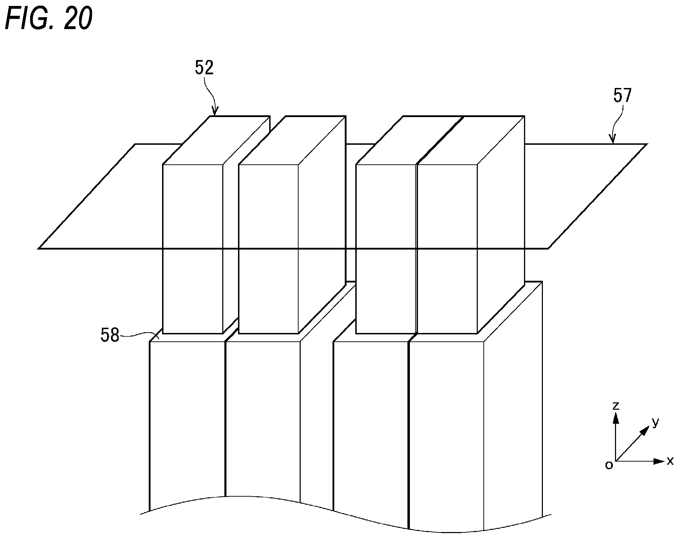

The image processing unit 9 performs first blob analysis processing (step S22). The blob analysis is a type of image analysis, in which binarization processing is performed for each of pixels in target image data, and various analyses and measurements are performed using the binarized image data. In the first blob analysis processing, as shown in FIG. 20, the binarization processing is performed on a cross-sectional shape obtained when the rectangular wires 52 in the measurement range are cut along a xy plane 57.

The xy plane 57 can be set to any height, but in order to perform the laser irradiation on an end surface of the rectangular wire 52, it is necessary to set the xy plane 57 at least on a tip end side on which an insulating coating portion 58 is peeled off. Next, the image processing unit 9 labels (numbers) the rectangular wires 52 as shown in FIG. 19. As an example, the labeling is performed clockwise from a column of 0 degree. In the radial direction, the labeling is performed sequentially from a center of the stator 50 toward an outside. Here, as an example, a pair of rectangular wires 52 that are welding targets is labeled with a common numerical value. In the pair of rectangular wires 52 labeled with the common numerical value, one on an inner side in the radial direction is labeled with "A" and one on an outer side is labeled with "B".

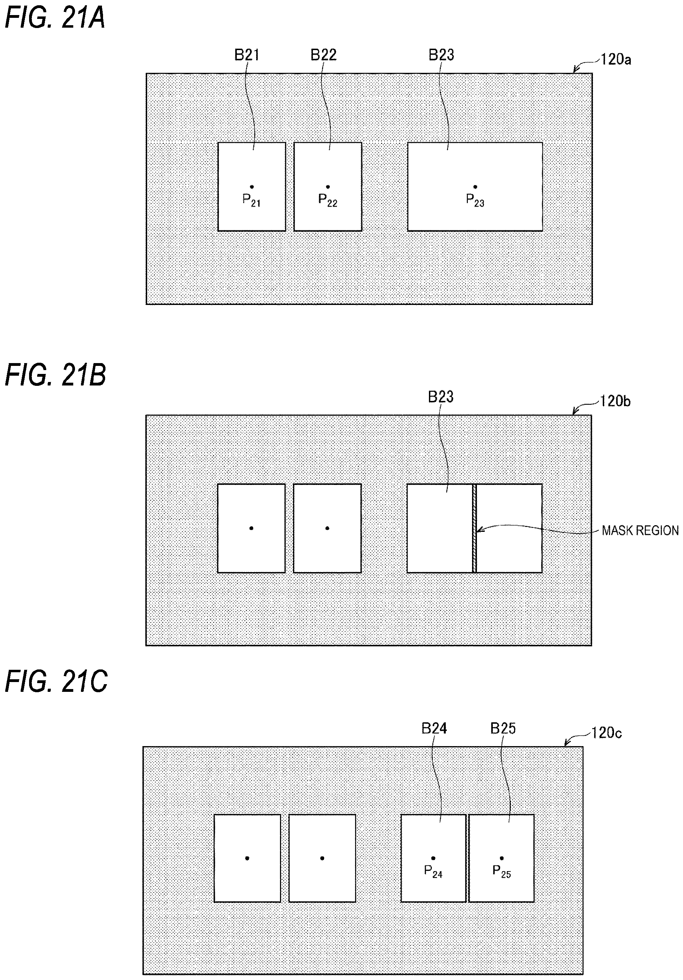

FIG. 21A shows image data 120a after the binarization processing is performed for the measurement range. The binarized image data is actually expressed in two gradations including black and white, but in the present embodiment, the black is depicted using a hatched pattern for convenience of description. The following processing will be described with reference to FIGS. 21A to 21C.

The image data 120a includes a blob B21, a blob B22, and a blob B23. The controller 103 of the image processing unit 9 repeats step S24 to step S33 for each of the blobs in the image data 120a. First, the controller 103 measures center coordinates (x, y) of the target blob (step S25), and further measures an area (step S26). Then, the measured area is compared with a threshold 112 stored in advance. Accordingly, it is determined whether the rectangular wires are bonded to each other. The threshold 112 may be set according to a cross-sectional area of the rectangular wire 52, and is, for example, 1.5 times or more and less than 2.0 times the cross-sectional area.

In the present embodiment, the threshold may be a rewritable value. The threshold may be rewritten according to a shape, an attribute of a material of the measurement object or the like, or a physical quantity or value to be measured.

When the area of the blob is equal to or less than the threshold (N in step S27), the processing proceeds to step S32. When the area of the blob is larger than the threshold (Y in step S27), a mask region is arranged in the target blob to divide the blob (step S28). For example, when the blob B23 (a center position is P23) shown in FIG. 21A is divided, an elongated mask region including the center position P23 is arranged on the image data, as shown in FIG. 21B. The mask region is a region that is not recognized in the image processing. In the present embodiment, the gap, the step, the positional displacement, and the like are calculated by the image processing, and the laser irradiation is performed in consideration of the gap, the step, the positional displacement, and the like, but an arrangement of the rectangular wires 52 itself is positioned in advance. Therefore, the controller 103 calculates and arranges a position of the mask region according to the positions of the rectangular wires 52 corresponding to the target blob. A line width of about 1 pixel to 2 pixels is sufficient for the mask region. FIG. 21B shows image data 120b after the mask region is arranged.

Next, the controller 103 performs second blob analysis processing on the image data 120b (step S29). As a result, in image data 120c of FIG. 21C, the blob B23 is divided into a blob B24 and a blob B25. The controller 103 labels the blobs obtained by the division (step S30). Accordingly, all of the rectangular wires 52 can be distinguished from numerical values from 1 to 48 and symbols A and B. Further, the controller 103 measures center coordinates of the blob B23 and the blob B25 (step S31).

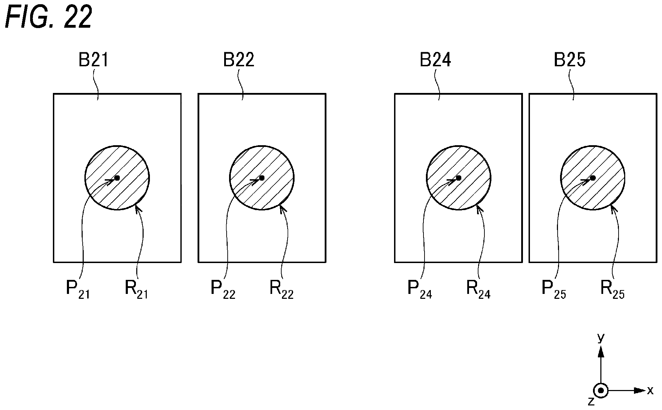

Subsequently, the controller 103 measures an average height of the rectangular wire 52 in any range including the center position obtained as a result of the blob analysis processing (step S32). In the present embodiment, as shown in FIG. 22 as an example, the average height in each of circles (R21, R22, R24 and R25) centered on the center positions (P21, P22, P24 and P25) of the rectangular wires 52 is measured. The measured average height is defined as a height (z) of the rectangular wire 52. The controller 103 can measure the height at one point at the center position of each of the rectangular wires 52, but a measurement error can be absorbed by calculating the average height in a predetermined range as shown in FIG. 22.

Next, the controller 103 calculates a coordinate value (x, y, z, θ) of a midpoint between the two corresponding rectangular wires 52 (step S34). Further, when there is a step between the two corresponding rectangular wires 52, the controller 103 calculates a z-axis offset value (step S35). The offset value will be described later.

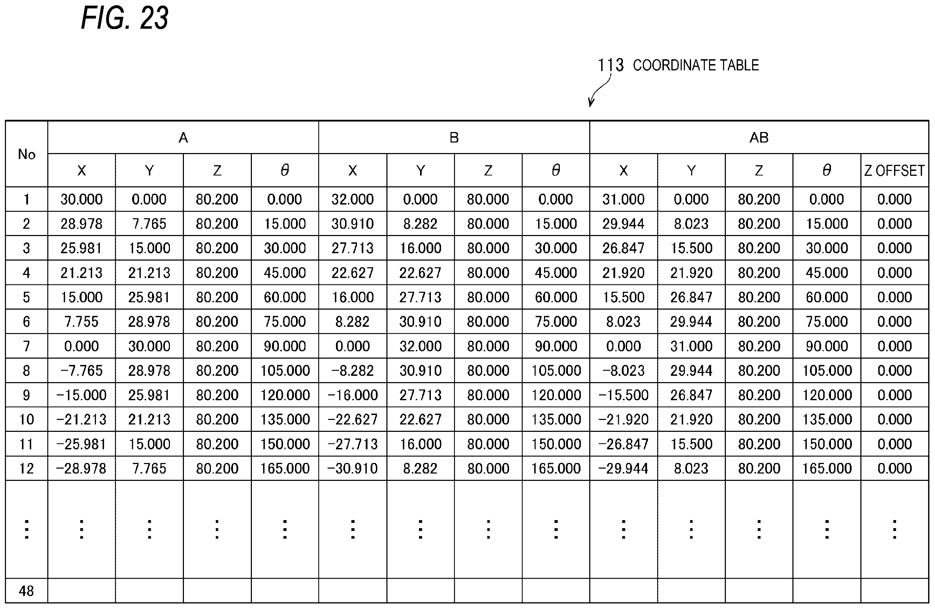

When the measurement of the center position and the height (x, y, z, θ) and the coordinate value and the height (x, y, z, θ) of the midpoint is completed for all of the rectangular wires 52, the controller 103 generates the coordinate table 113 describing the measurement result (step S37). Here, the coordinate table 113 generated here is specifically the CSV data. FIG. 23 is a diagram showing a data configuration of the coordinate table 113.

In this way, by performing the blob analysis processing twice, the controller 103 can accurately measure the center position of each of the rectangular wires 52 even when the rectangular wires are in contact with each other.

### (9) Laser Processing

Here, the laser processing of the present embodiment will be described in detail.

### (9-1) Three Steps Serving as Basis

First, three steps serving as a basis of the welding performed by the laser processing apparatus 1 will be described.

In rectangular wire butt welding of the laser processing apparatus 1 of the present embodiment, a welding method capable of shortening a processing time while maintaining good welding quality and welding strength without causing laser escape from a gap even when there is a gap is provided. Specifically, the laser processing apparatus 1 performs a welding method including three steps including the first step, the second step, and the third step.

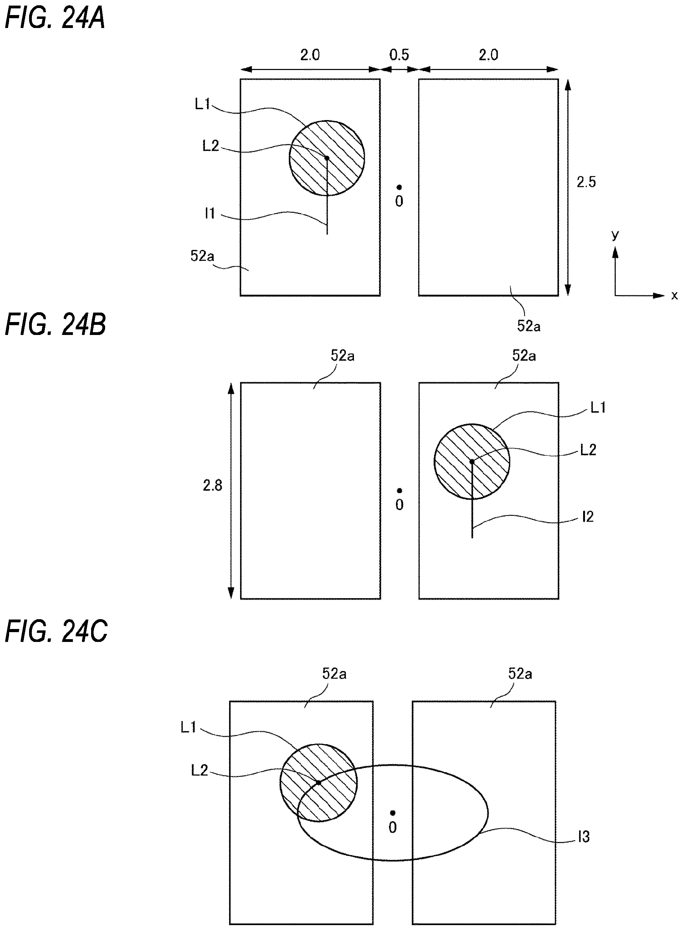

The welding method including three steps will be described with reference to FIGS. 24A to 24C. Here, as an example, a case in which a gap 53 is 0.5 mm when two rectangular wires 52 whose end surfaces have a size of 2.0 mm × 2.5 mm are butted with each other will be described as an example. Further, when the focused beam diameter of the first laser beam L1 is d1 and the focused beam diameter of the second laser beam L2 is d2, d1 = 1050 µm and d2 = 40 µm.

FIG. 24A shows a trajectory 11 of the irradiation using the first laser beam L1 and the second laser beam L2 in the first step. In the first step, the end surface 52a of the rectangular wire 52 on a left side of a paper surface is irradiated in a substantially linear reciprocating manner in the y-axis direction at a position of 1.0 mm in the x-axis direction from a center O of the workpiece W (a center of the workpiece W including the gap 53). An irradiation width of the reciprocating irradiation is 1.0 mm in the y-axis direction. In the first step, the irradiation using the first laser beam L1 and the second laser beam L2 is performed at a speed of 500 mm/s.

FIG. 24B shows a trajectory l2 of the irradiation using the first laser beam L1 and the second laser beam L2 in the second step. In the second step, the end surface 52a of the rectangular wire 52 on a right side of the paper surface is irradiated in a substantially linear reciprocating manner in the y-axis direction at a position of 1.0 mm in the x-axis direction from the center O of the workpiece W. An irradiation width of the reciprocating irradiation is 1.0 mm in the y-axis direction. In the second step, the irradiation using the first laser beam L1 and the second laser beam L2 is performed at a speed of 500 mm/s, as in the first step.

FIG. 24C shows a trajectory l3 of irradiation using the first laser beam L1 and the second laser beam L2 in the third step. The trajectory l3 has an elliptical shape with a short diameter of 1.2 mm and a long diameter of 2.4 mm, and in the third step, elliptical turning irradiation is performed across the left and right rectangular conductors 52. In the third step, the irradiation using the first laser beam L1 and the second laser beam L2 is performed at a speed of 1000 mm/s.

In each step of the first step, the second step, and the third step, spatters may be generated when a rapid temperature rise occurs on the welding surface. Therefore, the second laser beam L2 having a high power density may be controlled such that the irradiation is started at a low output power and the power gradually increases until reaching a designated output. In the present embodiment, in each of the steps, the output of the second laser beam L2 is controlled to be increased from 0 to 1.5 kW over 5.0 ms.

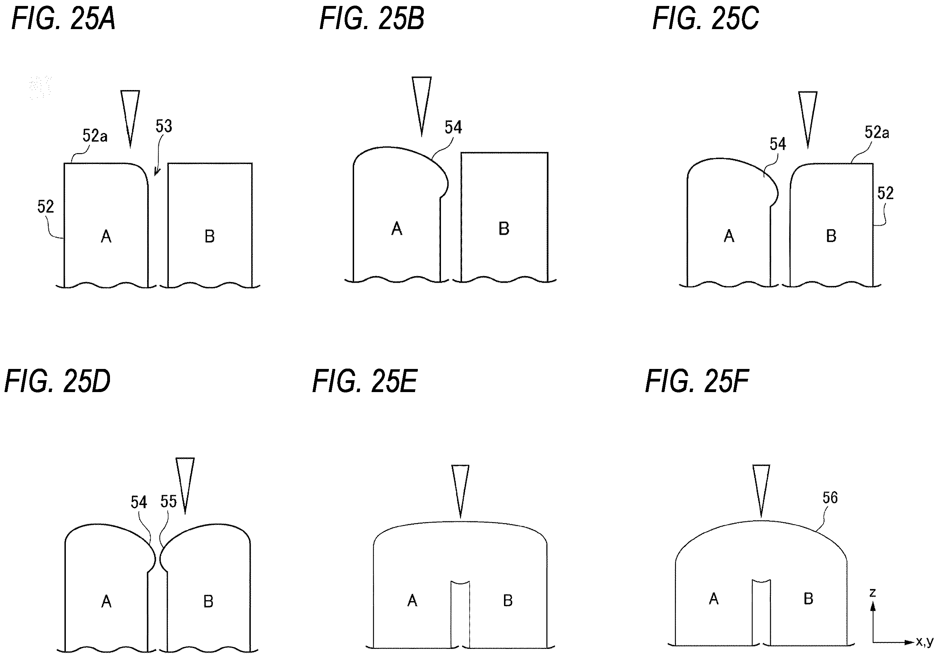

A change in the welding surface caused by performing the welding in the three steps will be described with reference to FIGS. 25A to 25F. FIGS. 25A to 25F are schematic diagrams schematically showing the change in the welding surface. Here, for convenience of description, the rectangular wire 52 on the left side of the paper surface is described as "A", and the rectangular wire 52 on the right side of the paper surface is described as "B".

(a) The irradiation in the first step on the rectangular wire A is started to melt the end surface 52a.
(b) A corner of the end surface 52a of the rectangular wire A is melted and rounded to form a first fusion zone 54. The laser processing apparatus 1 performs the irradiation in the first step until the first fusion zone 54 shoulders off (as an example, the irradiation is performed for 68 milliseconds and stopped). Here, the "shoulder off" refers to a state in which a part of the first fusion zone 54 formed on the end surface 52a enters the gap 53 and starts to flow down.
(c) Subsequently, the irradiation in the second step on the rectangular wire B is started to melt the end surface 52a of the rectangular wire B.
(d) A corner of the end surface 52a of the rectangular wire B is melted and rounded to form a second fusion zone 55. The laser processing apparatus 1 performs the irradiation in the second step until the second fusion zone 55 shoulders off (as an example, the irradiation is performed for 68 milliseconds and stopped).
(e) The first fusion zone 54 and the second fusion zone 55 are bonded together. Here, since a timing of the laser irradiation is different between the rectangular wire A and the rectangular wire B, there is a possibility that the molten metal of the rectangular wire Ais cooled and solidified at a time point when the irradiation in the second step is completed.
(f) Therefore, after the first fusion zone 54 and the second fusion zone 55 are bonded, the irradiation in the third step is performed to apply heat to the rectangular wire A again, and the first fusion zone and the second fusion zone are made uniform to form one fusion zone 56. The irradiation in the third step may be continued until the fusion zone 56 has a desired size (for example, the irradiation is performed for 70 milliseconds and stopped).

Here, as shown in FIGS. 24A to 25F, in the first step and the second step, it is desirable to irradiate, with the laser beam, each of the end surfaces 52a at a position displaced from the center, that is, a position closer to a butting surface than to the center (a position closer to the gap 53). Accordingly, a time until the fusion zones are bonded to each other can be shortened. Then, by performing the third step after the two fusion zones are bonded, escape of the laser from the gap 53 and damage to the lower part of the rectangular wire are prevented. Further, by turning-irradiating the fusion zones bonded in the third step with the laser, the fusion zones can be made uniform, and a laterally symmetrical clean molten ball can be formed.

The irradiation position and the irradiation time in each step basically depend on a size of the welding surface. Therefore, for a workpiece for which it is known in advance that the positional displacement or the step is small, optimum values for the irradiation position and the irradiation time may selected as a result of test irradiation, and the optimum values may be stored in the control PC 12. Regarding the output power of the first laser beam L1 and the output power of the second laser beam L2, similarly, optimum power of the laser may be stored in the control PC 12. Instead of the irradiation time, the number of times of irradiation may be controlled.

In the above description, the trajectory l3 of the laser irradiation in the third step is an ellipse or a circle, but this is merely an example, and the trajectory of the laser irradiation in the third step is not limited to the ellipse and the circle.

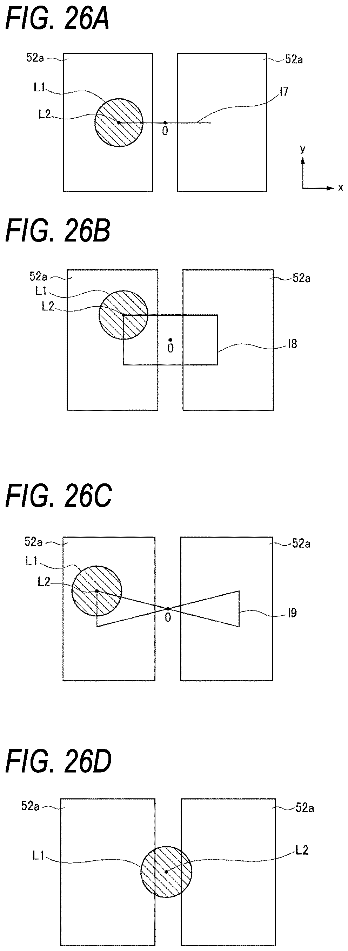

FIGS. 26A to 26D shows a modification of the trajectory of the laser irradiation in the third step. As indicated by a trajectory l7 in FIG. 26A, the laser processing apparatus 1 may perform linear reciprocating irradiation by emitting the first laser beam L1 and the second laser beam L2 across the two rectangular wires 52. Further, as indicated by a trajectory l8 in FIG. 26B, the laser processing apparatus 1 may emit the first laser beam L1 and the second laser beam L2 in a rectangular shape across the two rectangular wires 52. Further, as indicated by a trajectory l9 in FIG. 26C, the laser processing apparatus 1 may emit the first laser beam L1 and the second laser beam L2 in a figure-eight shape across the two rectangular wires 52. In addition to the linear shape, the rectangular shape, and the figure-eight shape, the laser beam may be emitted in a polygonal shape.

In particular, when the irradiation is performed in a rectangular shape or a figure-eight shape, thermal energy is easily transmitted to the end portion of the workpiece W, and melting of the welding surface (end surface 52a) can be promoted.

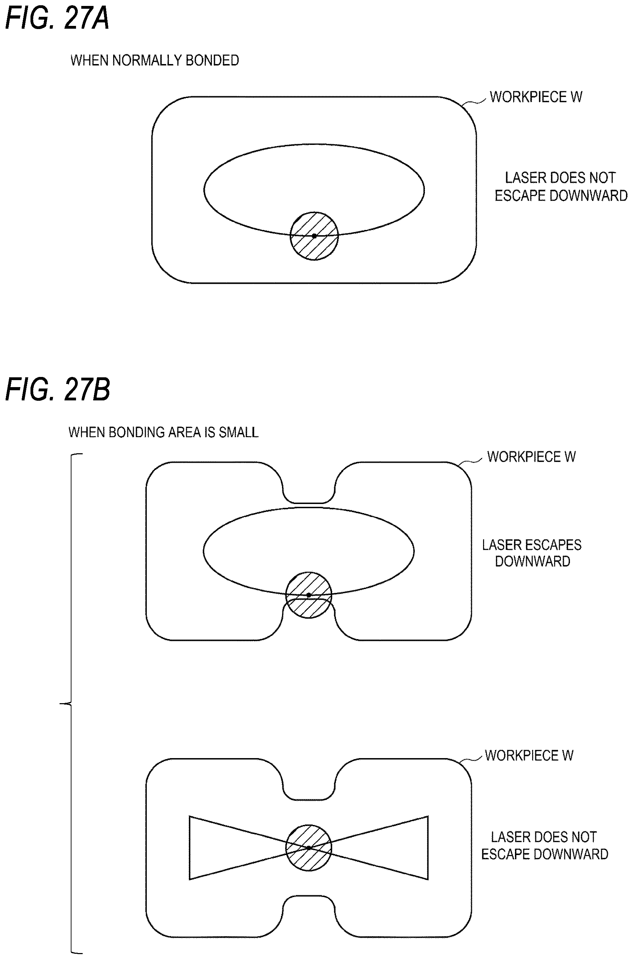

Further, as shown in FIG. 27A, when the rectangular wires 52 are normally bonded to each other, the laser does not escape downward even when the irradiation using the laser beam is performed in elliptical scanning or circular scanning, but as shown in FIG. 27B, when a melting amount at the end portion (end surface 52a) of the workpiece W is small, a surface tension also has an effect, and only the centers of the rectangular wires 52 are bonded. In this way, in a case where an area of the bonded part formed in the gap 53 is small, when the irradiation using the laser beam is performed in the elliptical scanning or circular scanning, the laser may escape downward. Therefore, when the area of the bonded portion is small, it is particularly effective to prevent the carbonization or the insulation failure of the coating portion caused by the laser escape, by performing laser irradiation in a figure-eight shape or linear irradiation.

Further, in the laser processing apparatus 1, it is not essential to perform the turning irradiation in the third step. As shown in FIG. 26D, fixed-point irradiation may be performed in the third step on the bonded fusion zone. By performing fixed-point irradiation on the center of the workpiece W using the first laser beam L1 and the second laser beam L2, heat is gradually propagated from the center of the workpiece W toward the end portion. In this process, the two fusion zones can be made uniform.

In this way, it is sufficient for the third step that at least the processing of uniformizing the respective fusion zones formed in the first step and the second step can be implemented.

### (9-2) Operations in Laser Processing

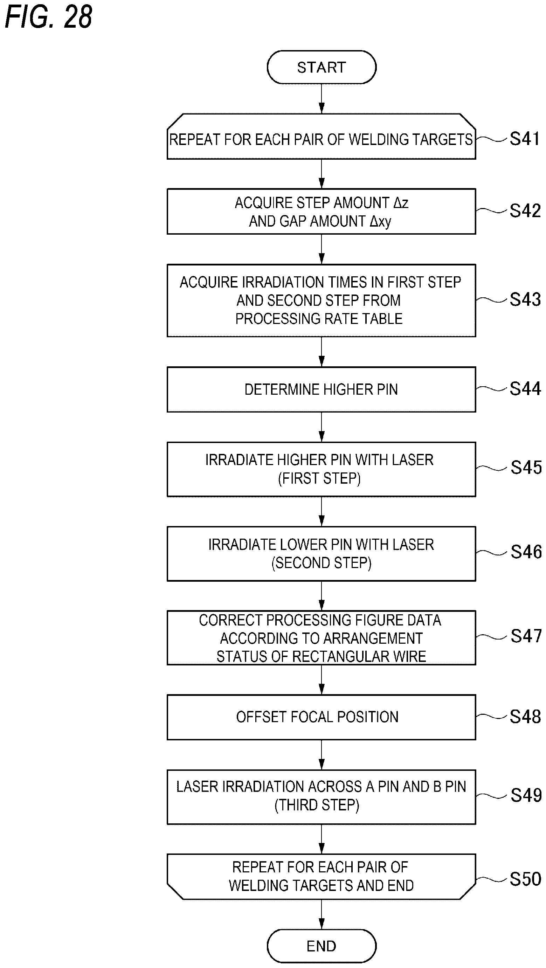

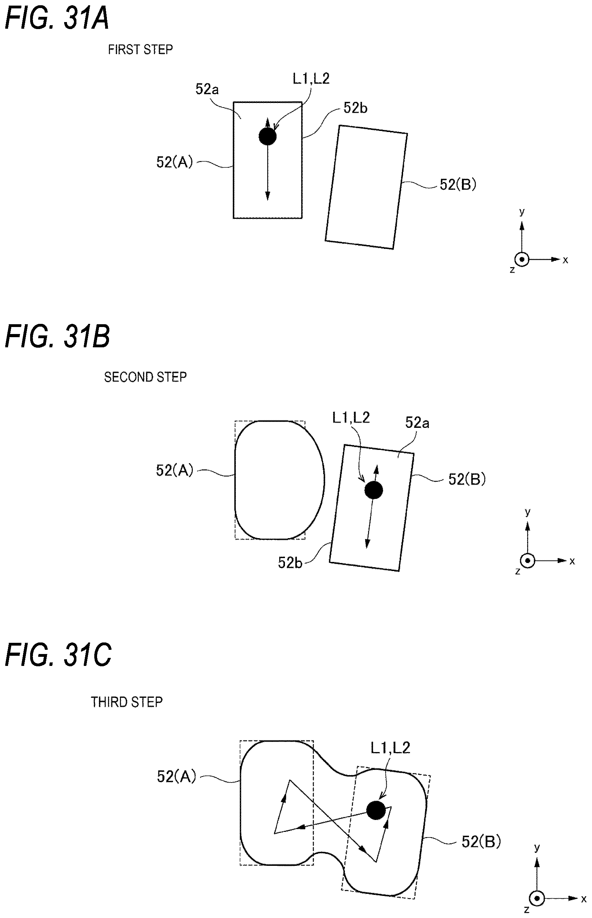

Next, the laser processing will be described in detail with reference to FIGS. 28 to 33.

FIG. 28 is a flowchart showing operations in the laser processing. The operations shown here are the details of step S19 of FIG. 15.

The laser processing apparatus 1 repeats the processing from step S41 to step S50 for each pair of the rectangular wires 52 that are welding targets.

The control unit 201 of the control PC 12 refers to the coordinate table 113 and acquires the step amount Δz and the gap amount Δxy of the pair currently being processed (step S42).

The control unit 201 refers to a processing rate table 1100 stored in the storage unit 202 and acquires a laser irradiation time corresponding to the step amount Δz and the gap amount Δxy acquired in step S42 (step S43).

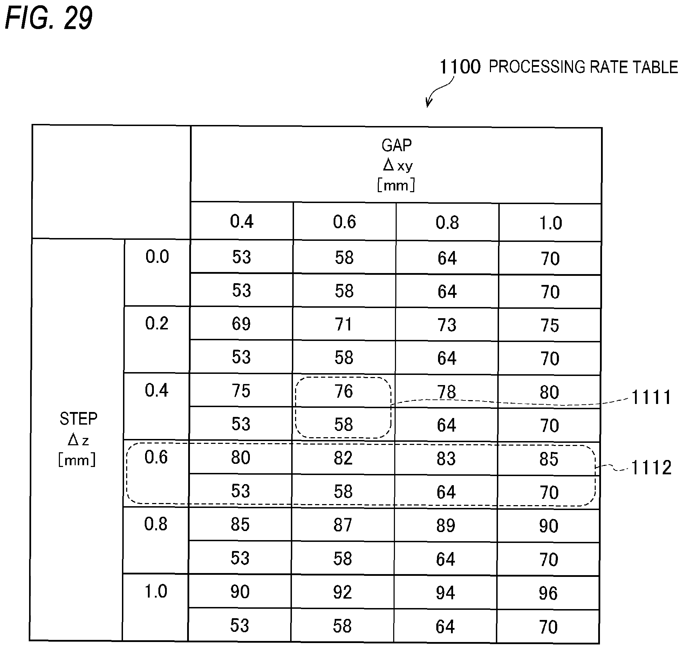

Here, the processing rate table 1100 used in the welding processing of the laser processing apparatus 1 will be described. FIG. 29 is a diagram showing a data configuration of the processing rate table 1100. The processing rate table 1100 is a table in which a processing rate (laser irradiation time) [msec] selectable according to the step amount Δz in the z direction and the gap amount Δxy in the xy plane of the pair of rectangular wires 52 that are welding targets is written.

For example, when the step (Δz) is 0.4 mm and the gap (Δxy) is 0.6 mm, a field 1111 is referred to. Two numerical values are described in the field 1111, a numerical value (76) in an upper row indicates a laser irradiation time of the higher rectangular wire 52, and a numerical value (58) in a lower row indicates a laser irradiation time of the lower rectangular wire 52.

As is clear from FIG. 29, the laser irradiation time of the higher rectangular wire 52 is set to be longer than the laser irradiation time of the lower rectangular wire 52. This is because a melting amount of the higher rectangular wire 52 is larger in order to match the heights of the higher rectangular wire 52 and the lower rectangular wire 52. Therefore, when the gap amount is the same, the laser irradiation time of the higher rectangular wire 52 increases as the step increases. Further, when the gap amount is large, a large melting amount is required to fill the gap, and thus the laser irradiation time increases as the gap amount increases.

In the present embodiment, the lower rectangular wire 52 is also irradiated with the laser beam. The irradiation time refers to a state in which four corners of the end surface 52a of the rectangular wire 52 are melted and a part of the molten metal starts to flow down into the gap. This time is a value determined depending on a size of the end surface 52a of the rectangular wire 52, a material composition of the rectangular wire 52, power of the first oscillator 2 and the second oscillator 3, the laser wavelength, and the like, and a value obtained by test processing can be used.

If the size of the end surface 52a is different, the irradiation time described in the processing rate table is naturally different. In FIG. 29, the irradiation time when the size of the end surface 52a is about 2.0 [mm] × 2.5 [mm] is shown as an example.

In step S43, the control unit 201 acquires the two numerical values written in the upper row and the lower row of the processing rate table 1100. The numerical value written in the upper row is the irradiation time in the first step, and the numerical value written in the lower row is the irradiation time in the second step.

Here, when the value of the step amount Δz acquired in step S42 does not match the items (0.0 mm, 0.2 mm, 0.4 mm, 0.6 mm, 0.8 mm, and 1.0 mm) in the processing rate table 1100, an item closer to the acquired value of the step amount Δz is selected. When the acquired step amount Δz is an intermediate value, an item with a numerical value larger than the acquired step amount Δz is selected. For example, when the step amount Δz acquired in step S42 is 0.5 mm, the control unit 201 selects a field 1112 of the processing rate table 1100. The same applies to the gap amount Δxy.

Subsequently, the control unit 201 of the control PC 12 determines which rectangular wire in the pair currently being processed is higher (step S44). The determination processing is performed by receiving information such as a number for identifying the higher rectangular wire from the controller 103 of the image processing unit 9, but may be performed by the control unit 201 reading the coordinate values from the coordinate table 113. The coordinate table 113 may be held in the image processing unit 9 or in the control PC 12.

Next, the laser processing apparatus 1 performs processing in the first step to irradiate the higher pin with the first laser beam L1 and the second laser beam L2 (step S45). Specifically, the control unit 201 of the control PC 12 transmits the laser irradiation time acquired in step S43 to the laser controller 14 to set the laser irradiation time for the first oscillator 2 and the second oscillator 3. Further, a control command is transmitted from the control unit 201 to the hybrid galvano scanner 10, and a laser irradiation command is transmitted from the PLC 13 to the first oscillator 2 and the second oscillator 3 via the laser controller 14. The first oscillator 2 and the second oscillator 3 receiving the laser irradiation command emit the first laser beam L1 and the second laser beam L2, respectively.

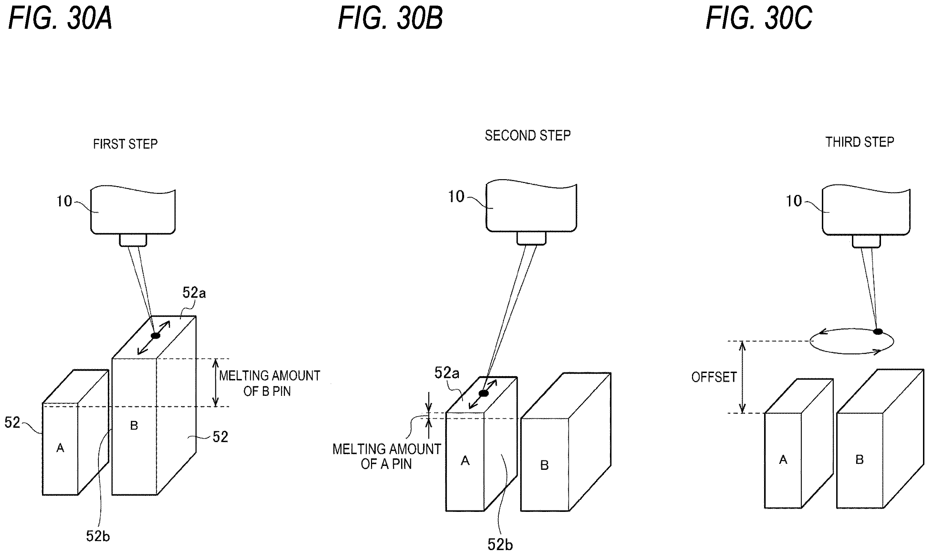

FIG. 30A, FIG. 31A, and FIG. 34A are schematic diagrams illustrating the processing in the first step. In the description referring to FIGS. 30A to 34D, the higher rectangular wire 52 is referred to as "B pin" and "52(B)", and the lower rectangular wire 52 is referred to as "A pin" and "52 (A)".

The scanning trajectory of the hybrid galvano scanner 10 in the first step is linear reciprocating irradiation. When the irradiation using the laser beam is performed at the processing rate (irradiation time) acquired in step S43, the B pin is melted to slightly below a height of the A pin, and a molten ball 55b is formed. Here, the linear reciprocating irradiation using the first laser beam L1 and the second laser beam L2 is performed on a predetermined position of the end surface 52a, but preferably, the linear reciprocating irradiation may be performed on a position of the end surface 52a close to a butting surface 52b (position close to the gap).

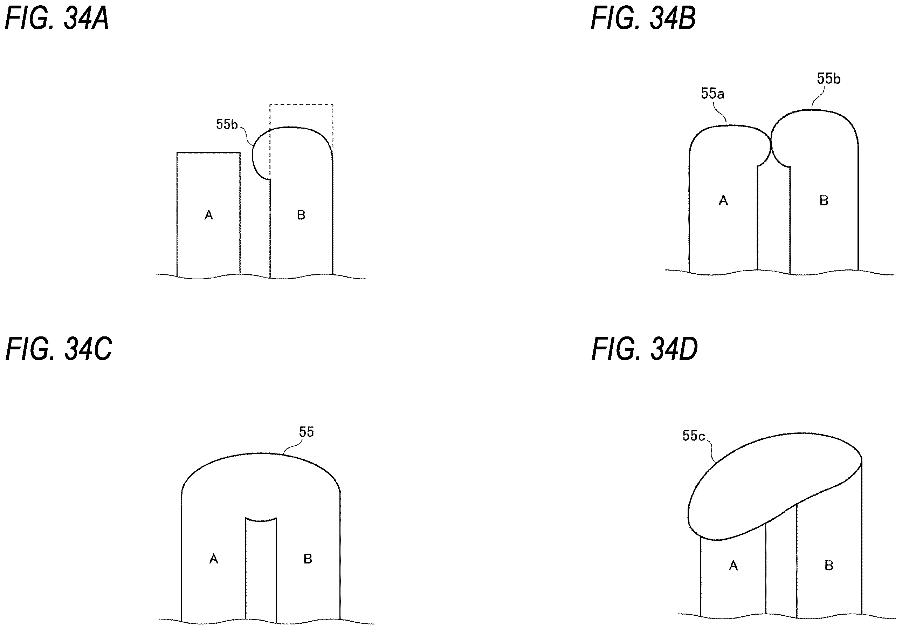

Subsequently, the laser processing apparatus 1 performs processing in the second step to irradiate the lower A pin with the laser beam (step S46). FIG. 30B, FIG. 31B, and FIG. 34B are schematic diagrams illustrating the processing in the second step. In the second step, the welding surface of the A pin is irradiated with the first laser beam L1 and the second laser beam L2. The scanning trajectory of the hybrid galvano scanner 10 at this time is the linear reciprocating irradiation as in the first step. When the irradiation using the laser beam is performed at the processing rate (irradiation time) acquired in step S43, the entire end surface 52a of the A pin is melted, and a molten ball 55a is formed on the A pin. As shown in FIG. 34B, due to a difference in laser irradiation time, the molten ball 55a is smaller than the molten ball 55b.

As in the first step, in the second step, the linear reciprocating irradiation may also be performed on a position of the end surface 52a close to the butting surface 52b (position close to the gap). In this way, by performing the irradiation using the laser beam on a position close to the inner side, the time until the fusion zones (the molten ball 55a and the molten ball 55b) are bonded can be shortened.

Next, the control unit 201 of the control PC 12 corrects the processing figure data 1100 stored in the storage unit 202 according to an arrangement status of the A pin and the B pin (step S47).

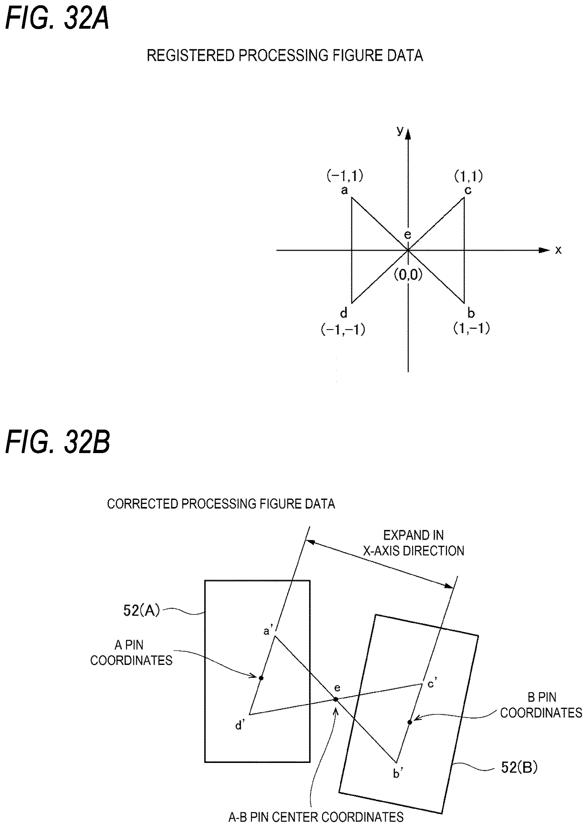

FIG. 32A is a processing image represented by the processing figure data 1100 stored in the storage unit 202, and is a figure-eight shape obtained by connecting a point a, a point b, a point c, and a point d with an origin (0, 0) of an xy orthogonal coordinate system as a center e. FIG. 32B is a processing image represented by processing figure data obtained by correcting the processing figure data 110 according to the actual arrangement status of the A pin and the B pin.

A method of correcting the processing figure data 1100 will be described. The control unit 201 of the control PC 12 matches the center e of the processing figure data 1100 with the A-B pin coordinates. Then, the processing figure data 1100 is rotated and extended in the x-axis direction so as to match a midpoint of a straight line connecting the point a and the point d of the processing figure data 1100 with the A pin coordinates and match a midpoint of a straight line connecting the point c and the point b with the B pin coordinates. In this way, the corrected processing figure data has a figure-eight shape connecting a point a', a point b', a point c', and a point d' with the A-B pin coordinates as the center e. The control unit 201 transmits the corrected processing figure data to the hybrid galvano scanner 10.

Next, prior to the processing in the third step, a focal position of the laser processing apparatus 1 is offset to a height of the B pin before melting (step S48). Then, after the two molten balls 55a and 55b are bonded, the laser processing apparatus 1 performs the processing in the third step to irradiate the first laser beam L1 and the second laser beam L2 across the A pin and the B pin using the corrected processing figure data (step S48). In the third step, the elliptical, circular, or figure-eight-shaped turning irradiation is performed across the A pin and the B pin.

In the third step, the laser processing apparatus 1 applies heat to the A pin and the B pin again to make the fusion zones uniform, and a laterally symmetrical clean molten ball is formed. The processing in the third step may be continued until the molten ball reaches a desired size.

In this way, by performing the processing in the third step after the two molten balls 55a and 55b are bonded, escape of the laser beam from the gap and damage to the lower part of the rectangular wire are prevented. Further, as shown in FIG. 34C, the A pin and the B pin are bonded by a molten ball 55, but when energy of the irradiated laser beam is strong, there is a possibility that the laser beam penetrates the molten ball 55 and damages the lower part of the rectangular wire. Therefore, in the third step, an energy density of the laser beam applied to the molten ball 55 is reduced by offsetting a focal position of the laser beam upward. Accordingly, the laser beam is prevented from penetrating the molten ball 55. As an offset value, a value written in the coordinate table 113 is used. As an example, in the laser processing apparatus 1, a position of the hybrid galvano scanner 10 is offset to a height of the higher pin before welding, using the z-axis stage 11z.

When the welding processing of all the pairs of rectangular wires in the workpiece W is completed, the laser processing apparatus 1 ends the welding processing on the workpiece W.

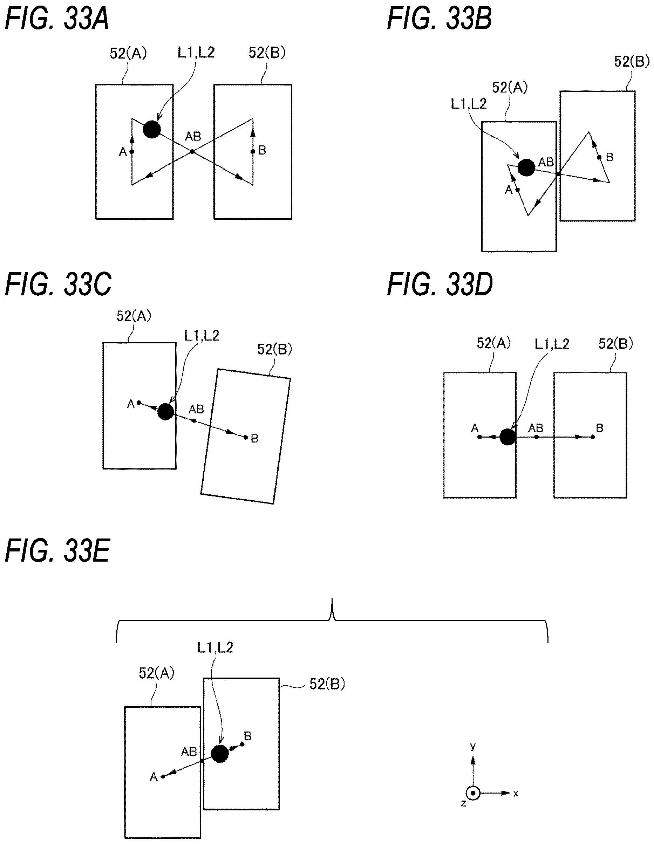

A modification of the third step will be described with reference to FIGS. 33A to 33E. FIG. 33A shows a scanning trajectory in the third step when there is a gap in the x-axis direction. FIG. 33B shows a scanning trajectory in the third step when there is a positional displacement in the y-axis direction.

In either case, the center point of the registered processing figure data 1100 (figure-eight shape) matches the A-B pin coordinates, and then the processing figure data 1100 is rotated and/or expanded/contracted to pass through the A pin coordinates and the B pin coordinates. Accordingly, the irradiation using a laser beam can be performed along scanning trajectories corresponding to various arrangement statuses of the A pin and the B pin.

Although the laser scanning trajectory in the third step has a figure-eight shape, but this is merely an example, and is not limited to the figure-eight shape. It is sufficient for the third step that, in a state where the fusion zones of the A pin and the B pin formed in the first step and the second step are bonded to each other, at least the processing of stirring the fusion zones to make the fusion zones uniform by the scanning trajectory passing through a vicinity of a center of the bonded fusion zones can be implemented.

For example, the scanning trajectory in the third step may be linear reciprocating irradiation across the A pin and the B pin as shown in FIGS. 33C, 33D and 33E. In this case, the processing figure data indicating a straight line is registered in advance in the storage unit 202 of the control PC 12, and the control unit 201 corrects the registered processing figure data according to the arrangement status of each pair. Specifically, a center point of the straight line matches the A-B pin coordinates, and the straight line is rotated in the θ direction or expanded/contracted in the x-axis direction to match a start point and an end point of the straight line with the A pin coordinates and the B pin coordinates respectively. Accordingly, the linear reciprocating irradiation corresponding to the arrangement status of each pair can be implemented.

When there is a gap or a positional displacement between the pair of rectangular wires 52 in the x-axis direction, the y-axis direction, and the θ-rotation direction, it is assumed that an area of the fusion zone bonded by the irradiation in the first step and the second step reduces. Even in a case where the area of the fusion zone reduces as described above, escape of the laser beam from the gap is prevented by performing the irradiation using the laser beam along the scanning trajectory passing through a vicinity of the center of the fusion zone. Accordingly, the occurrence of carbonization and the insulation failure due to the irradiation of the coating portion at the lower part of the rectangular conductor with the laser beam can be prevented.

### (10) Advantages of Embodiment

Further, the laser processing apparatus 1 performs scanning-irradiation at a high speed using the first laser beam L1 having a wavelength of 300 nm to 600 nm and a high optical absorptance with respect to copper, so as to form a molten pool in the workpiece W. Then, by irradiating an inside of the molten pool to be formed with the second laser beam L2 having a small focused beam diameter and a high energy density, a locally deep penetration depth is realized in the molten pool, and formation of the molten pool is promoted.

Further, the laser processing apparatus 1 can effectively apply heat to the workpiece W to melt the workpiece W by using the first laser beam L1 having a larger focused beam diameter, as compared with a welding apparatus in the related art.

Further, the laser processing apparatus 1 performs scanning-irradiation using the first laser beam L1 and the second laser beam L2 at a high speed instead of the fixed-point irradiation, and thus a flow in the molten pool is generated. Bubbles generated from the molten pool reaching a high temperature are discharged to an outside. Thus, porosity can be prevented. Further, it is possible to prevent local concentration of heat in the molten pool, stabilize the molten pool, and reduce the spatters. Since the porosity and the spatters cause welding defects such as poor bonding, occurrence of the welding defects can be prevented according to the laser processing apparatus 1 and the welding method using the apparatus according to the present embodiment.

Further, as described above, the occurrence of laser escape from the gap 53 occurring when the rectangular wires are butted can be prevented, and the carbonization, the insulation failure, and the like of the coating portion occurring along with the laser escape can be prevented.

In tip end butting welding of two rectangular wires having a step therebetween, the laser processing apparatus 1 first melts the higher rectangular wire in the first step, and then melts the lower rectangular wire in the second step. At this time, a melting amount in the first step is set to be larger than a melting amount in the second step. Accordingly, the step can be eliminated, and generation of the spatters can be prevented. If the melting amount in the first step and the melting amount in the second step are set to be equal to each other (for example, in a case of melting in such a minimum time that the two molten balls are bonded to each other), a molten ball 55c inclined as shown in (d) of FIG. 34 is formed. In this case, both the welding quality and the welding strength are insufficient. Meanwhile, by setting the melting amount in the first step to be larger than the melting amount in the second step, the laser processing apparatus 1 of the present embodiment can form the molten ball 55 which is uniform in the right and left as shown in (c) of FIG. 34, and both the welding quality and the welding strength are good.

Further, the laser processing apparatus 1 includes the image processing unit 9, acquires the position information (coordinate values) of each pin in the stator 50 by the image processing unit 9, and adjusts the laser irradiation position using the acquired position information. In particular, the laser processing apparatus 1 performs irradiation using the laser beam along the scanning trajectory passing through A-B pin center coordinates in the processing of the third step, and thus escape of the laser beam from a position of the gap or the positional displacement to the lower part of the rectangular wire is prevented. Accordingly, the carbonization of the coating portion can be prevented and good welding quality and welding strength can be ensured.

### <Embodiment 2>

Next, a laser processing apparatus according to Embodiment 2 will be described.

In Embodiment 1 described above, regarding the workpiece W that is a welding target, the heights of the rectangular conductors constituting the segment coils are substantially uniform in the entire motor. However, depending on a type of the motor, a rectangular conductor that is larger in height and for connection to a lead wire may exist in a vicinity of the rectangular conductor constituting the segment coil.

In a case where a rectangular conductor that is larger in height stands in the vicinity of the rectangular conductors that are welding targets, when a molten ball is formed on the end surface of the rectangular conductor that is a welding target, the laser beam may be reflected by the molten ball, and the coating portion of the rectangular conductor that is larger in height may be irradiated with the reflected light. Thus, there is a possibility that the coating portion is damaged by heat and cannot be used.

Therefore, the laser processing apparatus according to Embodiment 2 provides a method of manufacturing a stator in which welding processing is performed using an appropriate welding pattern depending on a peripheral situation of the rectangular conductors that are welding targets, in order to prevent, even when a rectangular conductor that is larger in height stands in a vicinity of the rectangular conductors that are welding targets, a situation in which a coating portion of the higher rectangular conductor is damaged by heat and cannot be used.

### (1) Configuration of Laser Processing Apparatus

As in Embodiment 1, the laser processing apparatus of Embodiment 2 is a welding apparatus that performs welding processing of a workpiece by irradiating the workpiece W with a laser beam and thermally converting energy of the laser beam. An overall configuration of the system is the same as that of the laser processing apparatus 1 shown in FIGS. 1 and 2.

Here, a control PC 22 different from that of Embodiment 1 will be mainly described.

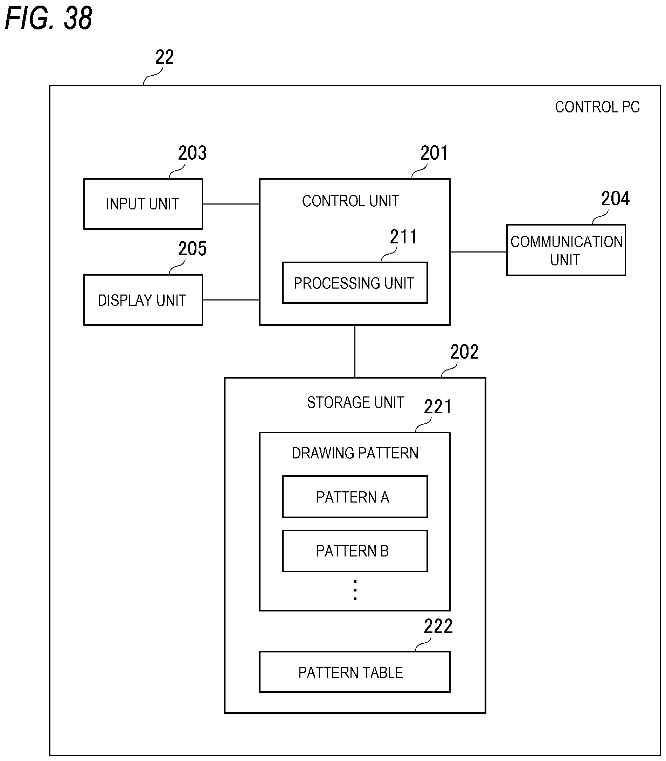

As shown in FIG. 38, the control PC 22 includes the control unit 201, the storage unit 202, the input unit 203, the communication unit 204, and the display unit 205.

A computer program for controlling the laser processing apparatus and various types of data are stored in the storage unit 202. In particular, the storage unit 202 stores a drawing pattern 121 and a pattern table 122, which are features of the present embodiment, and the drawing pattern 121 and the pattern table 122 are data used for the welding processing on the workpiece W. Details will be described later.

A processing unit 211 of the control unit 201 controls the first oscillator 2, the second oscillator 3, the hybrid galvano scanner 10, the PLC 13, the laser controller 14, and the like to perform the welding processing on the workpiece W, by loading the computer program stored in the storage unit 202 into the RAM serving as the working memory and executing the computer program.

### (2) Regarding Workpiece W

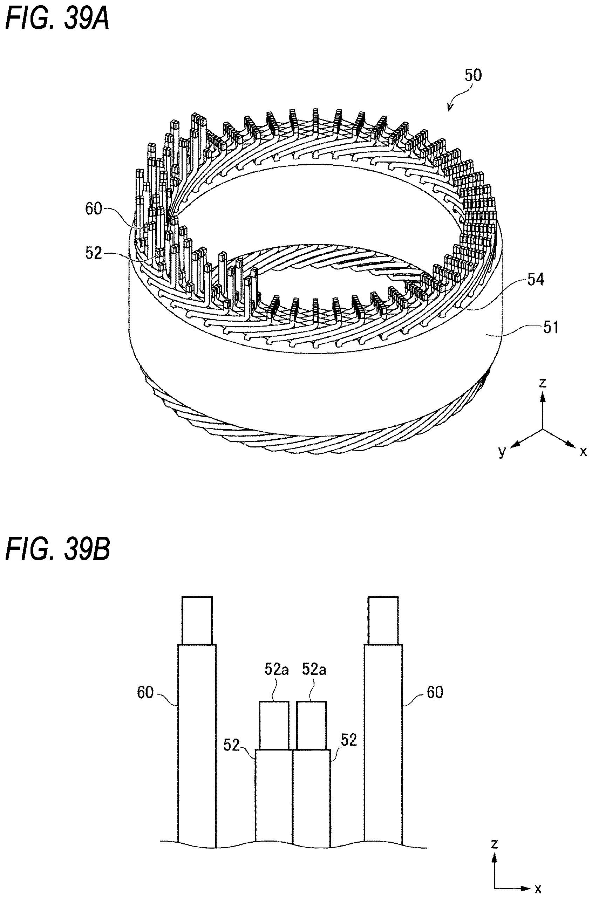

Next, the stator 50 as the workpiece W will be described with reference to FIGS. 39A and 39B. FIG. 39A is a perspective view showing a schematic configuration of the stator 50 that is a stator of a motor of an electric automobile or the like. As shown in the figure, the stator 50 includes the substantially cylindrical stator core 51 having a plurality of slots 54 arranged in a circumferential direction, the plurality of rectangular conductors 52 inserted into the slots 54 to form the segment coils, and a plurality of rectangular conductors 60 inserted into the slots 54 to be used for energization with an outside.

Each of the rectangular conductor 52 and the rectangular conductor 60 is an electric wires having a cross section of a rectangular shape, that is, a rectangular wire. Each of the rectangular conductor 52 and the rectangular conductor 60 is usually made of pure copper, but may be made of a metal material having high conductivity, such as an alloy containing copper as a main component or an alloy containing copper and aluminum. Although an end portion of each of the rectangular conductor 52 and the rectangular conductor 60 protrudes from the upper end portion of the stator core 51, an amount of protrusion of the rectangular conductor 60 is larger than an amount of protrusion of the rectangular conductor 52, that is, the rectangular conductor 60 is larger in height than the rectangular conductor 52. Each of the rectangular conductor 52 and the rectangular conductor 60 is covered with an insulating film, but the insulating film is removed from the end portion for electrical connection.

FIG. 39B is an enlarged view showing an example of an arrangement of the rectangular conductors 52 and the rectangular conductors 60. In this example, two rectangular conductors 52 that are welding targets are arranged to be sandwiched between two rectangular conductors 60. The laser processing apparatus performs welding processing by irradiating the end surfaces 52a of the two rectangular conductors 52 with a laser beam in a state where the end surfaces 52a are butted with each other. At this time, as shown in FIG. 39B, when the rectangular conductor 60 that is larger in height is close to the rectangular conductors 52 that are welding targets, a problem due to reflected light may occur as follows.

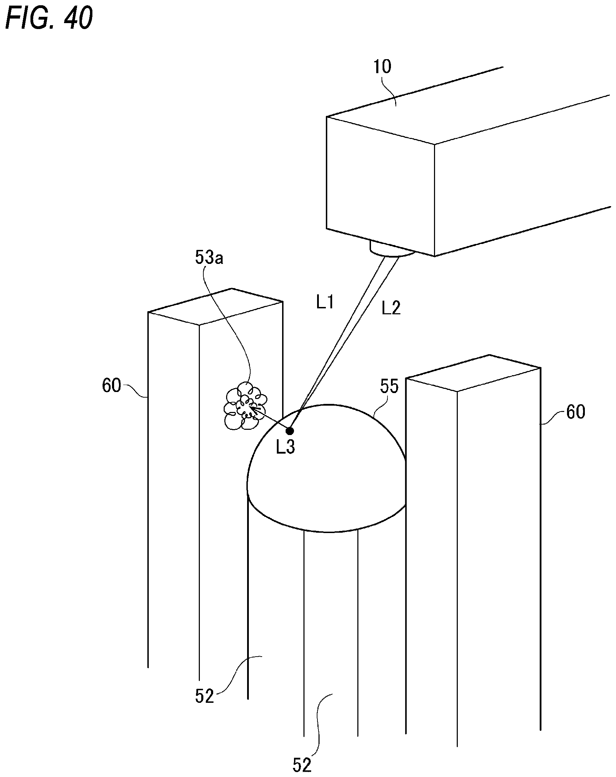

That is, as shown in FIG. 40, when the two rectangular conductors 52 are welded while the hybrid galvano scanner 10 scans the first laser beam L1 and the second laser beam L2, a hemispherical molten ball 55 is formed on a welding surface (a region in which the two end surfaces 52a are combined). The first laser beam L1 and the second laser beam L2 are reflected by the molten ball 55 during a period from formation of the molten ball 55 to an end of the welding processing. When the adjacent rectangular conductor 60 is irradiated with the reflected light L3 from the molten ball 55, there is a possibility that the coating portion is carbonized and the rectangular conductor 60 cannot be used.

In view of such a problem, the laser processing apparatus performs welding processing while devising a scanning trajectory of the laser beam, that is, a drawing pattern of the hybrid galvano scanner 10 to prevent the adjacent rectangular conductor 60 from being irradiated with the reflected light L3 from the molten ball 55.

Of the first laser beam L1 and the second laser beam L2 with which the molten ball 55 is irradiated, the second laser beam L2 (IR laser) mainly gives damage to the coating portion by reflected light. An absorptance of the IR laser with respect to copper is low at about 6%, and the remaining 94% is reflected without being absorbed. Further, the second laser beam L2 reflected by the molten ball 55 is diffused, but the fiber laser has a characteristic of being high in beam quality and being less likely to diffuse, and the coating portion is more likely to be damaged by the reflection. Meanwhile, reflectance of the first laser beam L1 (blue laser) is low because the absorptance with respect to copper is high. Further, since the first laser beam L1 used in the present embodiment is low in output and widely diffused after reflection, and a power density of the reflected light is extremely low, and the like, damage due to the reflection of the first laser beam L1 is small.

### (3) Regarding Setting of Irradiation-Prohibited Region and Drawing Pattern

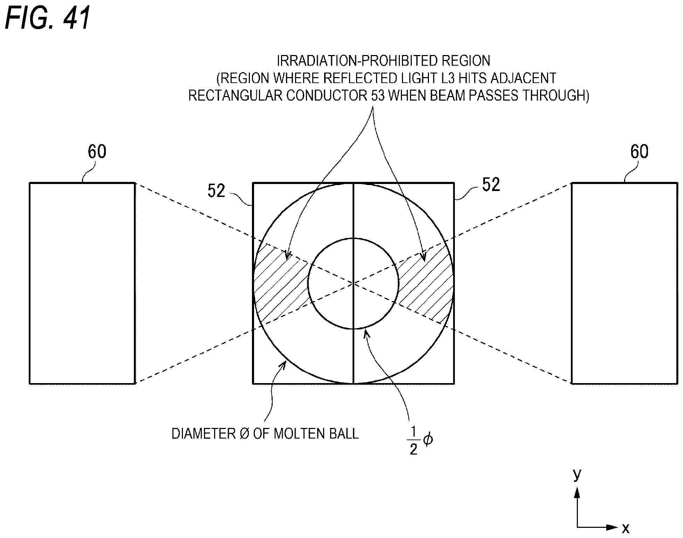

Here, the drawing pattern used in the welding processing of the present embodiment will be described. First, an irradiation-prohibited region will be described with reference to FIG. 41.

Aregion affected by the molten ball 55 depends on a distance between the rectangular conductor 52 that is a welding target and the rectangular conductor 60 adjacent thereto, a size of the rectangular conductor 60, a size of the molten ball, a curved shape of the molten ball, and the like. However, the molten ball 55 grows together with passage of the irradiation time, and the size thereof is not constant. In addition, the molten ball 55 is stirred to swing due to the laser irradiation while maintaining a state of being raised on the welding surface due to a surface tension. Therefore, a shape during the processing is not constant.

Therefore, in the present embodiment, as shown in FIG. 41, a region indicated by a hatched portion in the figure is defined as the irradiation-prohibited region based on the distance between the rectangular conductor 52 that is a welding target and the rectangular conductor 60 adjacent thereto, the size of the rectangular conductor 60, and the size of the welding surface (a region of the two end surfaces 52a). The irradiation-prohibited region is a region where, when the laser beam passes therethrough, the reflected light L3 hits the adjacent rectangular conductor 60. Therefore, when the irradiation using the laser beam is performed in such a drawing pattern that the laser beam does not pass through the irradiation-prohibited region on the welding surface, the rectangular conductor 60 is not irradiated with the reflected light L3.

The irradiation-prohibited region may be determined using at least one of the distance between the rectangular conductor 52 and the rectangular conductor 60 adjacent thereto, the size of the rectangular conductor 60, the size of the molten ball 55, the curved shape of the molten ball 55, and an area of the end surface 52a.

The laser processing apparatus according to the present embodiment performs welding processing while switching the drawing pattern according to a peripheral situation of the rectangular conductors 52 that are welding targets. That is, when the rectangular conductor 60 is adjacent to the rectangular conductors 52 that are welding targets, the welding processing is performed using a drawing pattern that does not pass through the irradiation-prohibited region, when the rectangular conductor 60 is not adjacent, the welding processing is performed using a drawing pattern with highest time efficiency, and thus a tact time of the entire stator 50 is shortened.

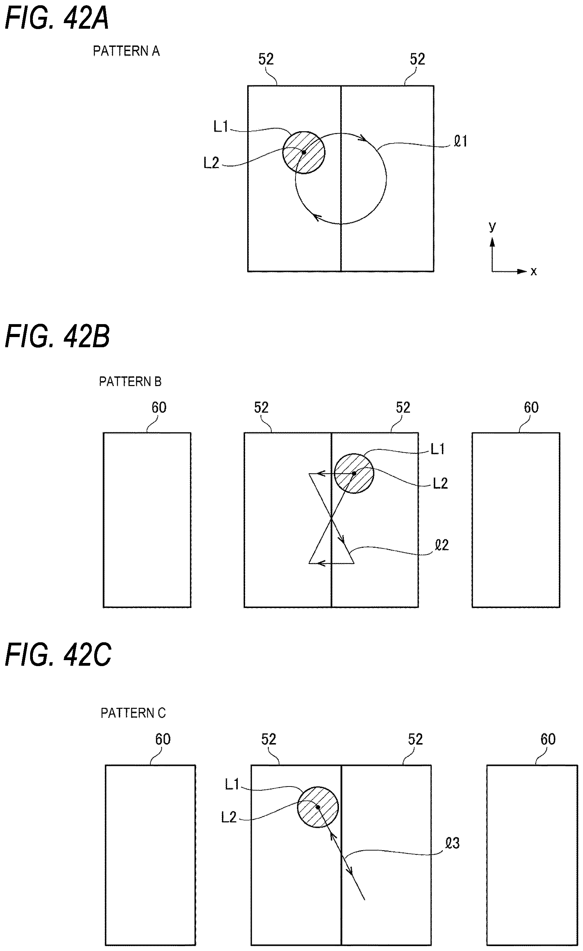

The drawing pattern 121 stored in the storage unit 202 includes a plurality of drawing patterns, and includes, as an example, a pattern A, a pattern B, and a pattern C, as shown in FIGS. 42A to 42C. The drawing pattern 121 may be input by the user by operating the input unit 203 in a state where a UI screen for inputting the drawing pattern is displayed on the display unit 205, or may be stored in the storage unit 202 by reading information stored in a portable medium.

The pattern A shown in FIG. 42A is a drawing pattern to be used when the rectangular conductor 60 is not adjacent to the two rectangular conductors 52 that are welding targets. In the pattern A, as indicated by a trajectory l1, turning irradiation using the first laser beam L1 and the second laser beam L2 is performed in a predetermined turning diameter across the two rectangular conductors 52. Since the turning irradiation for the pattern A is high in melting efficiency, the welding processing can be performed faster than that of the patterns B and C to be described later.

The pattern B shown in FIG. 42B is a drawing pattern to be used when the rectangular conductor 60 is adjacent to the rectangular conductors 52 that are welding targets. In the pattern B, as indicated by a trajectory l2, irradiation using the first laser beam L1 and the second laser beam L2 is performed along a figure-eight-shaped trajectory that does not pass through the irradiation-prohibited region.

The pattern C shown in FIG. 42C is a modification of the pattern B, and is a drawing pattern to be used when the rectangular conductor 60 is adjacent to the rectangular conductors 52 that are welding targets, similar to the pattern B. In the pattern C, as indicated by a trajectory l3, reciprocating irradiation using the first laser beam L1 and the second laser beam L2 is performed along an oblique direction that does not pass through the irradiation-prohibited region.

The pattern C is a trajectory connecting two points, and is therefore a trajectory that can easily adapt to a peripheral situation of the fusion zone. Further, the pattern C is a linear pattern, thus having an advantage that a difficulty level of generating the drawing pattern is low. Meanwhile, since melting takes time, it is expected that a tact time is extended. Further, there is a possibility that left-right balance of the molten ball 55 formed on the welding surface is deteriorated.

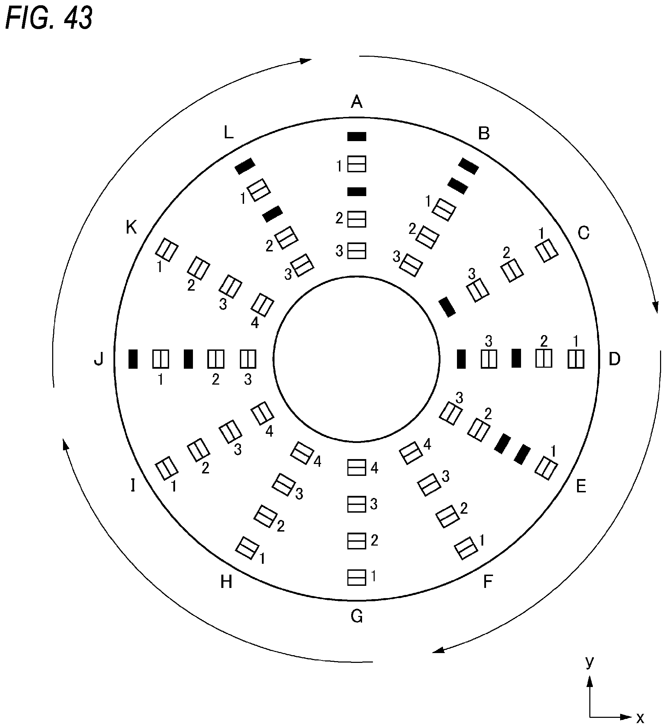

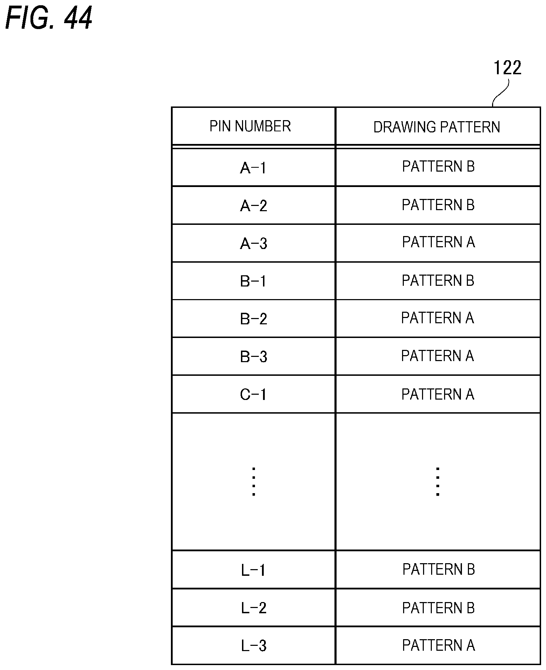

The laser processing apparatus performs welding processing on the workpiece W while switching between the pattern A and the pattern B (the pattern C may be used instead of the pattern B), and at this time, the pattern table 122 stored in the storage unit 202 is used. Here, the pattern table 122 will be described with reference to FIGS. 43 and 44.

FIG. 43 shows a stator as an example of the workpiece W in a simplified manner. Two white rectangles forming a pair represent the rectangular conductors 52 that are welding targets, and black rectangles represent the rectangular conductors 60 which are higher pins. A table describing what drawing pattern is used to weld the rectangular conductors 52 that are welding targets is the pattern table 122 shown in FIG. 44.

The pattern table 122 describes drawing patterns each of which is in one-to-one correspondence to the workpiece W and corresponds to the arrangement of the rectangular conductors of the workpiece W. The pattern table 122 is stored in the storage unit 202 before the welding processing. Similar to the drawing pattern 121, the pattern table 122 may be input by the user by operating the input unit 203 in a state where a UI screen for inputting the pattern table 122 is displayed on the display unit 205, may be stored in the storage unit 202 by reading information stored in a portable medium, or may be received via a network and stored in the storage unit 202.

A pin number is used as position information indicating a position of the rectangular conductors 52 that are welding targets. As illustrated in FIG. 43, the pin number is a combination of an alphabet arranged in the circumferential direction of the stator and a number arranged in the radial direction of the stator. As shown in FIG. 44, the pattern table 122 describes the pin number and the drawing pattern in association with each other.

In the present embodiment, the pattern B is used when the rectangular conductors 52 that are welding targets are adjacent to one or more rectangular conductors 60 that are larger in height, and the pattern A is used in other cases. Specifically, a pair of the rectangular conductors 52 identified by a pin number "A-1" is adjacent to two rectangular conductors 60, and is welded using the pattern B. A pair of the rectangular conductors 52 identified by a pin number "A-2" is adjacent to one rectangular conductor 60, and is welded using the pattern B. Since a pair of the rectangular conductors 52 identified by a pin number "A-3" is not adjacent to the rectangular conductor 60, the welding processing is performed using the pattern A.

### (3) Operation of Laser Processing Apparatus 1

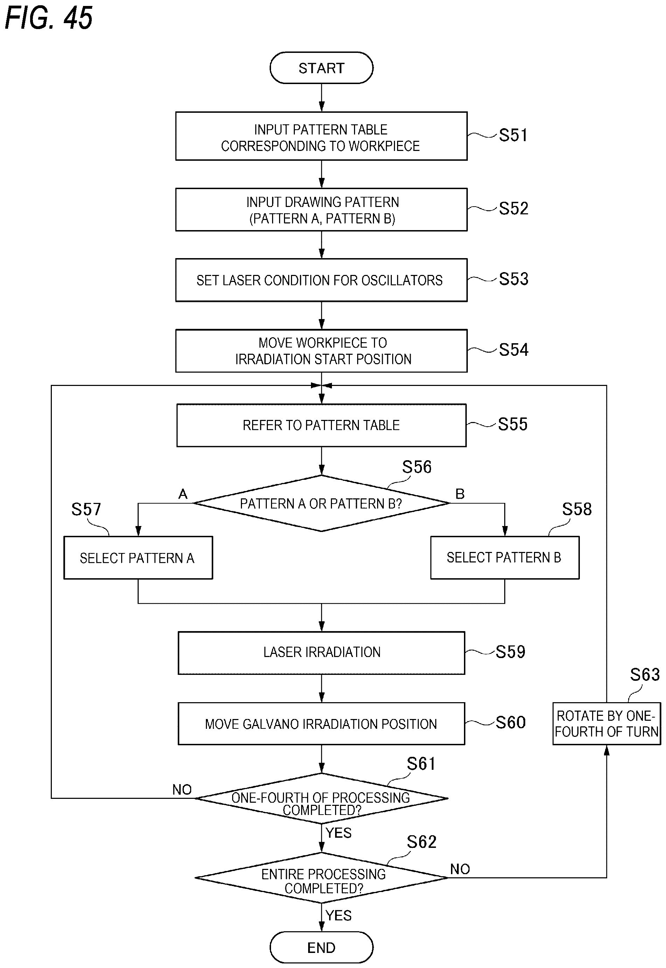

Here, operations of the laser processing apparatus of the present embodiment will be described using a flowchart of FIG. 45. First, the operations are started in a state where the workpiece W is set on the workpiece setting stage 11.

A pattern table corresponding to the workpiece W set on the workpiece setting stage 22 is input via the input unit 203 of the control PC 22 (step S51). Next, a drawing pattern (the pattern A, the pattern B, and the like) necessary for welding the workpiece W is input via the input unit 203 of the control PC 22 (step S52). An order of step S51 and step S52 may be reversed.

Next, various parameters of the first oscillator 2 and the second oscillator 3 are transmitted from the control PC 22 to the laser controller 14, and the laser controller 14 sets the parameters for the respective oscillators (step S53). Further, the drawing pattern (the pattern A, the pattern B, or the like) used in the welding processing is transferred from the control PC 22 to the hybrid galvano scanner 10.

Subsequently, the workpiece setting stage 11 is operated to move the workpiece W such that the hybrid galvano scanner 10 and a center of a covering range of the hybrid galvano scanner 10 on the workpiece W face each other (step S54). Next, the irradiation position of the hybrid galvano scanner 10 is matched with the rectangular conductors 52 written in a first row of the pattern table. The steps up to here are preparation for the welding processing, and hereinafter, the welding processing on the workpiece W is started.

The processing unit 211 of the control PC 22 refers to the pattern table stored in the storage unit 202 and determines whether the drawing pattern corresponding to the rectangular conductors 52 that are current welding targets is the pattern A or the pattern B (step S56). The processing unit 211 transmits a processing operation command including information for identifying the determined processing pattern to the hybrid galvano scanner 10.

The hybrid galvano scanner 10 that receives the processing operation command selects the pattern A in a case of the pattern A, that is, in a case where the rectangular conductor 60 that is larger in height is not adjacent to a vicinity of the rectangular conductors 52 (step S57). In a case of the pattern B, that is, in a case where the rectangular conductor 60 that is larger in height is adjacent to the vicinity of the rectangular conductors 52, the hybrid galvano scanner 10 selects the pattern B (step S58).

Thereafter, the laser irradiation command is transmitted from the PLC 13 to the first oscillator 2 and the second oscillator 3. The first oscillator 2 and the second oscillator 3 receiving the laser irradiation command emit the first laser beam L1 and the second laser beam L2, respectively (step S59). The laser irradiation in step S59 is laser irradiation of three steps including the first step, the second step, and the third step as described in Embodiment 1. That is, in the laser irradiation in step S59, the control described in Embodiment 1 may be performed according to the arrangement status (the gap, the positional displacement, the step, or the like) of the pair of rectangular conductors 52 that are welding targets.

The hybrid galvano scanner 10 matches the irradiation position with the rectangular conductors 52 that are next welding targets (step S60).

In the present embodiment, it is assumed that an operation range of the hybrid galvano scanner 10 is about one-fourth of the size of the workpiece W. Therefore, the laser processing apparatus performs welding processing on the entire workpiece W while rotating he workpiece W one-fourth of a turn every time by the θ-axis stage 11θ.

After step S60, the processing unit 211 determines whether one-fourth of the processing on the workpiece W is completed (step S61). When one-fourth of the processing is not completed (NO in step S61), the processing returns to step S55 and continues.

When one-fourth of the processing on the workpiece W is completed (YES in step S61), the processing unit 211 determines whether the entire processing is completed (step S62). When the entire processing on the workpiece W is not completed (NO in step S62), the processing unit 211 instructs the θ-axis stage 11θ via the PLC 13 to rotate the workpiece W by one-fourth of a turn. The θ-axis stage 11θ drives a rotation mechanism to rotate the stage by one-fourth of a turn (step S63). Thereafter, the processing returns to step S55 and continues.

When the entire processing on the workpiece W is completed (YES in step S62), the laser processing apparatus ends the welding processing on the workpiece W.

### (4) Advantages of Embodiment 2

As described above, the laser processing apparatus according to the present embodiment performs welding processing on the entire stator 50 while switching the drawing pattern according to a situation in a vicinity of the rectangular conductors 52 that are welding targets. Specifically, when the rectangular conductor 60 that is a higher pin exists in the vicinity, irradiation using the laser beam is performed using a drawing pattern which is not affected by the reflected light from the molten ball, and when the rectangular conductor 60 is not present in the vicinity, irradiation using the laser beam is performed using a drawing pattern with highest melting efficiency. Accordingly, the tact time can be shortened while avoiding damage caused by the reflected light.

Further, when the workpiece W is changed to a stator having a pin arrangement different from that of the stator 50, a pattern table and a drawing pattern corresponding to the stator after change may be input to the control PC 21. Accordingly, regardless of the pin arrangement of the stator, the tact time can be shortened while avoiding the damage caused by the reflected light.

### (5) Modification

In Embodiment 2 described above, the drawing pattern and the pattern table corresponding to the pin arrangement of the workpiece W are stored in the storage unit 202 in advance via the input unit 203 of the control PC 22.

Here, a modification in which the image processing unit 9 analyzes the pin arrangement of the workpiece W and generates the drawing pattern and the pattern table will be described. As described in Embodiment 1, the image processing unit 9 has a function of imaging the workpiece W placed on the workpiece setting stage 11 and analyzing the pin arrangement of the workpiece W. That is, the image processing unit 9 can determine whether the rectangular conductor 60 that is larger in height is adjacent to the vicinity of the rectangular conductors 52 that are welding targets. The image processing unit 9 transmits the analysis result to the control PC.

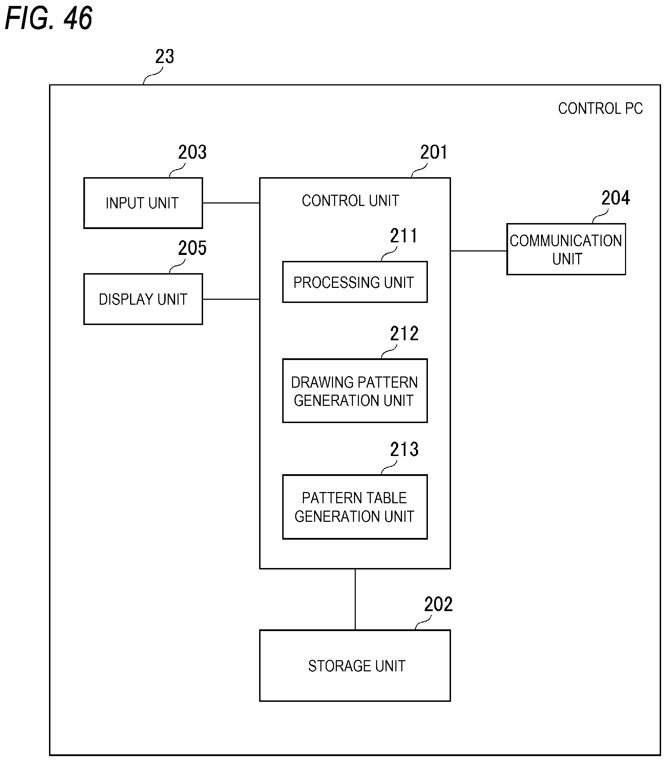

FIG. 46 is a functional block diagram showing a functional configuration of a control PC 23 according to the modification. A difference from the control PC 22 (FIG. 38) is that the control unit 201 includes a drawing pattern generation unit 212 and a pattern table generation unit 213 in addition to the processing unit 211.

The processing unit 211 is a functional block that controls the welding processing on the workpiece W, the drawing pattern generation unit 212 is a functional block that generates a drawing pattern using the analysis result from the image processing unit 9, and the pattern table generation unit 213 is a functional block that generates a pattern table using the analysis result from the image processing unit 9. These functional blocks are specifically implemented by computer programs.

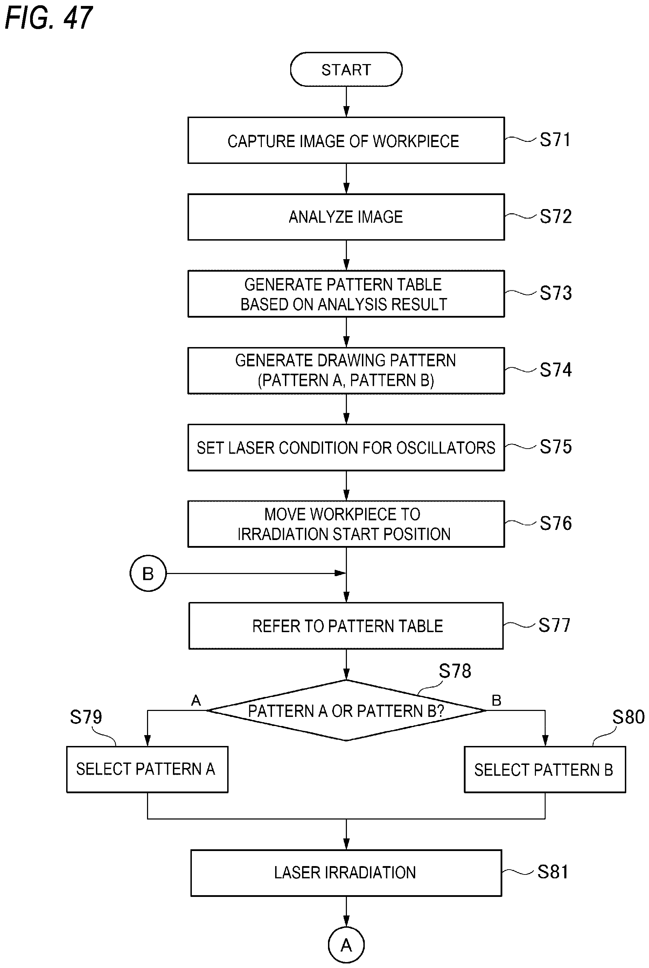

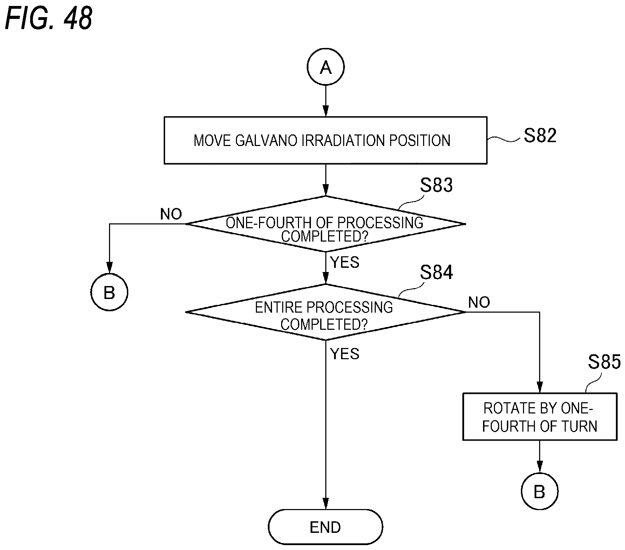

Here, operations of the laser processing apparatus according to the modification will be described with reference to flowcharts of FIGS. 47 and 48. First, the operations are started in a state where the workpiece W is set on the workpiece setting stage 11.

The image processing unit 9 captures an image of the workpiece W (step S71). The image processing unit 9 analyzes the pin arrangement of the workpiece W based on the image captured in step S71 (step S72), and transmits the analysis result to the control PC 23. The analysis result may be transmitted to the control PC 23 in a form of the coordinate table 113.

The pattern table generation unit 213 of the control PC 23 uses the analysis result of the workpiece W from the image processing unit 9 to generate a pattern table in which a pin number indicating the position of the pair of rectangular conductors 52 that are welding targets is associated with a drawing pattern (step S73). The pattern table generation unit 213 stores the generated pattern table in the storage unit 202.

Next, the drawing pattern generation unit 212 generates a drawing pattern using the analysis result of the workpiece W from the image processing unit 9 (step S74). Specifically, as described with reference to FIG. 41, the irradiation-prohibited region is defined based on the positional relationship between the rectangular conductors 52 that are welding targets and the rectangular conductor 60 that is larger in height, the size of each pin, and the like, and the drawing pattern (the pattern B, the pattern C, and the like) excluding the irradiation-prohibited region is generated. Further, the drawing pattern generation unit 212 generates the pattern A which is a drawing pattern to be used when the rectangular conductor 60 that is larger in height is not adjacent to the rectangular conductors 52. The drawing pattern generation unit 212 transfers the generated drawing pattern to the hybrid galvano scanner 10. An order of step S73 and step S74 may be reversed.

Next, various parameters of the first oscillator 2 and the second oscillator 3 are transmitted from the control PC 23 to the laser controller 14, and the laser controller 14 sets the parameters for the respective oscillators (step S75).

Subsequently, the workpiece setting stage 11 is operated to move the workpiece W such that the rectangular conductors 52 written in the first row of the pattern table faces the hybrid galvano scanner 10 (step S76). The steps up to here are preparation for the welding processing, and hereinafter, the welding processing on the workpiece W is started.

The processing unit 211 of the control PC 23 refers to the pattern table stored in the storage unit 202 (step S77) and determines whether the drawing pattern corresponding to the rectangular conductors 52 that are current welding targets is the pattern A or the pattern B (step S78). The processing unit 211 transmits the processing operation command including the information for identifying the determined processing pattern to the hybrid galvano scanner 10.

The hybrid galvano scanner 10 that receives the processing operation command selects the pattern A in a case of the pattern A, that is, in a case where the rectangular conductor 60 that is larger in height is not adjacent to a vicinity of the rectangular conductors 52 (step S79). In a case of the pattern B, that is, in a case where the rectangular conductor 60 that is larger in height is adjacent to the vicinity of the rectangular conductors 52, the hybrid galvano scanner 10 selects the pattern B (step S80).

Thereafter, the laser irradiation command is transmitted from the PLC 13 to the first oscillator 2 and the second oscillator 3. The first oscillator 2 and the second oscillator 3 receiving the laser irradiation command emit the first laser beam L1 and the second laser beam L2, respectively (step S81).

The laser irradiation in step S81 uses the welding method including three steps described in Embodiment 1. As described above, the laser irradiation time and the laser irradiation position may be controlled according to the arrangement status of the pair of the rectangular wires 52 that are welding targets. The hybrid galvano scanner 10 matches the irradiation position with the rectangular conductors 52 that are next welding targets (step S82).

After step S82, the processing unit 211 determines whether one-fourth of the processing on the workpiece W is completed (step S83). When one-fourth of the processing is not completed (NO in step S83), the processing returns to step S77 and continues.

When one-fourth of the processing on the workpiece W is completed (YES in step S83), the processing unit 211 determines whether the entire processing is completed (step S84). When the entire processing on the workpiece W is not completed (NO in step S84), the processing unit 211 instructs the workpiece setting stage 11 via the PLC 13 to rotate the workpiece W by one-fourth of a turn. The workpiece setting stage 11 receiving the instruction from the PLC 13 drives the rotation mechanism (θ-axis stage 11θ) to rotate the stage by one-fourth of a turn (step S85). Thereafter, the processing returns to step S77 and continues.

When the entire processing on the workpiece W is completed (YES in step S84), the laser processing apparatus ends the welding processing on the workpiece W.

As described above, in the laser processing apparatus according to the modification, in addition to the functions described in Embodiment 2, the image processing unit 9 analyzes the status in the vicinity of the rectangular conductors 52 that are welding targets. The control PC 23 generates the drawing pattern or the pattern table based on the analysis result.

According to the present modification, even when the workpiece W is changed, it is not necessary to input a drawing pattern and a pattern table corresponding to the workpiece W after change.

The arrangement of the rectangular conductors 52 and the rectangular conductors 60 is merely an example, and it goes without saying that other arrangements may be used. Even when the rectangular conductors 60 at any position are adjacent to the rectangular conductors 52 that are welding targets, the welding processing can be performed such that all the adjacent rectangular conductors 60 are not irradiated with the reflected light from the molten ball, by defining the irradiation-prohibited region shown in FIG. 41.

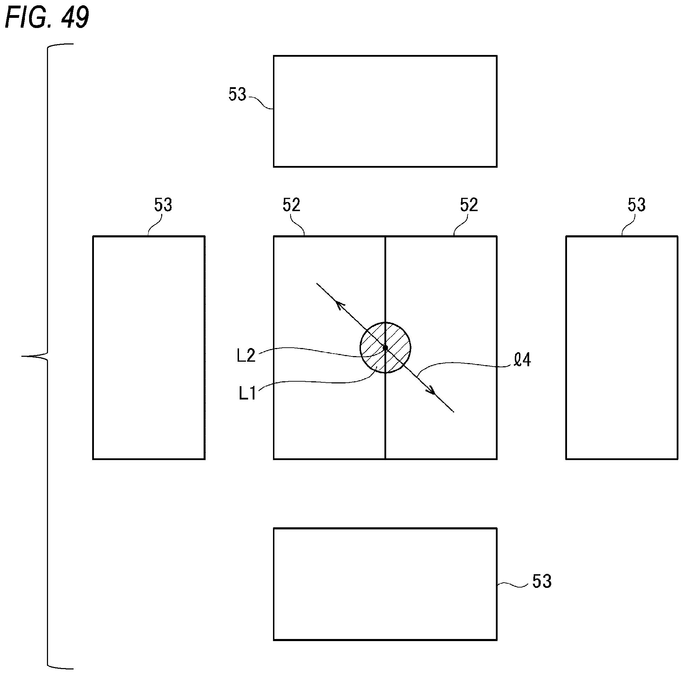

For example, as shown in FIG. 49, a case where four sides of the rectangular conductors 52 that are welding targets are surrounded by the rectangular conductors 60 that are larger in height may be considered. In this case, welding processing can be performed such that all of the four adjacent rectangular conductors 60 are not irradiated with the reflected light from the molten ball by performing reciprocating irradiation in an oblique direction as indicated by a trajectory l4 shown in the figure.

### <Other Modifications>

(1) In Embodiment 1 and Embodiment 2 described above, the laser processing apparatus may include a shielding gas nozzle for supplying a shielding gas to the workpiece W. Then, nitrogen which is a shielding gas is sprayed at a flow rate of 5 L/min to 100 L/min on the welding surface from the same time as or before the irradiation using the first laser beam L1 and the second laser beam L2 to an end of the irradiation or later. More preferably, the welding processing may be performed in a nitrogen atmosphere by spraying the nitrogen at a rate of 10 L/min to 40 L/min.

For example, nitrogen may be sprayed from the right and left sides of the workpiece W using two shielding gas nozzles. An inclination angle of each of the shielding gas nozzles with respect to the end surface of the workpiece W is 0° to 90°. In order not to interfere with the operation of the hybrid galvano scanner 10, the angle is more preferably about 30 degrees. A diameter (nozzle tip diameter) of a tip end opening of the shielding gas nozzle is preferably about 1 mm to 10 mm. Further, a working distance which is a distance from the tip end opening of the shielding gas nozzle to the workpiece W is preferably about 5 mm to 15 mm.

In this way, since the nitrogen is supplied to the workpiece W by the shielding gas nozzle, the laser processing apparatus 1 performs the welding processing on the workpiece W in a nitrogen atmosphere. Oxidation of the welding surface can be prevented by the shielding gas, and accordingly, a decrease in welding strength and generation of the porosity caused by the oxidation of the welding surface can be prevented. Further, by suitably selecting conditions such as a flow rate of the shielding gas, the nozzle tip diameter, and the working distance, a clean molten ball can be formed while preventing swing of the molten ball.

Further, instead of spraying the shielding gas, an air knife may be provided.
(2) In Embodiment 1 and Embodiment 2 described above, the trajectory of the laser irradiation in the first step is not limited to the linear reciprocating irradiation. In the first step and the second step, the end surface 52a of each of the rectangular conductors 52 may be subjected to circular turning irradiation or elliptical turning irradiation. The irradiation is preferably suitable for the size and shape of the end surface of the rectangular conductor 52. For example, when the elliptical turning irradiation is performed on the rectangular end surface 52a, it is preferable to perform the irradiation such that a longitudinal direction of the rectangle is a major axis of the ellipse. Accordingly, it is possible to effectively apply thermal energy to the end surface 52a to promote melting.
(3) In Embodiment 1 described above, a case where there is a gap in the x-axis direction and a positional displacement in the y-axis direction between the pair of rectangular wires 52, and the pair of rectangular wires 52 are rotated with respect to each other in the θ-direction has been described as an example. A scanning trajectory in the third step in a case of positional displacement other than the above will be described. (a) of FIG. 33 shows the scanning trajectory in the third step when there is a gap in the x-axis direction. (b) of FIG. 33 shows the scanning trajectory in the third step when there is a positional displacement in the y-axis direction.

In either case, the center point of the registered processing figure data 1100 (figure-eight shape) matches the A-B pin coordinates, and then the processing figure data 1100 is rotated and/or expanded/contracted to pass through the A pin coordinates and the B pin coordinates. Accordingly, the irradiation using a laser beam can be performed along scanning trajectories corresponding to various arrangement statuses of the A pin and the B pin.

(4) In Embodiment 1 described above, the laser scanning trajectory in the third step has the figure-eight shape, but this is merely an example, and is not limited to the figure-eight shape. It is sufficient for the third step that, in a state where the fusion zones of the A pin and the B pin formed in the first step and the second step are bonded to each other, at least the processing of stirring the fusion zones to make the fusion zones uniform by the scanning trajectory passing through a vicinity of a center of the bonded fusion zones can be implemented.

For example, the scanning trajectory in the third step may be linear reciprocating irradiation across the A pin and the B pin as shown in FIGS. 33C, 33D and 33E. In this case, the processing figure data indicating a straight line is registered in advance in the storage unit 202 of the control PC 12, and the control unit 201 corrects the registered processing figure data according to the arrangement status of each pair. Specifically, a center point of the straight line matches the A-B pin coordinates, and the straight line is rotated in the θ direction or expanded/contracted in the x-axis direction to match a start point and an end point of the straight line with the A pin coordinates and the B pin coordinates respectively. Accordingly, the linear reciprocating irradiation corresponding to the arrangement status of each pair can be implemented.

When there is a gap or a positional displacement between the pair of rectangular wires 52 in the x-axis direction, the y-axis direction, and the θ-rotation direction, it is assumed that an area of the fusion zone bonded by the irradiation in the first step and the second step reduces. Even in a case where the area of the fusion zone reduces as described above, escape of the laser beam from the gap is prevented by performing the irradiation using the laser beam along the scanning trajectory passing through a vicinity of the center of the fusion zone. Accordingly, the occurrence of carbonization and the insulation failure due to the irradiation of the coating portion at the lower part of the rectangular conductor with the laser beam can be prevented.

(5) As described in Embodiment 1, when a rapid temperature rise occurs on the workpiece W, the spatters may be generated. Therefore, instead of being irradiated with the first laser beam L1 and the second laser beam L2 simultaneously, the workpiece W is first irradiated with only the first laser beam L1 having a high absorptance, and is additionally irradiated with the second laser beam L2 after a predetermined time elapses. Accordingly, the rapid temperature rise of the workpiece W can be prevented, and the generation of spatters can be prevented. Further, since the workpiece W whose temperature is increased by the first laser beam L1 is high in absorptance of the wavelength of the second laser beam L2, energy of the second laser beam L2 can be efficiently absorbed by the workpiece W, leading to shortening in processing time. In this case, it is desirable to perform the irradiation using the second laser beam L2 with a delay of 1 msec or more after the irradiation using the first laser beam L1.
(6) In Embodiment 1 and Embodiment 2, the focused beam diameter d1 of the first laser beam L1 is not limited to 1050 µm. The focused beam diameter d1 can be selected such that an area (a focused beam area, or a spot area) of the irradiation region of the first laser beam L1 is 1% to 30% of a total area of the workpiece W.

Further, the focused beam diameter d2 of the second laser beam L2 is also not limited to 40 µm.The focused beam diameter d2 of the second laser beam L2 can be about 10 µm to 100 µm, and is preferably equal to or less than one-tenth of the focused beam diameter d1 of the first laser beam L1.

The focused beam diameter of each laser beam depends on a core diameter of a transmission fiber, a focal length of a collimating lens, and a focal length of the condensing lens, and can be calculated by the focused beam diameter = the core diameter of the transmission fiber × (the focal length of the condensing lens/the focal length of the collimating lens). Therefore, the focused beam diameter of each laser beam can be changed by adjusting the optical system.

(7) In Embodiment 1 and Embodiment 2 described above, the laser power is the same in the first step, the second step, and the third step, but this is merely an example. For example, in the processing in the third step, output power of the laser may be set to be lower than that in the processing in the first step and the second step. Since the third step is processing of uniformizing the metal that has already been melted, power equivalent to that of the first step and the second step is not required. Further, when energy is excessively applied to the workpiece W in the third step, there is a possibility that the laser beam escapes from the bonded part, so that the energy applied to the workpiece W may be limited by reducing the output power of the laser or by changing the focal point.
(8) In Embodiment 1 and Embodiment 2 described above, the scanning speed of the first laser beam L1 and the second laser beam L2 is described to be 500 mm/s, but the scanning speed of the first laser beam L1 and the second laser beam L2 is not limited thereto, and may be in a range of 100 mm/s to 1000 mm/s.
(9) The irradiation times of the first step, the second step, and the third step in Embodiment 1 and Embodiment 2 described above are merely examples, and it is needless to say that the irradiation times are not limited to those described above. The irradiation time in the first step may be a time until a part of the fusion zone formed on the end surface 52a enters the gap 53, the irradiation time in the second step may be a time until a part of the fusion zone formed on the end surface 52a enters the gap 53, and the irradiation time in the third step may be a time until two bonded fusion zones are made uniform to form one fusion zone. The irradiation time may be changed according to the size of the rectangular conductor that is a welding target, a width of the gap, or the like.
(10) In the embodiments described above, since the third step is processing of uniformizing the metal that has already been melted, power equivalent to that of the first step and the second step is not required. Further, when the energy is excessively applied to the workpiece W in the third step, there is a possibility that the laser beam escapes from the bonded fusion zone. Therefore, the laser processing apparatus 1 of Embodiment 1 may implement the processing in the third step by the following methods.

In a first method, focal positions of the first laser beam L1 and the second laser beam L2 are shifted above the fusion zone. Accordingly, the power density on the welding surface decreases with an increase (divergence) of the focused beam diameter, and a risk of the laser escape can be reduced.

In a second method, the output power of the first laser beam L1 and the second laser beam L2 is reduced as compared with that in the first step and the second step. Accordingly, the power density on the welding surface decreases, and the risk of laser escape can be reduced.

A third method is to increase the irradiation speeds of the first laser beam L1 and the second laser beam L2. By increasing the irradiation speed, an irradiation amount (heat input amount) per unit area and unit time of the laser beam passing through the welding surface can be reduced. Accordingly, the risk of laser escape can be reduced.

(11) In the embodiments described above, thresholds may be set for the gap amount and the displacement amount, and when there is a gap or a positional displacement equal to or larger than the corresponding threshold, the laser processing apparatus 1 may determine "an error (welding impossible)", interrupt the processing, and shift to the welding processing of the next pair of the rectangular wires 52. In this case, the thresholds serving as a reference of the "error" may be stored in advance in the storage unit 202 of the control PC 12. The controller 103 of the image processing unit 9 or the control unit 201 of the control PC 12 measures the gap amount and the displacement amount from the position information (coordinate values) of each rectangular wire 52. The control unit 201 may compare the measured gap amount and displacement amount with the thresholds stored in the storage unit 202.
(12) In the embodiments described above, it has been described that the first laser beam L1 is of multi-mode and the second laser beam L2 is of single-mode, but this is merely an example, and the beam mode of each laser beam is not limited.
(13) In the embodiments described above, the laser irradiation time for the higher rectangular wire 52 is longer than the laser irradiation time for the lower rectangular wire 52, and a difference in the laser irradiation time increases as the step amount Δz increases. As described above, the laser processing apparatus 1 varies an energy amount applied to each rectangular wire 52 by varying the laser irradiation time, but this embodiment is merely an example. In the laser processing apparatus according to the present invention, it is sufficient that at least the irradiation energy amount applied to the higher rectangular wire 52 is greater than the irradiation energy amount applied to the lower rectangular wire 52.

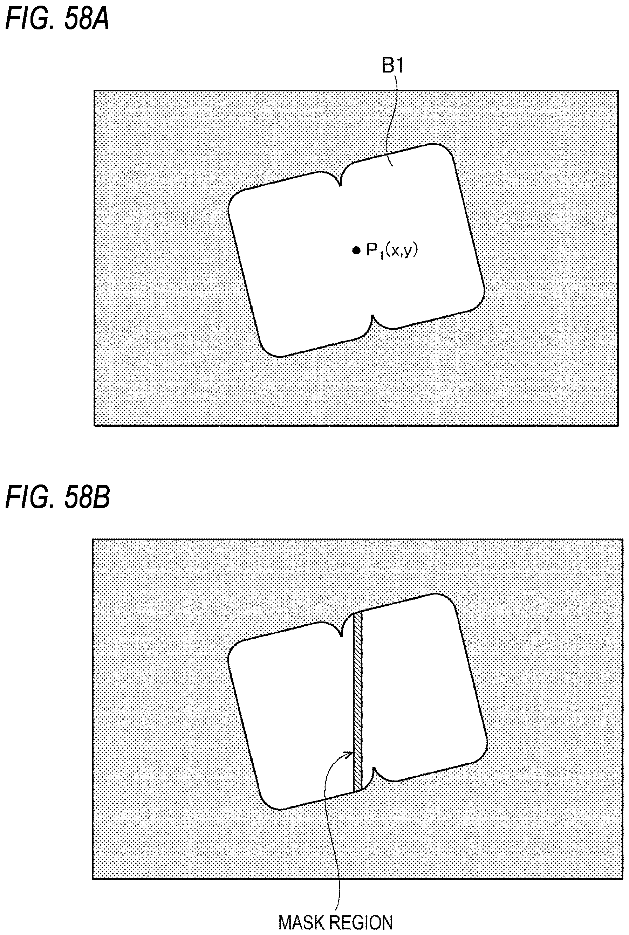

Further, in the field 1111 of the processing rate table 1100 shown in FIG. 29, 58 msec which is the laser irradiation time for the lower rectangular wire 52 corresponds to a "reference irradiation energy amount" according to the present invention, and 76 msec which is the laser irradiation time for the higher rectangular wire 52 corresponds to an energy amount obtained by "adding an additional irradiation energy amount corresponding to the step amount to a reference irradiation energy amount" according to the present invention.

(14) In the embodiments described above, the first laser beam L1 and the second laser beam L2 are focused on the workpiece W (welding surface), but in the present invention, both the first laser beam L1 and the second laser beam L2 may be focused at a position within a range of ±2 mm from the welding surface in a vertical direction.
(15) In the embodiments described above, the first laser beam L1 and the second laser beam L2 are circular beams, but the beam shapes of the first laser beam L1 and the second laser beam L2 are not limited thereto. For example, an elliptical beam or a rectangular beam may be used. In this case, it is preferable that a longitudinal direction of the rectangular welding surface is a major axis.
(16) In Embodiment 1 and Embodiment 2 described above, the stator coil is described as an example of the workpiece. However, it is needless to say that the welding method and the laser processing apparatus 1 described above are not limited to the case of being used for welding the stator coil.
(17) In Embodiment 1 and Embodiment 2 described above, the first laser beam L1 and the second laser beam L2 are matched in optical axis with each other and scanned by the hybrid galvano scanner 10. However, the present invention is not limited thereto, and the first laser beam L1 and the second laser beam L2 may not be matched in optical axis with each other, and can be scanned by separate laser scanning optical systems (galvano scanners). That is, the present invention also includes a configuration in which the laser processing apparatus includes two galvano scanners, one galvano scanner scans the first laser beam L1, and the other galvano scanner scans the second laser beam L2.
(18) In the laser processing apparatus 1 described above, regarding information such as the focused beam diameter and the output power of each of the first laser L1 and the second laser L2, and the irradiation trajectory, the irradiation time, the irradiation speed, and the number of times of irradiation in each of the first step, the second step, and the third step, appropriate values corresponding to the size of the workpiece W may be input in advance via the input unit 203 of the galvano PC (control PC 12). Further, when the size of the workpiece, the finished shape of the molten ball, and the like are input, the control unit 201 of the control PC 12 may be configured to determine the focused beam diameter, the output power, the irradiation trajectory, the irradiation time, the irradiation speed, the number of times of irradiation, and the like of the laser according to a predetermined algorithm.
(19) In Embodiment 2 described above, it is assumed that an operable range of the hybrid galvano scanner 10 is about one-fourth of the size of the workpiece W. Therefore, the laser processing apparatus performs welding processing on the entire workpiece W while rotating the workpiece W one-fourth of a turn every time by the workpiece setting stage 11. At this time, the position of the workpiece W is adjusted by the workpiece setting stage 11 such that the nozzle of the hybrid galvano scanner 10 faces substantially a center of a region obtained by dividing the workpiece W into four regions.

If the operable range of the hybrid galvano scanner 10 can cover the entire workpiece W, alignment may be performed such that the nozzle of the hybrid galvano scanner 10 faces the center of the workpiece W.

Further, in a case where a higher pin (rectangular conductor 60) interferes with a pin (rectangular conductor 52) that is a welding target, and the laser beam is not applied on the pin (rectangular conductor 52), the workpiece setting stage 11 may be operated to adjust the position such that the pin (rectangular conductor 52) that is a welding target is disposed substantially directly below the nozzle of the hybrid galvano scanner 10.

(20) In Embodiment 2 and the modification of Embodiment 2 described above, the laser processing apparatus is configured to hold or create a plurality of drawing patterns and select an appropriate drawing pattern according to the situation in the vicinity of the rectangular conductor 52. However, the information held or created by the laser processing apparatus according to Embodiment 2 and the modification thereof is not limited to the drawing pattern. In addition to the drawing pattern, the information may be a welding pattern in which laser irradiation conditions are combined. Then, an appropriate welding pattern may be selected according to the situation in the vicinity of the rectangular conductor 52.

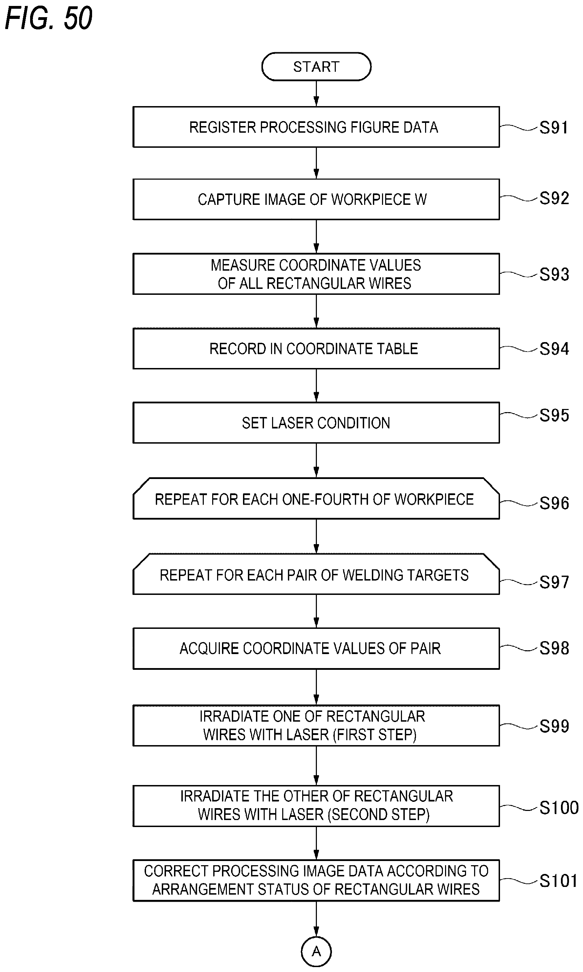

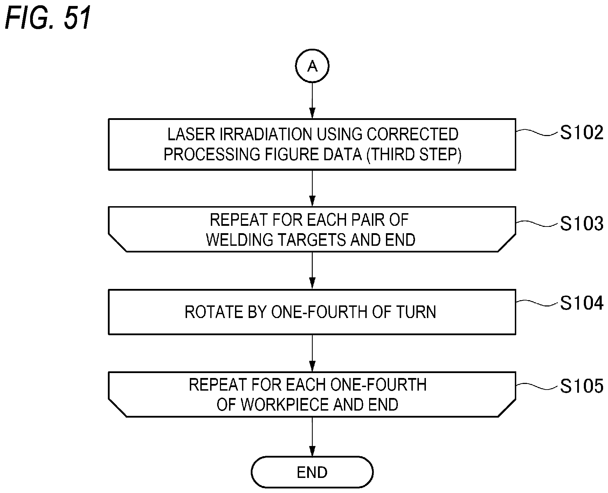

The laser irradiation conditions contained in the welding pattern include, for example, a focused beam diameter, output power, an irradiation time, an irradiation speed, and the number of times of irradiation of the laser.
(21) In Embodiment 2 described above, the laser processing apparatus generates the drawing pattern and the pattern table, but it is not essential to generate the drawing pattern. The laser processing apparatus may generate only the pattern table based on the analysis result from the image processing unit 9. The drawing pattern may be input by the user from the input unit 203 of the control PC 22.
(22) In Embodiment 2 and the modification thereof, it is needless to say that the conductive wire close to the rectangular conductor 52 is not essential to be a rectangular wire, and the conductive wire may have another shape. Further, it is not essential that the component close to the rectangular conductor 52 is a conductive wire, and may be another component. It is sufficient for the laser processing apparatus to at least select one drawing pattern from a plurality of drawing patterns according to the peripheral situation of the pair of rectangular conductors 52 that are welding targets and perform irradiation using the laser beam with the selected drawing pattern so as to perform welding processing.
(23) Here, as a modification, welding processing in a case where a positional displacement of xyθ occurs in the pair of rectangular wires 52 that are welding targets (a case where there is no step in the z-axis direction) will be described with reference to FIGS. 50 and 51.

First, the user operates the input unit 203 of the control PC 12 to input the processing figure data 1100, and the control PC 12 registers the processing figure data in the storage unit 202 (step S91). The processing figure data 1100 is used in the laser irradiation in the third step.

Subsequently, the workpiece W is set on the workpiece setting stage 11. The workpiece setting stage 11 on which the workpiece W is placed is moved to dispose the workpiece W immediately below the image processing unit 9. Then, the imaging device 101 of the image processing unit 9 captures an image of the workpiece W (step S92).

The controller 103 of the image processing unit 9 measures the coordinate values of all the rectangular wires 52 in the workpiece W by analyzing the image of the workpiece W captured in step S92 (step S93). Then, the controller 103 records the measured coordinate values in the coordinate table 113 (step S94).

Next, the control PC 12 sets laser parameters for the first oscillator 2 and the second oscillator 3 via the laser controller 14 (Step S95). The workpiece setting stage 11 moves the workpiece W to a position immediately below the hybrid galvano scanner 10.

In the present modification, it is assumed that an scanning movable range of the hybrid galvano scanner 10 is about one-fourth of the size of the workpiece W. Therefore, the laser processing apparatus 1 performs welding processing on the entire workpiece W while rotating the workpiece W one-fourth of a turn every time by the workpiece setting stage 11. Hereinafter, the laser processing apparatus 1 repeats the processing from step S96 to step S105 for every one-fourth of the workpiece W in the circumferential direction. Further, the laser processing apparatus 1 repeats the processing from step S97 to step S103 for each pair of the rectangular wires 52 that are welding targets.

The control unit 201 of the control PC 12 acquires the coordinate values (A pin coordinates and B pin coordinates) of the pair currently being processed from the coordinate table 113 stored in the storage unit 104 of the image processing unit 9 (step S98).

The laser processing apparatus 1 performs the processing in the first step to irradiate one (A) of the rectangular wires 52 with the first laser beam L1 and the second laser beam L2 (step S99). In the first step, specifically, a laser irradiation command is transmitted from the PLC 13 to the first oscillator 2 and the second oscillator 3 via the laser controller 14. The first oscillator 2 and the second oscillator 3 receiving the laser irradiation command emit the first laser beam L1 and the second laser beam L2, respectively. Before or after this, a control command is transmitted from the control unit 201 of the control PC 12 to the hybrid galvano scanner 10 based on the A pin coordinates acquired in step S98. The hybrid galvano scanner 10 controls a scanning position according to the control command.

A scanning trajectory of the hybrid galvano scanner 10 in the first step is linear reciprocating irradiation, and the linear reciprocating irradiation is performed on a predetermined position of the end surface 52a using the first laser beam L1 and the second laser beam L2. Preferably, the linear reciprocating irradiation may also be performed on a position of the end surface 52a close to the butting surface 52b (position close to the gap). In the first step, the laser irradiation is continued until the entire end surface 52a of the A pin is melted.

Next, the laser processing apparatus 1 performs the processing in the second step to irradiate the other (B) of the rectangular wires 52 with the first laser beam L1 and the second laser beam L2 (step S100). In the laser irradiation in the second step, the hybrid galvano scanner 10 controls the scanning position based on the B pin coordinates acquired in step S98, as in the first step. A scanning trajectory of the hybrid galvano scanner 10 in the second step is linear reciprocating irradiation, and the linear reciprocating irradiation is performed on a predetermined position of the end surface 52a using the first laser beam L1 and the second laser beam L2. As in the first step, in the second step, the linear reciprocating irradiation may also be performed on a position of the end surface 52a close to the butting surface 52b (position close to the gap). In the second step, the laser irradiation is continued until the entire end surface 52a of the B pin is melted.

The laser irradiation in the first step and the laser irradiation in the second step may be performed simultaneously.

When the fusion zone of the A pin and the fusion zone of the B pin are bonded, the control unit 201 of the control PC 12 corrects the processing figure data 1100 stored in the storage unit 202 according to an arrangement status of the A pin and the B pin (step S101). The control unit 201 transmits the corrected processing figure data to the hybrid galvano scanner 10. Then, the processing in the third step is performed to irradiate the first laser beam L1 and the second laser beam L2 across the A pin and the B pin using the corrected processing figure data (step S102). In the third step, heat is applied to the A pin and the B pin again to make the fusion zones uniform, and a laterally symmetrical clean molten ball is formed. The processing in the third step may be continued until the molten ball reaches a desired size.

The welding processing is performed on all the pairs of rectangular wires in one-fourth of the workpiece W currently being processed. At this time, the welding processing is performed while correcting the scanning trajectory in the third step according to the arrangement status of each pair. When the welding processing is completed for all the pairs of rectangular wires in one-fourth of the workpiece W, the control PC 12 instructs the workpiece setting stage 11 via the PLC 13 to rotate the workpiece W by one-fourth of a turn. The workpiece setting stage 11 receiving the instruction from the PLC 13 drives the rotation mechanism (θ-axis stage 11θ) to rotate the stage by one-fourth of a turn (step S104). Then, the processing returns to step S97 and continues.

When the processing is performed for one-fourth of the workpiece W every time and the welding processing of all the pairs of rectangular wires in the workpiece W is completed, the laser processing apparatus 1 ends the welding processing on the workpiece W.

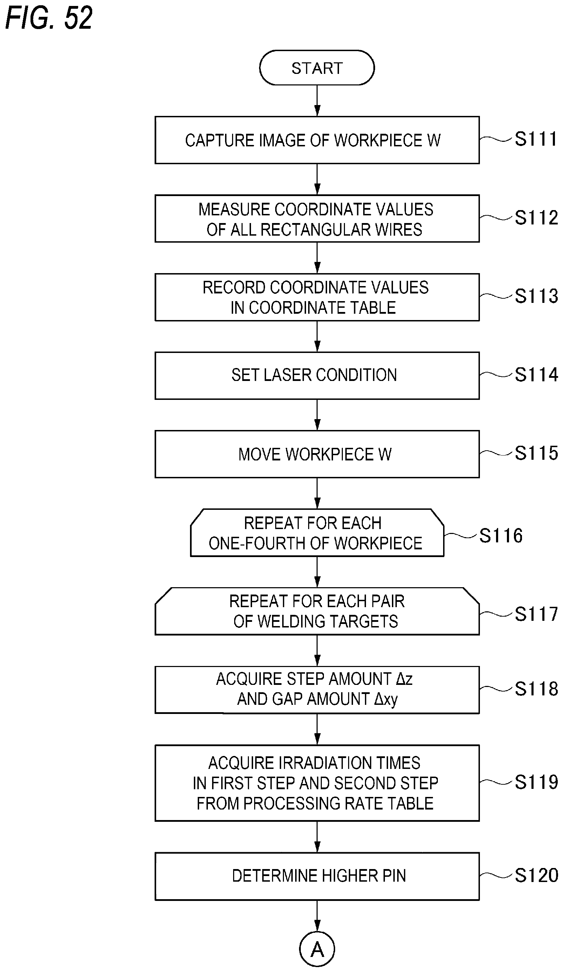

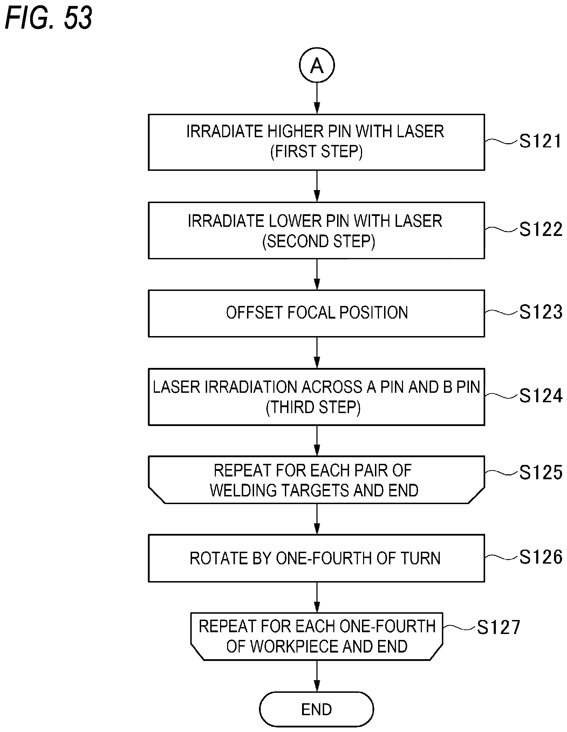

(24) Here, as a modification, a welding process in a case where a step in the z-axis direction is generated in the pair of rectangular wires 52 that are welding targets (in a case where there is no positional displacement in the xyθ direction) will be described with reference to FIGS. 52 and 53.

First, the operations are started in a state where the workpiece W is set on the workpiece setting stage 11. The workpiece setting stage 11 on which the workpiece W is placed is moved to dispose the workpiece W immediately below the image processing unit 9. Then, the imaging device 101 of the image processing unit 9 captures an image of the workpiece W (step S111).

The controller 103 of the image processing unit 9 measures the coordinate values of all the rectangular wires 52 in the workpiece W by analyzing the image of the workpiece W captured in step S111 (step S112). Then, the controller 103 records the measured coordinate values in the coordinate table 113 (step S113).

Next, the control PC 12 transmits the processing figure data to the hybrid galvano scanner 10 and sets laser parameters for the first oscillator 2 and the second oscillator 3 via the laser controller 14 (Step S114). The workpiece setting stage 11 moves the workpiece W to a position immediately below the hybrid galvano scanner 10 (step S115).

In the present modification, it is assumed that an scanning movable range of the hybrid galvano scanner 10 is about one-fourth of the size of the workpiece W. Therefore, the laser processing apparatus 1 performs welding processing on the entire workpiece W while rotating the workpiece W one-fourth of a turn every time by the workpiece setting stage 11. Hereinafter, the processing from step S116 to step S126 is repeated for every one-fourth of the workpiece W in the circumferential direction. Further, the laser processing apparatus 1 repeats the processing from step S117 to step S125 for each pair of the rectangular wires 52 that are welding targets.

The control unit 201 of the control PC 12 acquires, from the image processing unit 9, the step amount Δz and the gap amount Δxy of the pair currently being processed (step S118).

The control unit 201 refers to the processing rate table 110 stored in the storage unit 202 and acquires a laser irradiation time corresponding to the step amount Δz and the gap amount Δxy acquired in step S118. As described above, in the processing rate table 110, two numerical values are written in one field, and the control unit 101 acquires the two numerical values written in an upper row and a lower row. The numerical value written in the upper row is the irradiation time in the first step to be described later, and the numerical value written in the lower row is the irradiation time in the second step to be described later (step S119).

Subsequently, the control unit 201 of the control PC 12 determines which rectangular wire in the pair currently being processed is higher (step S120). The determination processing is performed by receiving information such as a number for identifying the higher rectangular wire from the controller 103 of the image processing unit 9, but may be performed by the control unit 201 reading the coordinate values from the coordinate table 113 stored in the image processing unit 9.

Next, the laser processing apparatus 1 performs processing in the first step to irradiate the higher pin with the first laser beam L1 and the second laser beam L2 (step S121). Specifically, the control unit 201 of the control PC 12 transmits the laser irradiation time acquired in step S119 to the laser controller 14 to set the laser irradiation time for the first oscillator 2 and the second oscillator 3. Further, a control command is transmitted from the control unit 201 to the hybrid galvano scanner 10, and a laser irradiation command is transmitted from the PLC 13 to the first oscillator 2 and the second oscillator 3 via the laser controller 14. The first oscillator 2 and the second oscillator 3 receiving the laser irradiation command emit the first laser beam L1 and the second laser beam L2, respectively.

The scanning trajectory of the hybrid galvano scanner 10 in the first step is linear reciprocating irradiation. When the irradiation using the laser beam is performed at the processing rate (irradiation time) acquired in step S119, the B pin is melted to slightly below a height of the A pin, and a molten ball 55b is formed. Here, the linear reciprocating irradiation using the first laser beam L1 and the second laser beam L2 is performed on a predetermined position of the end surface 52a, but preferably, the linear reciprocating irradiation may be performed on a position of the end surface 52a close to the butting surface 52b (position close to the gap).

Subsequently, the laser processing apparatus 1 performs processing in the second step to irradiate the lower A pin with the laser beam (step S122). In the second step, the welding surface of the A pin is irradiated with the first laser beam L1 and the second laser beam L2. The scanning trajectory of the hybrid galvano scanner 10 at this time is the linear reciprocating irradiation as in the first step. When the irradiation using the laser beam is performed at the processing rate (irradiation time) acquired in step S119, the entire end surface 52a of the A pin is melted, and a molten ball is formed on the A pin.

As in the first step, in the second step, the linear reciprocating irradiation may also be performed on a position of the end surface 52a close to the butting surface 52b (position close to the gap). In this way, by performing the irradiation using the laser beam on a position close to the inner side, the time until the fusion zones are bonded can be shortened.

Next, prior to the processing in the third step, focal positions of the first laser beam L1 and the second laser beam L2 are offset to a height of the B pin before melting (step S123). After the two molten balls are bonded, the laser processing apparatus 1 performs the processing in the third step (step S124). In the third step, the elliptical turning or figure-eight-shaped irradiation is performed across the A pin and the B pin. At this time, the hybrid galvano scanner 10 adjusts the position of the processing figure data using the A-B pin center coordinates.

In the third step, heat is applied to the B pin, that is irradiated with laser first, again to make the molten balls uniform, and a laterally symmetrical clean molten ball is formed. In the third step, circular turning irradiation may be performed according to the size and shape of the rectangular wire 52 instead of the elliptical turning irradiation.

In this way, by performing the processing in the third step after the two molten balls are bonded, escape of the laser beam from the gap and damage to the lower part of the rectangular wire are prevented.

When the welding processing is completed for all the pairs of rectangular wires in one-fourth of the workpiece W that is being processed currently, the control PC 12 instructs the workpiece setting stage 11 via the PLC 13 to rotate the workpiece W by one-fourth of a turn. The workpiece setting stage 11 receiving the instruction from the PLC 13 drives the rotation mechanism (θ-axis stage 11θ) to rotate the stage by one-fourth of a turn (step S126). Then, the processing returns to step S117 and continues.

When the processing is performed for one-fourth of the workpiece W every time and the welding processing of all the pairs of rectangular wires in the workpiece W is completed, the laser processing apparatus 1 ends the welding processing on the workpiece W.

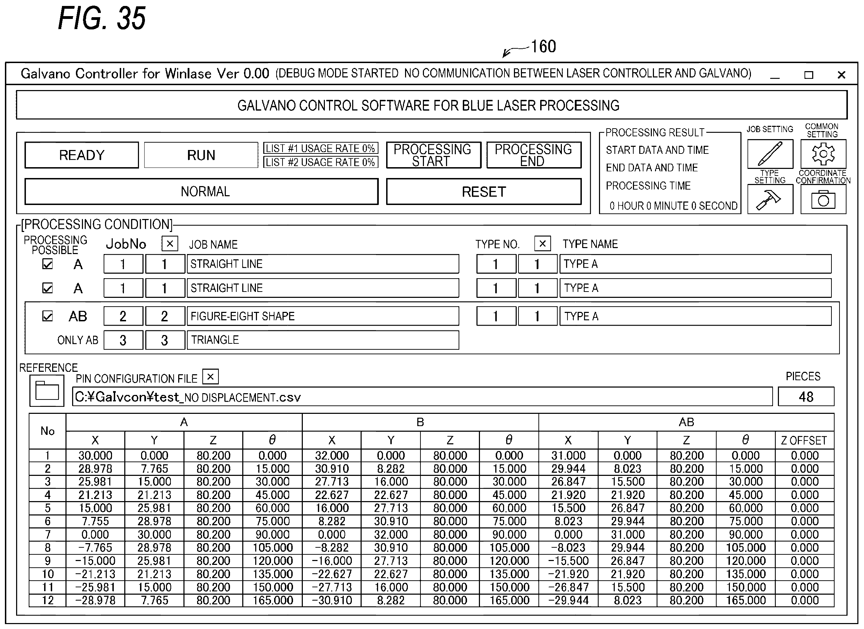

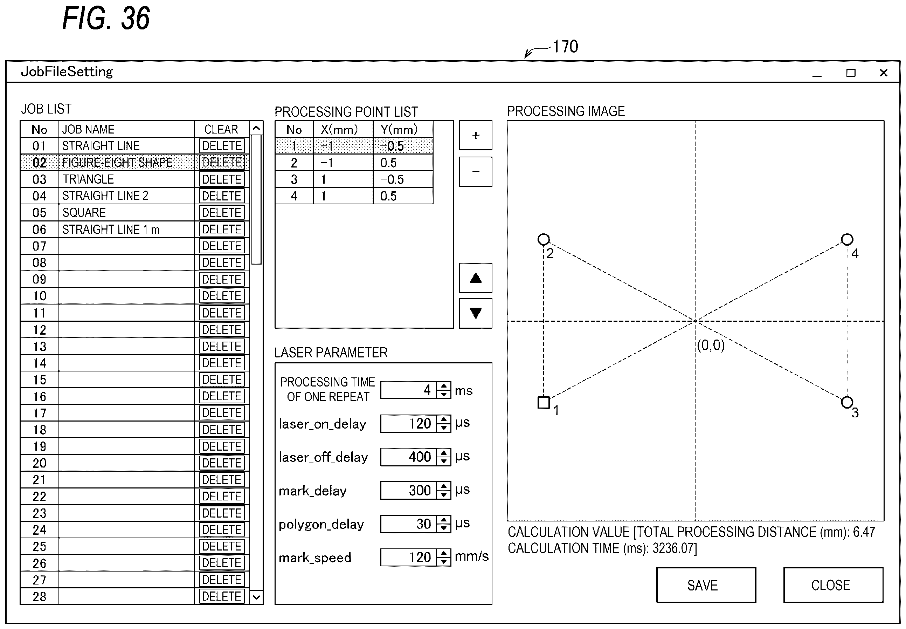

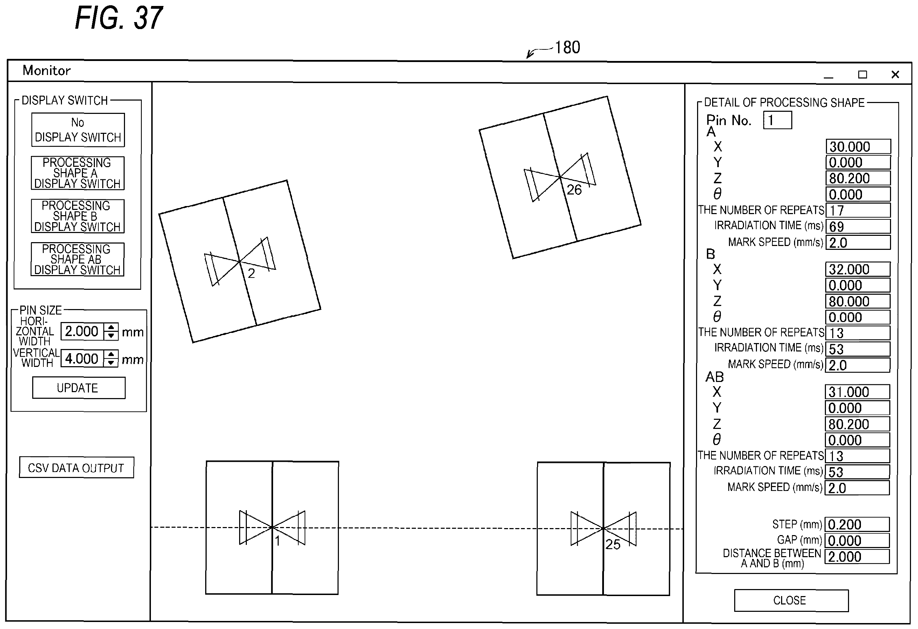

(25) FIGS. 35, 36, and 37 show specific examples of the UI screens displayed on the display unit 205 of the control PC 12 which is a galvano PC. FIG. 35 is a diagram showing an example of a main screen 160 displaying coordinate values of the pins and laser processing conditions. FIG. 36 is a diagram showing an example of a processing figure data registration screen 170. FIG. 37 is a diagram showing an example of a processing position confirmation screen 180 displayed when the registered processing figure data is corrected and arranged.
(26) Here, a system for measuring a plurality of measurement objects will be described with reference to the drawings. A type of the measurement object is not particularly limited, and any object can be used. Here, it is assumed that the measurement objects have the same shape. Further, the "measurement" refers to measuring the presence or absence of the object, the number of objects, an area of the object, a length or a perimeter of the object, a position of the object, a defect or a shape feature of the object, and the like. Here, a case of measuring the number of measurement objects will be described as an example.

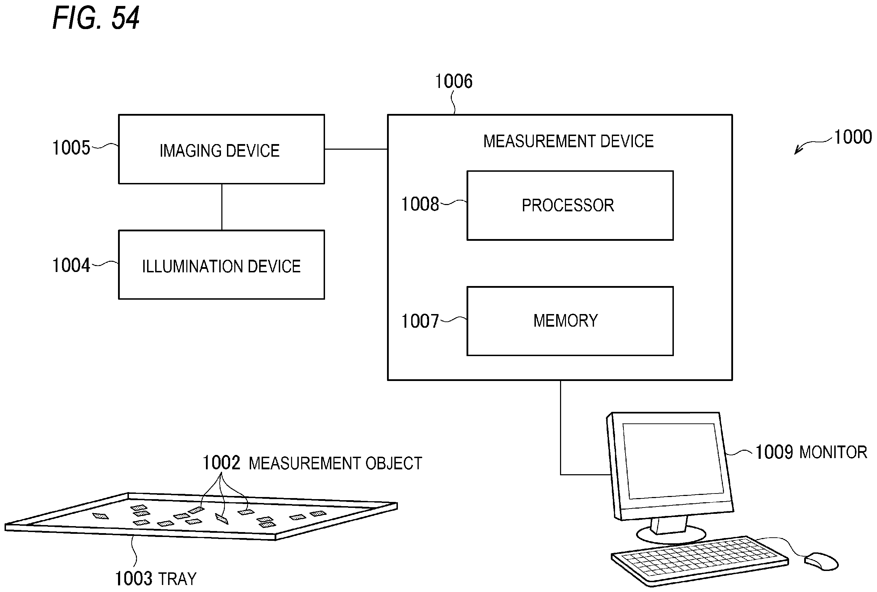

A measurement system 1000 of FIG. 54 includes a tray 1003 on which a plurality of measurement objects 1002 are placed, an illumination device 1004 that illuminates the plurality of measurement objects 1002 with illumination light, an imaging device 1005 that images the measurement objects in a state of being illuminated by the illumination device 1004, a measurement device 1006 that performs measurement on the measurement objects 1002 using the image data captured by the imaging device 1005, and a monitor 1009 that outputs a measurement result. An image processing device in which the imaging device 1005 and the measurement device 1006 are integrated, or the illumination device 1004, the imaging device 1005, and the measurement device 1006 are integrated may be used.

As shown in FIG. 54, the measurement device 1006 includes a memory 1007 and a processor 1008. A measurement program is stored in the memory 1007, and the processor 1008 executes the measurement program, thereby the measurement device 1006 performing the measurement processing of the measurement object.

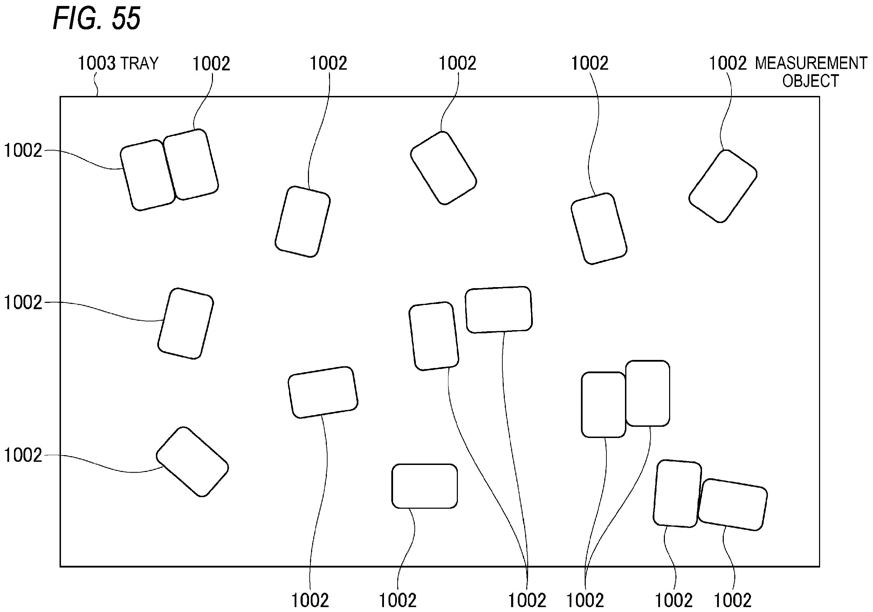

Here, as one specific example, a case of measuring a plurality of measurement objects 1002 placed on the tray 1003 as shown in FIG. 54 will be described. FIG. 55 is a diagram of the tray 1003 as viewed from above a paper surface (vertical direction).

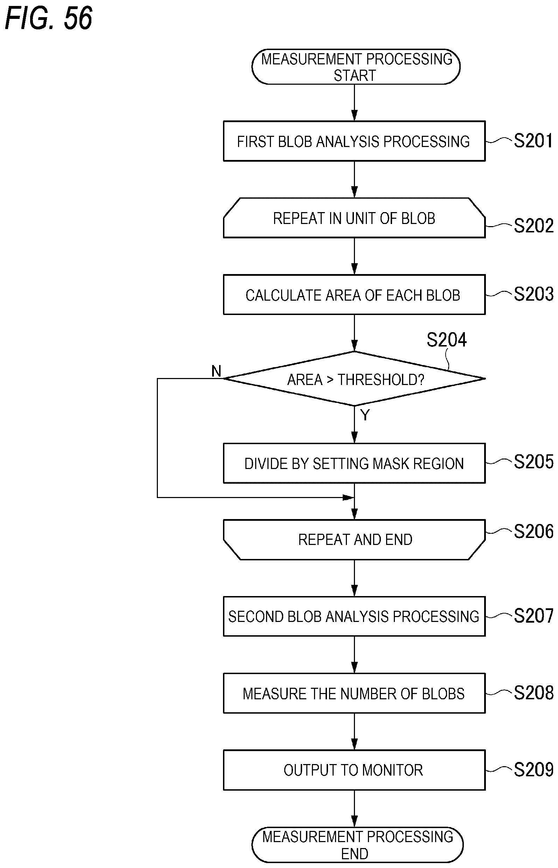

Prior to the measurement processing performed by the measurement device 1006, first, the imaging device 1005 images the measurement objects 1002 on the tray 1003 illuminated by the illumination device 1004. The measurement device 1006 acquires the captured image data, and performs the measurement processing shown in FIG. 56 based on the image data.

First, the measurement device 1006 performs first blob analysis processing on the image data (step S201). The blob analysis is a type of image analysis, in which binarization processing is performed for each of pixels in target image data, and various analyses and measurements are performed using the binarized image data.

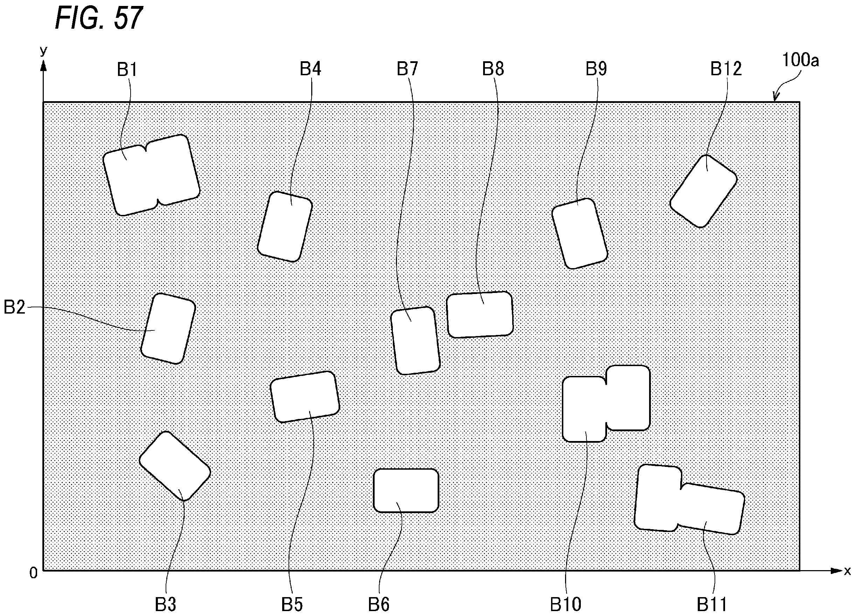

FIG. 57 is a diagram showing binarized image data 100a. The binarized image data is expressed in two gradations including black and white, but here, the black is depicted using a hatched pattern for convenience of description in FIG. 57 and the like. In FIG. 55, 16 measurement objects 1002 are expressed as 12 blobs from B1 to B12 in FIG. 57 as a result of the binarization processing. This is because the measurement objects 1002 in close contact are expressed as one blob due to the binarization processing. In this state, an accurate measurement result cannot be obtained even if various measurements on the number, an area, or the like are performed.

Therefore, the measurement device 1006 calculates a blob area for each of the blobs in the image data 100a (step S203), and compares the calculated area with a threshold set in advance (step S204). Accordingly, it is determined whether the measurement objects are bonded to each other. The threshold used for the comparison may be set according to the area of the measurement object 1002. When the area of the blob is equal to or less than the threshold (N in step S204), processing in step S205 is skipped and the processing proceeds to step S206. When the area of the blob is larger than the threshold (Y in step S204), the mask region is arranged in the target blob to divide the lob (step S205). For example, when the blob B1 (a center position is P1) shown in FIG. 58A is divided, a result is as shown in FIG. 58B. An elongated mask region including the center position P1 (x, y) and parallel to the y-axis is arranged on the image data. The mask region is a region which is not recognized in image processing, and it is sufficient that a line width is about 1 pixel to 2 pixels.

Since the measurement device 1006 is assumed to measure the number of measurement objects 1002, the mask region is set to be a region including the center position P1 and parallel to the y-axis as an example, but a method of setting the mask region is not limited thereto. The method can be appropriately changed according to what is to be measured.

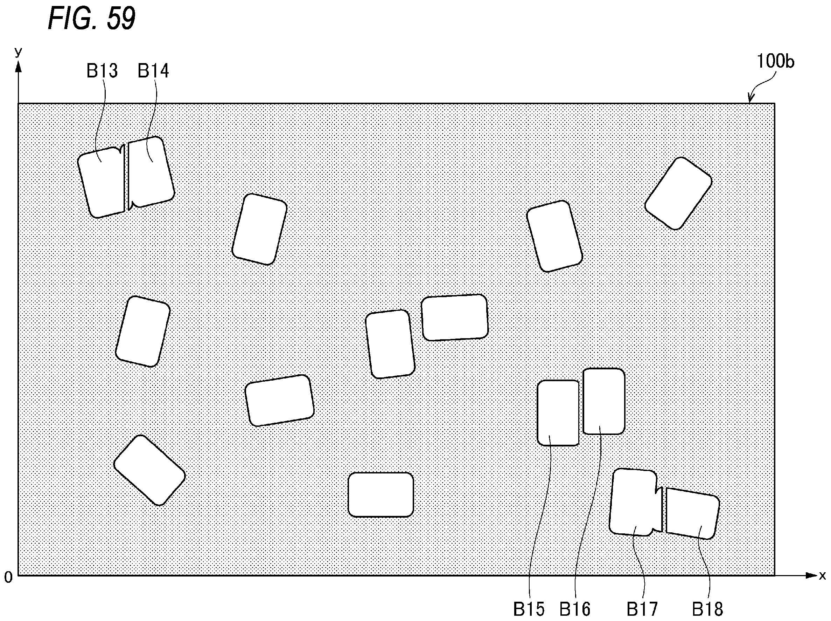

Next, the measurement device 1006 performs second blob analysis processing (step S207), and image data 100b shown in FIG. 59 is obtained. In the image data 100b, the blob B1 is divided into a blob B13 and a blob B14, the blob B10 is divided into a blob B15 and a blob B16, and the blob B11 is divided into a blob B17 and a blob B18. The measurement device 106 measures the number of blobs in the image data 100b (step S208). In the first blob analysis processing, the number of blobs is measured as 12, whereas in the second blob analysis processing, the number of blobs is measured as 16. The measurement device 1006 outputs the measured number of blobs to the monitor 1009 as the number of measurement objects 1002.

As described above, the measurement device 1006 of the measurement system 1000 can measure the measurement objects 1002 accurately by performing the blob analysis processing twice.
(27) Embodiment 1, Embodiment 2, and the modifications thereof may be combined as appropriate.
(28) Further, in the embodiments described above, each component may be implemented by executing a software program suitable for each component. Each of the components may be implemented by a program execution unit such as a CPU or a processor reading and executing a software program recorded in a recording medium such as a hard disk or a semiconductor memory.

Further, each component may be implemented by hardware. For example, each component may be a circuit (or an integrated circuit). These circuits may constitute one circuit as a whole or may be separate circuits. Further, each of these circuits may be a general-purpose circuit or a dedicated circuit.

Further, all or a specific one of aspects of the present invention may be implemented by a system, an apparatus, a method, an integrated circuit, a computer program, or a computer-readable recording medium such as a CD-ROM. Further, the present invention may be implemented by any combination of the system, the apparatus, the method, the integrated circuit, the computer program, and the recording medium. Further, the present invention may be implemented as a computer-readable non-transitory recording medium in which such a program is recorded.

Further, embodiments obtained by applying various modifications that can be conceived by those skilled in the art to the present embodiment or embodiments constructed by combining components in different embodiments may be included in the scope of one or more embodiments of the present disclosure without departing from the gist of the present disclosure.

### <Appendix>

A part or all of the above-described embodiments and modifications can be described as the following appendixes.

### (Appendix 1)

A welding method of welding an end surface, that is obtained by butting end portions of a first member and a second member, by a laser beam with the end surface being disposed to face a laser processing apparatus, the welding method including:
a first step of irradiating the first member with the laser beam to form a first fusion zone;
a second step of irradiating the second member with the laser beam to form a second fusion zone; and
a third step of, when the first fusion zone and the second fusion zone are bonded, irradiating the bonded first fusion zone and second fusion zone with the laser beam to form a single fusion zone, in which
the laser beam includes a first laser beam and a second laser beam having different wavelengths.

### (Appendix 2)

The welding method according to Appendix 1, in which
a focused beam diameter of the second laser beam is smaller than a focused beam diameter of the first laser beam,
in the first step, substantially linear reciprocating irradiation is performed on a predetermined position of the first member to form the first fusion zone,
in the second step, substantially linear reciprocating irradiation is performed on a predetermined position of the second member to form the second fusion zone, and
in the third step, irradiation using the laser beam is performed across the first member and the second member when the first fusion zone and the second fusion zone are bonded.

### (Appendix 3)

The welding method according to Appendix 2, in which
in the first step and the second step,
the predetermined position is a position close to a butting surface between the first member and the second member.

### (Appendix 4)

The welding method according to Appendix 1, in which
in the third step, the laser beam is scanned across the first member and the second member in any one of an elliptical shape, a circular shape, a polygonal shape, a straight line shape, and a figure-eight shape.

### (Appendix 5)

The welding method according to v 1, in which
in the third step, fixed-point irradiation using the laser beam is performed on a substantially center of the bonded first fusion zone and second fusion zone.

### (Appendix 6)

The welding method according to Appendix 1, in which
the wavelength of the first laser beam is 300 nm to 600 nm.

### (Appendix 7)

The welding method according to Appendix 6, in which
a focused beam area of the first laser beam is 1% to 30% of a total area of the end surface.

### (Appendix 8)

The welding method according to Appendix 6, in which
output power of each of the first laser beam and the second laser beam is 500 W to 3 kW.

### (Appendix 9)

The welding method according to Appendix 6, in which
an energy density of the laser used in the irradiation in the third step is lower than an energy density of the laser used in the irradiation in each of the first step and in the second step.

### (Appendix 10)

The welding method according to Appendix 1, in which
there is a gap between the first member and the second member,
an irradiation time in the first step is a time until a part of the first fusion zone enters the gap,
an irradiation time in the second step is a time until a part of the second fusion zone enters the gap, and
an irradiation time in the third step is a time until the bonded first fusion zone and second fusion zone are made uniform.

### (Appendix 11)

The welding method according to Appendix 1, in which
the wavelength of the second laser beam is 780 nm to 1100 nm.

### (Appendix 12)

The welding method according to Appendix 11, in which
a focused beam diameter of the second laser beam is equal to or less than one-tenth of a focused beam diameter of the first laser beam.

### (Appendix 13)

The welding method according to Appendix 11, in which
a focused beam diameter of the second laser beam is 10 µm to 100 µm.

### (Appendix 14)

The welding method according to Appendix 1, in which
the first member and the second member are rectangular conductors which constitute a coil for a stator and each of which has a rectangular cross section, and
a molten ball is formed on the end surface by butting the end portions of two of the rectangular conductors, which are disposed to face the laser processing apparatus, with each other and welding the end portions with the laser beam and the second laser beam.

### (Appendix 15)

The welding method according to Appendix 1, in which
nitrogen is sprayed to the end surface at a flow rate of 5 L/min to 100 L/min and an inclination angle of 0° to 90° with respect to the end surface from the same time as or before the irradiation using the first laser beam and the second laser beam to an end of the irradiation or later.

### (Appendix 16)

A laser processing apparatus for welding an end surface that is obtained by butting end portions of a first member and a second member, the laser processing apparatus including:
a first oscillator configured to oscillate a first laser beam;
a second oscillator configured to oscillate a second laser beam having a wavelength different from that of the first laser beam;
one or more galvano scanner units configured to perform irradiation using the first laser beam and the second laser beam while displacing the first laser beam and the second laser beam to any direction; and
a control unit configured to control the first oscillator, the second oscillator, and the one or more galvano scanner units, in which
the laser processing apparatus irradiates the first member with the first laser beam and the second laser beam to form a first fusion zone, irradiates the second member with the first laser beam and the second laser beam to form a second fusion zone, and irradiates, when the first fusion zone and the second fusion zone are bonded to each other, the bonded first fusion zone and second fusion zone with the first laser beam and the second laser beam to form a single fusion zone.

### (Appendix 17)

The laser processing apparatus according to Appendix 16, in which
the laser processing apparatus performs substantially linear reciprocating irradiation using the first laser beam and the second laser beam on a predetermined position of the first member to form the first fusion zone, performs substantially linear reciprocating irradiation using the first laser beam and the second laser beam on a predetermined position of the second member to form the second fusion zone, and performs irradiation using the first laser beam and the second laser beam across the first member and the second member when the first fusion zone and the second fusion zone are bonded.

### (Appendix 18)

The laser processing apparatus according to Appendix 17, further including:
a combiner unit configured to superimpose the first laser beam and the second laser beam on the same optical axis, in which
the one ore more galvano scanner units irradiate the first member and the second member with the first laser beam and the second laser beam whose optical axes are matched with each other.

### (Appendix 19)

The laser processing apparatus according to appendix 17, further including:
an input unit configured to receive an input from a user, in which
the input unit receives various parameters for controlling the first oscillator, the second oscillator, and the one or more galvano scanner units, and outputs the received parameters to the control unit, and
the control unit controls the first oscillator, the second oscillator, and the one or more galvano scanner units based on the parameters acquired via the input unit.

### (Appendix 20)

The welding method according to Appendix 1, in which
when there is a gap between the first member and the second member, in a state where the fusion zones formed by melting end surfaces of the first member and the second member by the laser beam enter the gap, and thus the two fusion zones are bonded, irradiation using the laser beam is performed along a predetermined scanning trajectory passing through a vicinity of a center of the bonded fusion zone.

### (Appendix 21)

The welding method according to Appendix 20, further including:
a step of acquiring position information of the first member and the second member using an image processing unit, in which
scanning of the laser beam is controlled based on the acquired position information.

### (Appendix 22)

The welding method according to Appendix 1, in which
there is a step between end surfaces of the first member and the second member due to a positional displacement in a height direction,
in the first step, the end surface of a higher one in the first member and the second member is irradiated with the laser beam and melted,
in the second step, the end surface of a lower one in the first member and the second member is irradiated with the laser beam and melted, and
a melting amount in the first step is larger than a melting amount in the second step.

### (Appendix 23)

The welding method according to Appendix 22, further including:
a step of detecting heights of the first member and the second member using an image processing unit.

### (Appendix 24)

The welding method according to Appendix 23, further including:
a step of acquiring a step amount between the first member and the second member using the image processing unit, in which
in the first step, the irradiation using the laser beam is performed by an amount obtained by adding an additional irradiation energy amount corresponding to the step amount to a reference irradiation energy amount, and
in the second step, the irradiation using the laser beam is performed by the reference irradiation energy amount.

### (Appendix 25)

A welding method of welding two rectangular wires by butting tip ends of the two rectangular wires and irradiating end surfaces of the two rectangular wires with a laser beam,
there being a step between the two end surfaces due to a positional displacement in a height direction between the two rectangular wires,
the welding method including:
   a first step of irradiating and melting the end surface of a higher one in the rectangular wires with the laser beam; and
   a second step of irradiating and melting the end surface of a lower one in the rectangular wires with the laser beam, in which
   a melting amount in the first step is larger than a melting amount in the second step.

### (Appendix 26)

The welding method according to Appendix 25, further including:
a step of detecting heights of the two rectangular wires using an image processing unit.

### (Appendix 27)

The welding method according to Appendix 26, further including:
a step of acquiring a step amount between the two rectangular wires using the image processing unit, in which
in the first step, the irradiation using the laser beam is performed by an amount obtained by adding an additional irradiation energy amount corresponding to the step amount to a reference irradiation energy amount, and
in the second step, the irradiation using the laser beam is performed by the reference irradiation energy amount.

### (Appendix 28)

The welding method according to Appendix 27, in which
the reference irradiation energy amount is determined based on at least one of power of a laser processing apparatus, a laser wavelength, a size of each of the rectangular wires, and a material of each of the rectangular wires.

### (Appendix 29)

The welding method according to Appendix 27, in which
the reference irradiation energy amount is an energy amount required for melting an entire of each of the end surfaces of the rectangular wires.

### (Appendix 30)

The welding method according to Appendix 27, in which
the additional irradiation energy amount increases as the step amount increases.

### (Appendix 31)

The welding method according to Appendix 27, in which
there is a gap between the two rectangular wires due to a positional displacement,
the welding method further includes:
   a step of acquiring, using the image processing unit, a gap amount indicating a size of the gap between the two rectangular wires,
   in the first step, the irradiation using the laser beam is performed by an amount obtained by adding an additional irradiation energy amount corresponding to the step amount and the gap amount to the reference irradiation energy amount, and
   in the second step, the irradiation using the laser beam is performed by an amount obtained by adding an additional irradiation energy amount corresponding to the gap amount to the reference irradiation energy amount.

### (Appendix 32)

The welding method according to Appendix 31, in which
the additional irradiation energy amount increases as the gap amount between the two rectangular wires increases.

### (Appendix 33)

The welding method according to Appendix 30 or 32, in which
a laser processing apparatus stores a table describing the additional energy amount corresponding to the step amount and the gap amount, and
in the welding method, the additional energy amount is determined with reference to the table.

### (Appendix 34)

The welding method according to Appendix 25, further including:
after the second step, a third step of performing irradiation using the laser beam across the two rectangular wires to stir fusion zones.

### (Appendix 35)

The welding method according to Appendix 34, in which
in the third step, an energy amount of the laser beam with which the fusion zones are irradiated is smaller than an energy amount of the laser beam used for the irradiation in each of the first step and the second step, to prevent the laser beam from escaping below the fusion zones.

### (Appendix 36)

The welding method according to Appendix 35, in which
in the third step, a focal position of the laser beam is displaced upward from the fusion zones.

### (Appendix 37)

The welding method according to Appendix 25, in which
in each of the first step and the second step, reciprocating irradiation using the laser beam is performed on a predetermined position of the end surface of the corresponding one of the rectangular wires which is close to a butting surface.

### (Appendix 38)

A laser processing apparatus for performing tip end butt welding by butting tip ends of two rectangular wires having different heights and irradiating end surfaces of the two rectangular wires with a laser beam, the laser processing apparatus including:
an image processing unit configured to detect the heights of the two rectangular wires;
a first oscillator configured to oscillate a first laser beam;
a second oscillator configured to oscillate a second laser beam having a wavelength different from that of the first laser beam;
one or more galvano scanner units configured to perform irradiation using the first laser beam and the second laser beam while displacing the first laser beam and the second laser beam to any direction; and
a control unit configured to control the first oscillator, the second oscillator, and the one or more galvano scanner units, in which
the end surface of a higher one in the rectangular wires is irradiated with the first laser beam and the second laser beam and melted, and then the end surface of a lower one in the rectangular wires is irradiated with the first laser beam and the second laser beam, and
a melting amount of the higher rectangular wire is larger than a melting amount of the lower rectangular wire.

### (Appendix 39)

A welding method of welding two rectangular wires by butting tip ends of the two rectangular wires, making end surfaces of the two rectangular wires face a laser processing apparatus, and irradiating the end surfaces with a laser beam, the welding method including:
when there is a gap between the two rectangular wires, in a state where fusion zones formed by melting the end surfaces of the two rectangular wires by the laser beam enter the gap, and thus the two fusion zones are bonded, performing irradiation using the laser beam along a predetermined scanning trajectory passing through a vicinity of a center of the bonded fusion zones.

### (Appendix 40)

The welding method according to Appendix 39, further including:
a step of acquiring position information of the two rectangular wires using an image processing unit, in which
scanning of the laser beam is controlled based on the acquired position information.

### (Appendix 41)

The welding method according to Appendix 40, in which
a midpoint between the two rectangular wires is measured using the acquired position information, and
irradiation using the laser beam is performed along the scanning trajectory across the two rectangular wires and passing through the midpoint.

### (Appendix 42)

The welding method according to Appendix 40, in which
center points of the end surfaces are measured respectively for the two rectangular wires using the acquired position information, and
irradiation using the laser beam is performed along the scanning trajectory across the two rectangular wires and passing through the center points of the end surfaces of the two rectangular wires.

### (Appendix 43)

The welding method according to Appendix 40, in which
irradiation using the laser beam is performed along the scanning trajectory across the two rectangular wires and having a figure-eight shape.

### (Appendix 44)

The welding method according to any one of Appendixes 41 to 43, in which
the laser processing apparatus holds processing figure data indicating the predetermined scanning trajectory, and
the welding method further includes:
   a step of correcting the processing figure data according to a state of the gap using the acquired position information.

### (Appendix 45)

The welding method according to Appendix 39, in which
in an xy orthogonal coordinate system in which any point on a stage on which the rectangular wires are placed is set as an origin,
the gap is generated when the two rectangular wires are relatively displaced in an x-axis direction, when the two rectangular wires are relatively displaced in a y-axis direction, when the two rectangular wires are displaced in both the x-axis direction and the y-axis direction, or when the two rectangular wires are relatively rotated in an xy plane.

### (Appendix 46)

The welding method according to Appendix 45, further including:
a step of detecting a relative displacement amount between the two rectangular wires based on the acquired position information;
a step of comparing the detected displacement amount with a threshold set in advance; and
a step of determining that the welding is impossible when the detected displacement amount exceeds the threshold.

### (Appendix 47)

The welding method according to Appendix 39, in which
a focal position of the laser beam is displaced upward from the fusion zones.

### (Appendix 48)

The welding method according to Appendix 39, in which
the bonded fusion zones are stirred by the laser beam to form a molten ball having a desired size or a desired shape.

### (Appendix 49)

A welding method of welding two rectangular wires by butting tip ends of the two rectangular wires, making end surfaces of the two rectangular wires face a laser processing apparatus, and irradiating the end surfaces with a laser beam, the welding method including:
when there is a positional displacement between the two rectangular wires, in a state where fusion zones formed by melting the end surfaces of the two rectangular wires by the laser beam are bonded, performing irradiation using the laser beam along a predetermined scanning trajectory passing through a vicinity of a center of the bonded fusion zones.

### (Appendix 50)

A laser processing apparatus for performing tip end butt welding by butting tip ends of two rectangular wires having different heights and irradiating end surfaces of the two rectangular wires with a laser beam, the laser processing apparatus including:
an image processing unit configured to detect position information of the two rectangular wires;
a first oscillator configured to oscillate a first laser beam;
a second oscillator configured to oscillate a second laser beam having a wavelength different from that of the first laser beam;
one or more galvano scanner units configured to perform irradiation using the first laser beam and the second laser beam while displacing the first laser beam and the second laser beam to any direction; and
a control unit configured to control the first oscillator, the second oscillator, and the one or more galvano scanner units, in which
when there is a gap between the two rectangular wires, in a state where fusion zones formed by melting the end surfaces of the two rectangular wires by the laser beam enter the gap, and thus the two fusion zones are bonded, irradiation using the laser beam is performed along a predetermined scanning trajectory passing through a vicinity of a center of the bonded fusion zones.

### (Appendix 51)

A method of manufacturing a stator used in a motor,
the stator including a tubular stator core having a plurality of slots arranged in a circumferential direction thereof, and a plurality of rectangular conductors respectively inserted into the slots with corresponding two of the rectangular conductors being bonded to each other to form a segment coil, the method including:
arranging end surfaces of the corresponding two rectangular conductors next with each other to face a laser processing apparatus, selecting one welding pattern from a plurality of welding patterns according to a peripheral situation of the corresponding two rectangular conductors, irradiating the end surfaces with a laser beam using the selected welding pattern to weld the end surfaces.

### (Appendix 52)

The method of manufacturing a stator according to Appendix 51, in which
the welding pattern is selected depending on whether another component exists in a vicinity of the two rectangular conductors that are welding targets.

### (Appendix 53)

The method of manufacturing a stator according to Appendix 52, in which
the welding pattern is a drawing pattern representing an irradiation trajectory of the laser beam on each of the end surfaces,
the irradiation using the laser beam is performed using a first drawing pattern when no other component exists in the vicinity of the two rectangular conductors that are welding targets, and
the irradiation using the laser beam is performed using a second drawing pattern different from the first drawing pattern when the other component exists in the vicinity of the two rectangular conductors that are welding targets.

### (Appendix 54)

The method of manufacturing a stator according to Appendix 53, in which
a processing time in a case of performing welding by irradiating the end surfaces with the laser beam using the first drawing pattern is shorter than a processing time in a case of performing welding by irradiating the end surfaces with the laser beam using the second drawing pattern.

### (Appendix 55)

The method of manufacturing a stator according to Appendix 54, in which
the other component has a larger amount of protrusion from an axial end surface of the stator core than each of the rectangular conductors,
the first drawing pattern is an irradiation trajectory that accelerates melting of the rectangular conductors, and
the second drawing pattern is an irradiation trajectory that prevents reflection of the laser beam by a molten ball generated on the end surfaces of the rectangular conductors and irradiation of the other component with the reflected light.

### (Appendix 56)

The method of manufacturing a stator according to Appendix 55, in which
a region on a welding surface where the other component is irradiated with the reflected light when the laser beam passes through the region is defined as an irradiation-prohibited region, and
the second drawing pattern is an irradiation trajectory passing through a region excluding the irradiation-prohibited region on the welding surface.

### (Appendix 57)

The method of manufacturing a stator according to Appendix 56, in which
the irradiation-prohibited region is determined using at least one of a distance between the two rectangular conductors that are welding targets and the other component located in the vicinity thereof, a size of the component, a size of the molten ball, a curved surface shape of the molten ball, and an area of the welding surface.

### (Appendix 58)

The method of manufacturing a stator according to Appendix 57, in which
the other component is a conductive wire used for energization with an outside.

### (Appendix 59)

The method of manufacturing a stator according to Appendix 52, in which
the laser beam is a hybrid laser beam formed by superimposing a first laser beam and a second laser beam having different wavelengths on the same optical axis.

### (Appendix 60)

The method of manufacturing a stator according to Appendix 59, in which
the wavelength of the first laser beam is 300 nm to 600 nm, and
the wavelength of the second laser beam is 780 nm to 1100 nm.

### (Appendix 61)

The method of manufacturing a stator according to Appendix 60, in which
in the second drawing pattern, the irradiation using the laser beam is performed along a figure-eight-shaped trajectory across the two rectangular conductors that are welding targets.

### (Appendix 62)

The method of manufacturing a stator according to Appendix 60, in which
in the second drawing pattern, the irradiation using the laser beam is performed along an inclined direction across the two rectangular conductors that are welding targets.

### (Appendix 63)

The method of manufacturing a stator according to Appendix 61 or 62, in which
in the first drawing pattern, turning irradiation using the laser beam is performed with a predetermined turning diameter across the two rectangular conductors that are welding targets.

### (Appendix 64)

The method of manufacturing a stator according to Appendix 63, in which
the first drawing pattern or the second drawing pattern is selected with reference to information indicating an arrangement state of the plurality of rectangular conductors that are welding targets and the other component.

### (Appendix 65)

The method of manufacturing a stator according to Appendix 64, in which
the stator is analyzed by image processing to generate the information indicating the arrangement state of the plurality of rectangular conductors that are welding targets and the other component.

### (Appendix 66)

A laser processing apparatus for manufacturing a stator used in a motor,
the stator including a tubular stator core having a plurality of slots arranged in a circumferential direction thereof, and a plurality of rectangular conductors respectively inserted into the slots with corresponding two of the rectangular conductors being bonded to each other to form a segment coil,
the laser processing apparatus including:
   a first oscillator configured to oscillate a first laser beam;
   a second oscillator configured to oscillate a second laser beam having a wavelength different from that of the first laser beam;
   a combiner unit configured to superimpose the first laser beam and the second laser beam on the same optical axis;
   a galvano scanner unit configured to perform irradiation using the first laser beam and the second laser beam, whose optical axes are matched, while displacing the first laser beam and the second laser beam to any direction;
   a stage configured to allow the stator to be placed thereon with end surfaces of the corresponding two rectangular conductors being butted with each other to face the galvano scanner unit; and
   a control unit configured to control the first oscillator, the second oscillator, and the galvano scanner unit such that one welding pattern is selected from a plurality of welding patterns according to a peripheral situation of the corresponding two rectangular conductors, and the end surfaces are irradiated with the laser beams using the selected welding pattern to weld the end surfaces.

### (Appendix 67)

The laser processing apparatus according to Appendix 66, further including:
an input unit configured to receive information indicating an arrangement state of the plurality of rectangular conductors and another component in the stator; and
a storage unit configured to store the received information, in which
the control unit selects the one welding pattern from the plurality of welding patterns with reference to the information stored in the storage unit.

### (Appendix 68)

The laser processing apparatus according to Appendix 66, further including:
an image processing unit configured to analyze an arrangement state of the plurality of rectangular conductors and another component in the stator; and
a storage unit configured to store an analysis result from the image processing unit, in which
the control unit selects the one welding pattern from the plurality of welding patterns with reference to the analysis result stored in the storage unit.

### (Appendix 69)

A laser processing device including:
a combiner unit configured to superimpose a plurality of laser beams having different wavelengths on the same optical axis;
a focus shifter unit configured to adjust a focal length of the laser beams superimposed by the combiner unit; and
a galvano scanner unit located downstream of the focus shifter unit and configured to change a direction of the optical axis of the laser beams traveling toward a processing object, in which
the adjustment in the focal length performed by the focus shifter unit is synchronized with the change in the direction of the optical axis performed by the galvano scanner unit.

### (Appendix 70)

The laser processing device according to Appendix 69, in which
a lens configured to allow the laser beams to pass therethrough does not exist between the galvano scanner unit and the processing object.

### (Appendix 71)

The laser processing apparatus according to Appendix 69 or 70, in which
the focus shifter unit includes a lens that moves forward and backward along the optical axis of the laser beams to adjust the focal length of the laser beams, and
the combiner unit is disposed downstream of the lens provided in the focus shifter unit.

### (Appendix 72)

The laser processing apparatus according to Appendix 69, 70 or 71, in which
the focus shifter unit includes a lens for expanding a diameter of the laser beams superimposed by the combiner unit and a lens for reducing a diameter of the laser beams passing through the lens, and a relative distance between the two lenses along the optical axis of the laser beams is expanded or reduced in synchronization with the change in the direction of the optical axis performed by the galvano scanner unit.

### (Appendix 73)

The laser processing apparatus according to Appendix 69, 70, 71 or 72, in which
the laser processing apparatus performs welding by emitting a laser beam to the processing object, and
a laser beam, that is obtained by superimposing a blue laser beam and an infrared laser beam, is emitted to the processing object through the combiner unit, the focus shifter unit, and the galvano scanner unit.

### REFERENCE SIGNS LIST

1: laser processing apparatus
2: first oscillator (blue semiconductor laser)
3: second oscillator (IR fiber laser)
9: image processing unit
10: hybrid galvano scanner
11: workpiece setting stage
12: control PC (galvano PC)
13: PLC
14: laser controller
50: stator
52: rectangular conductor, rectangular wire (first member, second member)
100: control panel
101: illumination device
102: imaging device
103: controller
201: control unit
202: storage unit
203: input unit
204: communication unit
205: display unit

## Claims

1. A welding method of welding, an end surface of end portions of a first member and a second member being arranged next to one another, by a laser beam with the end surface being disposed to face a laser processing apparatus, the welding method comprising:
a first step of irradiating the first member with the laser beam to form a first fusion zone;
a second step of irradiating the second member with the laser beam to form a second fusion zone; and
a third step of, when the first fusion zone and the second fusion zone are bonded, irradiating the bonded first fusion zone and second fusion zone with the laser beam to form a single fusion zone,
wherein the laser beam includes a first laser beam and a second laser beam having different wavelengths.

2. The welding method according to claim 1,
Wherein a focused beam diameter of the second laser beam is smaller than a focused beam diameter of the first laser beam,
wherein, in the first step, substantially linear reciprocating irradiation is performed on a predetermined position of the first member to form the first fusion zone,
wherein, in the second step, substantially linear reciprocating irradiation is performed on a predetermined position of the second member to form the second fusion zone, and
wherein, in the third step, irradiation using the laser beam is performed across the first member and the second member when the first fusion zone and the second fusion zone are bonded.

3. The welding method according to claim 2,
wherein, in the first step and the second step, the predetermined position is a position close to a butting surface between the first member and the second member.

4. The welding method according to claim 1,
Wherein, in the third step, the laser beam is scanned across the first member and the second member in any one of an elliptical shape, a circular shape, a polygonal shape, a straight line shape, and a figure-eight shape.

5. The welding method according to claim 1,
wherein, in the third step, fixed-point irradiation using the laser beam is performed on a substantially center of the bonded first fusion zone and second fusion zone.

6. The welding method according to claim 1,
wherein the wavelength of the first laser beam is 300 nm to 600 nm.

7. The welding method according to claim 6,
wherein a focused beam area of the first laser beam is 1% to 30% of a total area of the end surface.

8. The welding method according to claim 6,
wherein output power of each of the first laser beam and the second laser beam is 500 W to 3 kW.

9. The welding method according to claim 6,
wherein an energy density of the laser used in the irradiation in the third step is lower than an energy density of the laser used in the irradiation in each of the first step and in the second step.

10. The welding method according to claim 1,
wherein there is a gap between the first member and the second member,
wherein an irradiation time in the first step is a time until a part of the first fusion zone enters the gap,
wherein an irradiation time in the second step is a time until a part of the second fusion zone enters the gap, and
wherein an irradiation time in the third step is a time until the bonded first fusion zone and second fusion zone are made uniform.

11. The welding method according to claim 1,
wherein the wavelength of the second laser beam is 780 nm to 1100 nm.

12. The welding method according to claim 11,
wherein a focused beam diameter of the second laser beam is equal to or less than one-tenth of a focused beam diameter of the first laser beam.

13. The welding method according to claim 11,
wherein a focused beam diameter of the second laser beam is 10 µm to 100 µm.

14. The welding method according to claim 1,
wherein the first member and the second member are rectangular conductors which constitute a coil for a stator and each of which has a rectangular cross section, and
wherein a molten ball is formed on the end surface by butting the end portions of the two rectangular conductors, which are disposed to face the laser processing apparatus, with each other and welding the end portions with the first laser beam and the second laser beam.

15. The welding method according to claim 1,
wherein when there is a gap between the first member and the second member, in a state where the fusion zones formed by melting end surfaces of the first member and the second member by the laser beam enter the gap, and thus the two fusion zones are bonded, irradiation using the laser beam is performed along a predetermined scanning trajectory passing through a vicinity of a center of the bonded fusion zone.

16. The welding method according to claim 15, further comprising:
a step of acquiring position information of the first member and the second member using an image processing unit,
wherein scanning of the laser beam is controlled based on the acquired position information.

17. The welding method according to claim 1,
wherein there is a step between end surfaces of the first member and the second member due to a positional displacement in a height direction,
wherein, in the first step, the end surface of a higher one in the first member and the second member is irradiated with the laser beam and melted,
wherein, in the second step, the end surface of a lower one in the first member and the second member is irradiated with the laser beam and melted, and
wherein a melting amount in the first step is larger than a melting amount in the second step.

18. The welding method according to claim 17, further comprising:
a step of detecting heights of the first member and the second member using an image processing unit.

19. The welding method according to claim 18, further comprising:
a step of acquiring a step amount between the first member and the second member using the image processing unit,
wherein, in the first step, the irradiation using the laser beam is performed by an amount obtained by adding an additional irradiation energy amount corresponding to the step amount to a reference irradiation energy amount, and
wherein, in the second step, the irradiation using the laser beam is performed by the reference irradiation energy amount.

20. laser processing apparatus for welding an end surface of end portions of a first member and a second member being arranged next to one another, the laser processing apparatus comprising:
a first oscillator configured to oscillate a first laser beam;
a second oscillator configured to oscillate a second laser beam having a wavelength different from that of the first laser beam;
one or more galvano scanner units configured to perform irradiation using the first laser beam and the second laser beam while displacing the first laser beam and the second laser beam to any direction; and
a control unit configured to control the first oscillator, the second oscillator, and the one or more galvano scanner units,
wherein the laser processing apparatus irradiates the first member with the first laser beam and the second laser beam to form a first fusion zone, irradiates the second member with the first laser beam and the second laser beam to form a second fusion zone, and irradiates, when the first fusion zone and the second fusion zone are bonded to each other, the bonded first fusion zone and second fusion zone with the first laser beam and the second laser beam to form a single fusion zone.
